(19) Europäisches Patentamt
European Patent Office
Office européen des brevets

(11) **EP 4 761 351 A1**

(12) **EUROPEAN PATENT APPLICATION**
published in accordance with Art. 153(4) EPC

(43) Date of publication:
**17.06.2026 Bulletin 2026/25**

(51) International Patent Classification (IPC):
***H04W 36/00*** (2009.01)

(21) Application number: **23947968.6**

(52) Cooperative Patent Classification (CPC):
**H04W 36/00**

(22) Date of filing: **08.08.2023**

(86) International application number:
**PCT/CN2023/111826**

(87) International publication number:
**WO 2025/030389 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **YU, Xinlei
Dongguan, Guangdong 523860 (CN)**
• **FU, Zhe
Dongguan, Guangdong 523860 (CN)**

(74) Representative: **Taor, Simon Edward William et al
Venner Shipley LLP
TIDE Bankside
8 Emerson Street
London SE1 9DU (GB)**

(54) **CELL RESELECTION METHOD AND APPARATUS, CELL SELECTION METHOD AND APPARATUS, DEVICE, AND MEDIUM**

(57) The disclosure discloses a method for cell reselection, a method for cell selection, an apparatus, a device, and a medium, relating to the field of communications. The method includes the following. Cell reselection is performed among at least two cells. The at least two cells include a first-type cell, the first-type cell is configured to transmit a first common signal, and a transmission energy consumption of the first common signal is less than a transmission energy consumption of a second common signal transmitted by a second-type cell. When there are at least two cells including a first-type cell transmitting a first common signal, cell reselection is performed among the at least two cells. As such, cell reselection can be performed even when radio signal qualities of different cells are measured based on different common signals.

PERFORM CELL RESELECTION AMONG AT LEAST TWO CELLS  — 100

FIG. 2

**Description**

TECHNICAL FIELD

The disclosure relates to the field of communications, and in particular to a method for cell reselection, a method for cell selection, an apparatus, a device, and a medium.

BACKGROUND

In 5G new radio (NR) systems, in addition to a radio resource control (RRC) idle state (RRC_IDLE) and an RRC connected state (RRC_CONNECTED), an RRC inactive state (RRC_INACTIVE) is introduced for terminals. The air interface behavior of the terminal in the RRC inactive state is essentially the same as that in the RRC idle state. Therefore, the terminal in the RRC inactive state has the same energy-saving effect as in the RRC idle state, and consumes less power than in the RRC connected state.

In related technologies, the terminal in the RRC idle state or the RRC inactive state needs to detect the radio signal quality of a cell to determine whether cell reselection can be performed. How to perform cell reselection when radio signal qualities of different cells are measured based on different common signals is a problem to be solved.

SUMMARY

Embodiments of the disclosure provide a method for cell reselection, a method for cell selection, an apparatus, a device, and a storage medium. The technical solution is as follows.

According to an aspect of the disclosure, a method for cell reselection is provided. The method includes the following. Cell reselection is performed among at least two cells. The at least two cells include a first-type cell, the first-type cell is configured to transmit a first common signal, and a transmission energy consumption of the first common signal is less than a transmission energy consumption of a second common signal transmitted by a second-type cell.

According to an aspect of the disclosure, a method for cell selection is provided. The method includes the following. Cell selection is performed on a first cell based on a first radio signal quality of the first cell. The first cell is a cell among first-type cells, the first radio signal quality is determined based on a first common signal transmitted by the first-type cell, and a transmission energy consumption of the first common signal is less than a transmission energy consumption of a second common signal transmitted by a second-type cell.

According to an aspect of the disclosure, an apparatus for cell reselection is provided. The apparatus includes a cell reselection module configured to perform cell reselection among at least two cells. The at least two cells include a first-type cell, the first-type cell is configured to transmit a first common signal, and a transmission energy consumption of the first common signal is less than a transmission energy consumption of a second common signal transmitted by a second-type cell.

According to an aspect of the disclosure, an apparatus for cell selection is provided. The apparatus includes a cell selection module configured to perform cell selection on a first cell based on a first radio signal quality of the first cell. The first cell is a cell among first-type cells, the first radio signal quality is determined based on a first common signal transmitted by the first-type cell, and a transmission energy consumption of the first common signal is less than a transmission energy consumption of a second common signal transmitted by a second-type cell.

According to an aspect of the disclosure, a terminal is provided. The terminal includes a processor, a transceiver connected to the processor, and a memory configured to store executable instructions for the processor. The processor is configured to load and execute the executable instructions to perform the method for cell reselection or the method for cell selection as described above.

According to an aspect of the disclosure, a computer-readable storage medium storing executable instructions is provided. The executable instructions are configured to be loaded and executed by a processor to perform the method for cell reselection or the method for cell selection as described above.

According to an aspect of the disclosure, a computer program product is provided. The computer program product include computer instructions stored in a computer-readable storage medium. The computer instructions are configured to be read from the computer-readable storage medium and executed by a processor of a communication device to cause the communication device to perform the method for cell reselection or the method for cell selection as described above.

According to an aspect of the disclosure, a computer program is provided. The computer program, when running on a processor of a communication device, causes the communication device to perform the method for cell reselection or the method for cell selection as described above.

The technical solution provided in the disclosure has at least the following beneficial effects. When there are at least two cells including a first-type cell transmitting a first common signal, cell reselection is performed among the at least two cells. As such, cell reselection can be performed even when radio signal qualities of different cells are measured based on different common signals.

BRIEF DESCRIPTION OF THE DRAWINGS

To more clearly illustrate the technical solution in embodiments of the disclosure, the accompanying drawings used in the description of embodiments will be briefly introduced below. Obviously, the accompanying drawings described below are only some embodiments of the disclosure. For those skilled in the art, other drawings can be obtained based on these drawings without creative effort.

FIG. 1 illustrates a schematic diagram of a communication system provided in some illustrative embodiments of the disclosure.
FIG. 2 illustrates a schematic flowchart of a method for cell reselection provided in some illustrative embodiments of the disclosure.
FIG. 3 illustrates a schematic flowchart of a method for cell reselection provided in some illustrative embodiments of the disclosure.
FIG. 4 illustrates a schematic flowchart of a method for cell reselection provided in some illustrative embodiments of the disclosure.
FIG. 5 illustrates a schematic flowchart of a method for cell reselection provided in some illustrative embodiments of the disclosure.
FIG. 6 illustrates a schematic flowchart of a method for cell reselection provided in some illustrative embodiments of the disclosure.
FIG. 7 illustrates a schematic flowchart of a method for cell reselection provided in some illustrative embodiments of the disclosure.
FIG. 8 illustrates a schematic flowchart of a method for cell reselection provided in some illustrative embodiments of the disclosure.
FIG. 9 illustrates a schematic flowchart of a method for cell reselection provided in some illustrative embodiments of the disclosure.
FIG. 10 illustrates a schematic flowchart of a method for cell selection provided in some illustrative embodiments of the disclosure.
FIG. 11 illustrates a schematic flowchart of a method for cell selection provided in some illustrative embodiments of the disclosure.
FIG. 12 illustrates a schematic flowchart of a method for cell selection provided in some illustrative embodiments of the disclosure.
FIG. 13 illustrates a schematic flowchart of a method for cell selection provided in some illustrative embodiments of the disclosure.
FIG. 14 illustrates a schematic flowchart of a method for information indication provided in some illustrative embodiments of the disclosure.
FIG. 15 illustrates a structural block diagram of an apparatus for cell reselection provided in some illustrative embodiments of the disclosure.
FIG. 16 illustrates a structural block diagram of an apparatus for cell selection provided in some illustrative embodiments of the disclosure.
FIG. 17 illustrates a structural block diagram of an apparatus for information indication provided in some illustrative embodiments of the disclosure.
FIG. 18 illustrates a schematic structural diagram of a communication device provided in some illustrative embodiments of the disclosure.

DETAILED DESCRIPTION

For clearer descriptions of the objectives, technical solutions, and advantages of the disclosure, embodiments of the disclosure are further described in detail hereinafter with reference to the accompanying drawings. Exemplary embodiments of the disclosure are described in detail herein, with examples illustrated in the accompanying drawings. When the following description refers to the accompanying drawings, the same numbers in different accompanying drawings represent the same or similar elements unless otherwise indicated. The exemplary embodiments described hereinafter do not represent all embodiments of the disclosure. Rather, these exemplary embodiments are merely examples of apparatus and methods according to some aspects of the disclosure, as detailed in the appended claims.
The terms used in the disclosure are for the purpose of describing specific embodiments only and are not intended to be limit the disclosure. As used in the disclosure and the appended claims, the article "a", "an", and "the" are intended to include the plural forms as well, unless the context clearly indicates otherwise. It should also be understood that the phrase "and/or" as used herein refers to and encompasses any or all possible combinations of one or more associated listed items. The terminology used in this disclosure is for the purpose of describing particular embodiments only and is not intended to be limiting of the disclosure. The singular forms "a", "the", and "the" as used in this disclosure and the appended claims are also intended to include the plural forms unless the context clearly indicates otherwise. It should also be understood that the term "and/or" as used herein refers to and includes any and all possible combinations of one or more of the associated listed items.

It should be understood that although the terms "first", "second", "third", and the like may be used herein to describe various information, such information should not be limited to these terms. These terms are only used to distinguish the same type of information from one another. For example, first information may also be referred to as second information, and similarly, second information may also be referred to as first information, without departing from the scope of the disclosure. The word "in a case that" herein may be interpreted as "in the case that", "in the case of", "when", "upon", or "in response to determining", depending on the context.

First, related technologies involved in embodiments of the disclosure are introduced.

Synchronization Signal Block (SSB)

In related technologies, the SSB plays a fundamental role in initial access and is responsible for crucial functions, such as carrying cell identity documents (IDs), time-frequency synchronization, indicating symbol-level/slot-level/frame timing, and measuring cell/beam signal strength/signal quality. To support these functions, the SSB includes a primary synchronization signal (PSS), a secondary synchronization signal (SSS), a physical broadcast channel (PBCH), and a demodulation reference signal (DMRS). The PSS and the SSS are used to carry cell IDs (supporting up to 1008 cell IDs), achieve time-frequency synchronization, and acquire symbol-level timing. The SSS and the DMRS of the PBCH can be used to measure cell or beam signal strength/signal quality. The PBCH indicates information such as slot/frame timing. It should be noted that the term "SSB" was adopted in the early stages of standardization discussions. Since the SSB also includes the PBCH channel, its accurate name should be synchronization signal block/PBCH block (SS/PBCH block). In embodiment of the disclosure, the term "SSB" is used for simplicity, but it should be understood that "SSB" in embodiments of the disclosure is equivalent to "SS/PBCH block".

SSB-less Cell

In 5th generation (5G) mobile communication systems, terminal devices can adopt a dual connectivity (DC) architecture including two cell groups: a master cell group (MCG) and a secondary cell group (SCG). The MCG corresponds to a master node (MN) on the network side, and the SCG corresponds to a secondary node (SN) on the network side. Specifically, the MCG includes a primary cell (PCell) and a secondary cell (SCell), and the SCG includes a primary secondary cell (PSCell) and a SCell. The PCell and the PSCell can be collectively referred to as a special cell (SpCell).

In related technologies, a SCell can be a cell that does not transmit an SSB. Such cell and the SpCell or other SCells are cells with intra-band carrier aggregation. In Release 18 (R18), the network energy-saving project considers extending intra-band carrier aggregation to inter-band carrier aggregation scenarios, i.e., SSB-less SCells are cells with inter-band carrier aggregation.

In Release 19 (R19), an SSB-less cell can serve as a SCell or a standalone PCell. Then, the question is when the SSB-less cell operates as a standalone PSCell, how to operate independently in the cell. One possible solution is to transmit a discovery reference signal (DRS) instead of an SSB in the SSB-less cell. The terminal device establishes time synchronization with a next generation node B (gNB) via the DRS, thereby enabling the terminal device to transmit an uplink wake-up signal (UL-WUS) to activate the SSB-less cell. In an implementation, the DRS may include only a PSS.

Cell Selection

When a user equipment (UE) powers on or moves from a coverage hole to a coverage area, the UE searches for all permitted frequencies in a public land mobile network (PLMN) and selects a suitable cell to camp on. This process is referred to as "cell selection". The types of cell selection include initial cell selection and cell selection based on stored information. Regardless of the type, the cell to be selected needs to be measured for channel quality evaluation, so as to determine whether the cell meets the camping condition. The cell selection criterion in cellular networks is referred to as "S criterion". Camping is permitted when the S criterion is met.

Cell selection based on stored information: The UE has stored information about carrier frequencies, and may also include parameter information of some cells, for example, obtained from previously received measurement control information or from previously camped-on or detected cells. The UE will give a priority to selecting a cell for which related information is stored. Once a suitable cell appears, the UE will select that cell and camp on that cell. If none of the cells for which the UE has stored related information are suitable, the UE will initiate the initial cell selection.

S criterion:

$$Srxlev>0 \text{ AND } Squal>0;$$

$$Srxlev=Q_{rxlevmeas}-(Q_{rxlevmin}+Q_{rxlevminoffset})-P_{compensation}-Qoffset_{temp};$$

$$Squal=Q_{qualmeas}-(Q_{qualmin}+Q_{qualminoffset})-Qoffset_{temp}.$$

The meanings of parameters in the formula are illustrated in Table 1 below.

Table 1

| | |
|---|---|
| Srxlev | S value related to reference signal receiving power (RSRP) in cell selection (cell selection RX level value) in decibel (dB) |
| Squal | S value related to reference signal receiving quality (RSRQ) in cell selection (cell selection quality value) in dB |
| $Qoffset_{temp}$ | Temporary offset announced in system broadcast. |
| $Q_{rxlevmeas}$ | Measured RSRP value |
| $Q_{qualmeas}$ | Measured RSRQ value |
| $Q_{rxlevmin}$ | Minimum required RSRP in the cell, announced in system broadcast |
| $Q_{qualmin}$ | Minimum required RSRQ in the cell, announced in system broadcast |
| $Q_{rxlevminoffset}$ | Offset to $Q_{rxlevmin}$, used to prevent ping-pong effects between two PLMNs due to radio environment fluctuations, taken into account only as a result of a periodic search for a higher-priority PLMN while camped normally on a suitable cell of a visited PLMN (VPLMN), and announced in system broadcast |
| $Q_{qualminoffset}$ | Offset to $Q_{qualmin}$, used to prevent ping-pong effects between two PLMNs due to radio environment fluctuations, taken into account only as a result of a periodic search for a higher-priority PLMN while camped normally on a suitable cell of a VPLMN, and announced in system broadcast |
| $P_{compensation}$ | Power compensation due to low power of an electronic device, announced in system broadcast |

Cell Reselection

Cell reselection is a process in which a UE in the idle mode selects the best cell to provide a service signal by monitoring signal qualities of neighboring cells and a current serving cell. Cell reselection can be divided into intra-frequency cell reselection and inter-frequency cell reselection. Intra-frequency cell reselection can solve radio coverage problems. Inter-frequency cell reselection can not only solve radio coverage problems but also achieve load balancing by setting priorities of different frequencies.

During cell reselection, the UE in the idle mode or inactive mode selects a better cell by detecting signal qualities of neighboring cells and the current serving cell and considering a broadcast message and camps on the cell. After successfully camping on the current serving cell through cell selection, the UE will continuously perform cell measurement on the current serving cell and decide whether to initiate neighboring-cell measurement. During neighboring-cell measurement, if the signal quality and the level of a neighboring cell meet the S criterion and the reselection decision criterion (R criterion), the UE will abandon the current cell and camp on that neighboring cell.

The RRC layer of the UE calculates Srxlev/Squal (S criterion) based on RSRP/RSRQ measurement results and compares it with $S_{IntraSearchP}$/$S_{IntraSearchQ}$ (intra-frequency measurement initiation threshold) and $S_{nonIntraSearchP}$/$S_{nonIntraSearchQ}$ (inter-frequency or inter-system measurement initiation threshold).

If the neighboring-cell measurement is intra-frequency measurement, Srxlev is compared with $S_{IntraSearchP}$, and Squal is compared with $S_{IntraSearchQ}$, where $S_{IntraSearchP}$ and $S_{IntraSearchQ}$ are intra-frequency measurement initiation thresholds.

If the neighboring-cell measurement is inter-frequency or inter-system measurement, Srxlev is compared with $S_{nonIntraSearchP}$, and Squal is compared with $S_{nonIntraSearchQ}$, where $S_{nonIntraSearchP}$ and $S_{nonIntraSearchQ}$ are inter-frequency or inter-system measurement initiation thresholds.

Please refer to Table 2 below for details.

Table 2

| Measurement type | Measurement initiation condition |
|---|---|
| Intra-frequency | Srxlev > $S_{IntraSearchP}$ and Squal > $S_{IntraSearchQ}$ (not at cell edge)<br>If this condition is met, intra-frequency measurement may not be initiated, otherwise intra-frequency measurement should be initiated. |
| Inter-frequency or inter-system | For higher-priority frequencies, inter-frequency measurement or inter-system frequency measurement should be initiated. |
| | Less than or equal to the reselection priority of the current serving cell<br>If Srxlev > $S_{nonIntraSearchP}$ and Squal > $S_{nonIntraSearchQ}$ (not at cell edge), measurement may not be initiated, otherwise measurement should be initiated. |

After the UE meets the measurement condition, the UE performs intra-frequency or inter-frequency measurement on neighboring cells of the current serving cell, and obtains a set of candidate cells based on the measurement results. Then, the UE executes reselection conditions according to different reselection target frequencies, ranks the set of candidate cells, and selects a suitable cell to camp on based on the ranking. See Table 3 below for details.

Table 3

| Reselection target frequency | Reselection condition |
|---|---|
| Higher-priority frequency (NR or inter-system) | During a time interval Treselection$_{RAT}$, the following conditions are fulfilled:<br>Candidate cell's Squal > Thresh$_{X, HighQ}$ (Thresh$_{Serving, LowQ}$ is broadcast in a system message)<br>Candidate cell's Srxlev > Thresh$_{X, HighP}$ (Thresh$_{Serving, LowQ}$ is not broadcast)<br>More than 1 second has elapsed since the UE camped on the current serving cell |
| Intra-frequency or equal-priority frequency | According to the R criterion, the new cell has better signal quality than the current cell during a time interval Treselection$_{RAT}$, and more than 1 second has elapsed since the UE camped on the current serving cell |
| Lower-priority frequency (NR or inter-system) | During a time interval Treselection$_{RAT}$, the following conditions are fulfilled:<br>Current serving cell's Squal < Thresh$_{Serving, LowQ}$, and candidate cell's Squal > Thresh$_{X, LowQ}$ (Thresh$_{Serving, LowQ}$ is broadcast)<br>Current serving cell's Srxlev < Thresh$_{Serving, LowP}$, and candidate cell's Srxlev > Thresh$_{X, LowP}$ (Thresh$_{Serving, LowQ}$ is not broadcast)<br>More than 1 second has elapsed since the UE camped on the current serving cell |

During cell reselection, if multiple cells of different priorities all meet the cell reselection criterion, a higher-priority frequency takes precedence over a lower-priority frequency. For intra-frequencies or equal-priority frequencies, the current serving cell and neighboring cells are ranked according to the R criterion.

R criterion (criterion for cell reselection for intra-frequencies and equal-priority inter-frequencies):

Current serving cell: Rs=$Q_{meas}$,s+$Q_{hyst}$-Qoffset$_{temp}$;
Neighboring cell: Rn=$Q_{meas}$,n-Qoffset-Qoffsett$_{temp}$.

The meanings of parameters in the formula are illustrated in Table 4 below.

Table 4

| $Q_{meas}$ | RSRP measurement quantity used in cell reselections |
|---|---|

(continued)

| Qoffset | For intra-frequency: Equals to $Qoffset_{s,n}$, if $Qoffset_{s,n}$ is valid, otherwise this equals to zero.<br>For inter-frequency: Equals to $Qoffset_{s,n}$ plus $Qoffset_{frequency}$ if $Qoffset_{s,n}$ is valid, otherwise this equals to $Qoffset_{frequency}$. |
| --- | --- |
| $Qoffset_{temp}$ | Temporary offset, announced in system broadcast |
| $Q_{hyst}$ | Cell reselection hysteresis vaule, used to adjust the difficulty of reselection, reduce ping-pong effects, and announced in system broadcast |

After the UE obtains a set of candidate cells by ranking the current serving cell and neighboring cells according to the R criterion, the UE further selects a cell to camp on according to a parameter rangeToBestCell. That is, among all candidate cells whose R value is within rangeToBestCell of the R value of a cell with the best signal quality, a cell with the highest number of beams satisfying the threshold absThreshSS-BlocksConsolidation is selected as the target cell. The specific process is as follows.

If rangeToBestCell is configured, then the UE shall perform cell reselection to the cell with the highest number of beams above the threshold (i.e. absThreshSS-BlocksConsolidation) among the cells whose R value is within rangeToBestCell of the R value of the highest ranked cell. If there are multiple such cells, the UE shall perform cell reselection to the highest ranked cell among them. If this cell is found to be not-suitable, the UE shall behave according to clause 5.2.4.4.

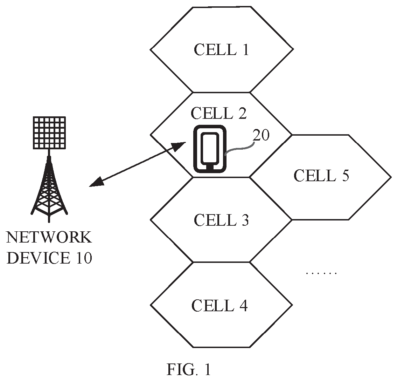

FIG. 1 illustrates a schematic diagram of a communication system provided in an exemplary embodiment of the disclosure. The communication system includes a network device 10 and a terminal device 20.

In some embodiments, the communication system is one of: a 4th generation (4G) mobile communication system, a 5th generation (5G) mobile communication system, a beyond fifth generation (B5G) mobile communication system, or a 6th generation (6G) mobile communication system. In some embodiments, the communication system is a communication system that supports IMS. In some embodiments, the communication system is a communication system that supports VoLTE technology.

The network device 10 in the disclosure provides a wireless communication function. The network device 10 includes but is not limited to: an evolved Node B (eNB), a radio network controller (RNC), a node B (NB), a base station controller (BSC), a base transceiver station (BTS), a home base station, such as a home evolved node B or a home node B (HNB), a baseband unit (BBU), an access point (AP), a wireless relay node, a wireless backhaul node, a transmission point (TP), or a transmission and reception point (TRP), etc., a next generation node B (gNB) or a transmission point (TRP or TP) in a 5G mobile communication system, one or one set of antenna panels including multiple antenna panels of a base station in a 5G system, a network node constituting a gNB or transmission point, such as a baseband unit (BBU) or distributed unit (DU), a base station in a B5G or 6G mobile communication system, a core network (CN), a fronthaul, a backhaul, a radio access network (RAN), a network slice, etc., or a serving cell, a PCell, a PSCell, a SpCell, a SCell, a neighboring cell, etc. of a terminal device. The network device 10 in the disclosure may also be a device providing a wireless communication function to a terminal in other communication systems that may emerge in the future. As communication technologies evolve, the term "network device" may change. For ease of description, in embodiments of the disclosure, an apparatus providing a wireless communication function to the terminal device is collectively referred to as a network device.

The terminal device 20 in the disclosure, also referred to as a UE, an access terminal, a user unit, a user station, a mobile station, a mobile terminal, a remote station, a remote terminal, a mobile device, a user terminal, a terminal, a wireless communication device, a user agent, or a user device, includes but is not limited to: a handheld device, a wearable device, a vehicular device, and an internet of things (IoT) device, such as a mobile phone, a tablet computer, an e-book reader, a laptop computer, a desktop computer, a television, a gaming console, a mobile internet device (MID), an augmented reality (AR) terminal, a virtual reality (VR) terminal, a mixed reality (MR) terminal, a wearable device, a joystick, an electronic tag, a controller, a wireless terminal in industrial control, a wireless terminal in self-driving, a wireless terminal in remote medical, a wireless terminal in smart grids, a wireless terminal in transportation safety, a wireless terminal in smart cities, a wireless terminal in smart homes, a wireless terminal in remote medical surgery, a cellular phone, a cordless phone, a session initiation protocol (SIP) phone, a wireless local loop (WLL) station, a personal digital assistant (PDA), a set top box (STB), and a customer premise equipment (CPE).

The network device 10 communicates with the terminal device 20 through a certain air interface technology. For example, there are two communication scenarios between the network device 10 and the terminal device 20: uplink (UL) communication and (DL) downlink communication. UL communication refers to the terminal device 20 transmitting a signal to the network device 10. DL communication refers to the network device 10 transmitting a signal to the terminal device 20.

In some embodiments, the terminal device 20 establishes a communication connection with the network device 10 in different cells. For example, the terminal device 20 establishes a communication connection with the network device 10 in cell 2, where cell 1, cell 3, cell 4, and cell 5 are neighboring cells of cell 2.

The technical solution provided in embodiments of the disclosure can be applied to various communication systems, such as the global system for mobile communications (GSM), code division multiple access (CDMA), wideband code division multiple access (WCDMA), general packet radio service (GPRS), long term evolution (LTE) system, LTE frequency division duplex (FDD) system, LTE time division duplex (TDD) system, advanced long term evolution (LTE-A) system, universal mobile telecommunications system (UMTS), worldwide interoperability for microwave access (WiMAX) communication system, 5G mobile communication system, new radio (NR) system, evolved NR system, LTE-based access to unlicensed spectrum (LTE-U) system, NR-based access to unlicensed spectrum (NR-U) system, terrestrial network (TN) system, non-terrestrial network (NTN) system, wireless local area networks (WLAN), wireless fidelity (Wi-Fi), cellular IoT systems, and cellular passive IoT systems. They can also be applied to subsequent evolution systems of 5G NR, as well as B5G, 6G, and subsequent evolution systems. In some embodiments of the disclosure, "NR" can also be referred to as the 5G NR system or 5G system. The 5G mobile communication system includes non-standalone (NSA) and/or standalone (SA) networking.

The technical solution provided in embodiments of the disclosure can also be applied to machine type communication (MTC), long term evolution-machine (LTE-M), device to device (D2D) networks, machine to machine (M2M) networks, internet of things (IoT) networks, or other networks. For example, the IoT network includes a vehicular network. Communication methods in a vehicular network are collectively referred to as vehicle to X (V2X) communication, where X can represent anything. For example, V2X can include vehicle to vehicle (V2V) communication, vehicle to infrastructure (V2I) communication, vehicle to pedestrian (V2P) communication, or vehicle to network (V2N) communication.

In related technologies, for RRC_IDLE state measurement, related protocols do not distinguish which reference signals the RSRP/RSRQ measurement results are based on. According to the related protocols, during cell selection or cell reselection, the RSRP/RSRQ measured by the UE is synchronization signal based reference signal receiving power/quality (SS-RSRP/RSRQ), i.e., the RSRP/RSRQ measured by the UE is measured based on SSBs.

As can be understood from the introduction above, an SSB-less cell may not transmit an SSB, but only transmit a new synchronization reference signal. For example, an SSB-less cell may not transmit an SSB, but only transmit a DRS. In this case, during cell reselection, RSRP/RSRQ measurements of different neighboring cells may be based on different synchronization reference signals (SSBs or DRSs). For intra-frequencies or equal-priority frequencies, it is unclear whether RSRP/RSRQ measurement results from different sources can be directly compared, and how to perform cell reselection based on RSRP/RSRQ measurement results from different sources.

Based on the above problems, the disclosure proposes a method for cell reselection to clarify the manner for cell reselection when there is an SSB-less cell.

First, relevant terms used in embodiments of the disclosure are explained.

First-type cell: a cell of the first type. For example, if the first type refers to not transmitting an SSB, the first-type cell is an SSB-less cell. For example, if the first type refers to only transmitting a DRS, the first-type cell is a DRS-only cell. For example, if the first type refers to transmitting a DRS and part of system message blocks (SIBs), the first-type cell is a DRS cell or an NES cell.

Second-type cell: a cell of the second type. For example, if the second type refers to only transmitting an SSB, the second-type cell is an SSB cell.

First radio signal quality: a radio signal quality of a first-type cell determined based on a first common signal transmitted by the first-type cell.

Second radio signal quality: a radio signal quality of a second-type cell determined based on a second common signal transmitted by the second-type cell.

The methods provided in embodiments of the disclosure will be described below according to the following outline.

1 Cell reselection

    1.1 Acquiring Cell Reselection Information
    1.2 Neighboring-cell measurement initiation evaluation
    1.3 Cell Reselection Evaluation

2 Cell Selection

    2.1 Parameter Acquisition
    2.2 Strongest Cell Measurement
    2.3 Cell Selection Evaluation

3 Information Indication

1. Cell Reselection

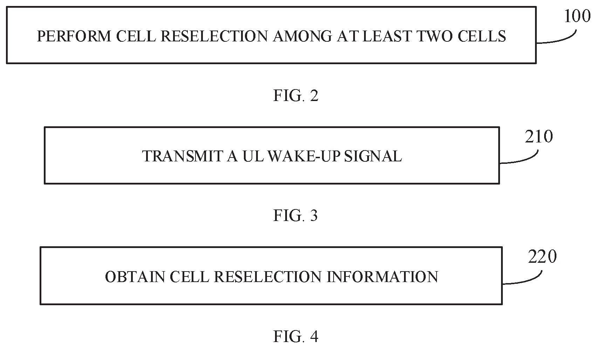

FIG. 2 illustrates a schematic flowchart of a method for cell reselection provided in some exemplary embodiments of the disclosure. For example, the method is performed by a terminal device. The method includes the following.

Step 100. Cell reselection is performed among at least two cells.

The at least two cells include a first-type cell. The first-type cell is configured to transmit a first common signal. The first common signal indicates a terminal device in the first-type cell to perform cell search and/or cell synchronization. For example, a terminal device in the first-type cell achieves time-frequency synchronization with the first-type cell by acquiring the first common signal.

A transmission energy consumption of the first common signal is less than a transmission energy consumption of a second common signal transmitted by a second-type cell. In some embodiments, a transmission period of the first common signal is longer than a transmission period of the second common signal transmitted by the second-type cell. Within a same duration, a transmission frequency of the first common signal is lower than a transmission frequency of the second common signal. Therefore, the energy consumption of transmitting the first common signal is less than the energy consumption of transmitting the second common signal. The second common signal indicates a terminal device in the second-type cell to perform cell search and/or cell synchronization.

For example, if the first common signal is a DRS, the first-type cell is a cell transmitting a DRS. If the second common signal is an SSB, the second-type cell is a cell transmitting an SSB.

In some embodiments, the first-type cell is an SSB-less cell, or equivalently referred to as a DRS cell, or equivalently referred to as a DRS-only cell. The second-type cell is an SSB cell, or equivalently referred to as a traditional cell, or equivalently referred to as a normal cell.

Optionally, the at least two cells include a cell transmitting a DRS.

Optionally, the at least two cells include an SSB-less cell.

In some embodiments, the at least two cells are all first-type cells.

In some embodiments, the at least two cells include at least one first-type cell. In some embodiments, the at least two cells include at least one first-type cell and at least one second-type cell.

Optionally, the at least two cells are all SSB-less cells.

Optionally, the at least two cells include at least one SSB-less cell. Optionally, the at least two cells include at least one SSB-less cell and at least one SSB cell.

In conclusion, according to the method provided in this embodiment, when there are at least two cells including a first-type cell transmitting a first common signal, cell reselection is performed among the at least two cells. As such, cell reselection can be performed even when radio signal qualities of different cells are measured based on different common signals.

1.1 Acquiring Cell Reselection Information

FIG. 3 illustrates a schematic flowchart of a method for cell reselection provided in some exemplary embodiments of the disclosure. For example, the method is performed by a terminal device. The method further includes the following.

Step 210. A UL wake-up signal is transmitted.

In some embodiments, the UL wake-up signal is used to request the first-type cell to transmit cell reselection information. In some embodiments, the UL wake-up signal is used to request the second-type cell to transmit cell reselection information. In some embodiments, the UL wake-up signal is used to request both the first-type cell and the second-type cell to transmit cell reselection information.

In some embodiments, the UL wake-up signal is used to request the SSB-less cell to transmit cell reselection information. In some embodiments, the UL wake-up signal is used to request the SSB cell to transmit cell reselection information. In some embodiments, the UL wake-up signal is used to request both the SSB-less cell and the SSB cell to transmit cell reselection information.

In some embodiments, the UL wake-up signal is transmitted by the terminal device to a network device.

In some embodiments, as illustrated in FIG. 4, the method further includes the following.

Step 220. Cell reselection information is obtained.

In some embodiments, the cell reselection information includes at least one of: a frequency of the first-type cell, a frequency of the second-type cell, a first frequency priority of the first-type cell, a second frequency priority of the second-type cell, a transmission manner of a common signal of the first-type cell, a transmission manner of a common signal of the second-type cell, an S criterion parameter and an R criterion parameter corresponding to the first-type cell, and an S criterion parameter and an R criterion parameter corresponding to the second-type cell.

In some embodiments, the transmission manner of the common signal of the first-type cell includes: only transmitting the first common signal, or transmitting the first common signal and part of system information.

Optionally, the transmission manner of the common signal of the first-type cell includes: only transmitting a DRS.

Optionally, the transmission manner of the common signal of the first-type cell includes: only transmitting a DRS and part of system information.

Optionally, the transmission manner of the common signal of the SSB-less cell includes: only transmitting a DRS.

Optionally, the transmission manner of the common signal of the SSB-less cell includes: only transmitting a DRS and part of system information.

In some embodiments, the transmission manner of the common signal is indicated at cell granularity or frequency granularity. For example, the transmission manner of the common signal is indicated per-cell or per-frequency.

Optionally, the transmission manner of the DRS is indicated at cell granularity or frequency granularity.

In some embodiments, the S criterion parameter corresponding to the first-type cell includes at least one of: Srxlev, Squal, $S_{IntraSearchP}$, $S_{IntraSearchQ}$, $Q_{rxlevmeas}$, offset, $Q_{rxlevmin}$, $Q_{rxlevminoffset}$, $P_{compensation}$, $Qoffset_{temp}$, $Q_{qualmeas}$, $Q_{qualmin}$, and $Q_{qualminoffset}$.

Srxlev represents an S value related to RSRP. $S_{IntraSearchP}$ represents an intra-frequency measurement initiation threshold related to RSRP. Squal represents an S value related to RSRQ. $S_{IntraSearchQ}$ represents an intra-frequency measurement initiation threshold related to RSRQ. $Q_{rxlevmeas}$ represents a measured RSRP value. Offset represents an offset. $Q_{rxlevmin}$ represents a minimum required RSRP in the cell, announced in system broadcast. $Q_{rxlevminoffset}$ represents an offset to $Q_{rxlevmin}$. $P_{compensation}$ represents power compensation due to low power of an electronic device, announced in system broadcast. $Qoffset_{temp}$ represents a temporary offset, announced in system broadcast. $Q_{qualmeas}$ represents a measured RSRQ value. $Q_{qualmin}$ represents a minimum required RSRQ in the cell, announced in system broadcast. $Q_{qualminoffset}$ represents an offset to $Q_{qualmin}$.

In some embodiments, the R criterion parameter corresponding to the first-type cell include at least one of: $Q_{meas}$, s, $Q_{hyst}$, $Qoffset_{temp}$, $Q_{meas}$, n, Qoffset, $Qoffset_{temp}$, and offset.

$Q_{meas}$, s represents a measured RSRP value of the first-type cell as the current serving cell. $Q_{hyst}$ represents a temporary offset, announced in system broadcast of the current serving cell. $Qoffset_{temp}$ represents a cell reselection hysteresis value, announced in system broadcast of the current serving cell. $Q_{meas}$, n represents a measured RSRP value of the first-type cell as a neighboring cell. Qoffset represents an offset. $Qoffset_{temp}$ represents a cell reselection hysteresis value, announced in system broadcast of the current serving cell. Offset represents an offset.

In some embodiments, the S criterion parameter corresponding to the second-type cell includes at least one of: Srxlev, Squal, $S_{IntraSearchP}$, $S_{IntraSearchQ}$, $Q_{rxlevmeas}$, $Q_{rxlevmin}$, $Q_{rxlevminoffset}$, $P_{compensation}$, $Qoffset_{temp}$, $Q_{qualmeas}$, $Q_{qualmin}$, and $Q_{qualminoffset}$.

In some embodiments, the R criterion parameter corresponding to the second-type cell includes at least one of: $Q_{meas}$, s, $Q_{hyst}$, $Qoffset_{temp}$, $Q_{meas}$, n, Qoffset, and $Qoffset_{temp}$.

In some embodiments, the cell reselection information is obtained from a current serving cell, or the cell reselection information is obtained from the first-type cell, or the cell reselection information is obtained from the second-type cell, or the cell reselection information is obtained from terminal-stored information.

Optionally, the cell reselection information is obtained from an SSB-less cell.

Optionally, the cell reselection information is obtained from an SSB cell.

In some embodiments, the cell reselection information includes a cell type. For example, the cell reselection information includes that cell 1 is a first-type cell and cell 2 is a second-type cell. For example, the cell reselection information includes that cell 1 is an SSB-less cell and cell 2 is an SSB cell.

In some embodiments, the cell reselection information is requested, via the UL wake-up signal transmitted by the terminal device, to be transmitted by the current serving cell and/or neighboring cell.

In conclusion, according to the method provided in this embodiment, the cell reselection information is obtained, such that the terminal device can determine whether there is a first-type cell during cell reselection according to the cell reselection information, and quickly determine cell situations corresponding to respective cells when there is a first-type cell, thereby ensuring that the terminal device can successfully perform cell reselection.


1.2 Neighboring-Cell Measurement Initiation Evaluation

In some embodiments, when a current serving cell is the first-type cell, neighboring-cell measurement initiation evaluation for the cell reselection is performed based on a first radio signal quality of the current serving cell.

The first radio signal quality is determined based on the first common signal. For example, if the first common signal is a DRS, the first-type cell is a cell transmitting a DRS, and the first radio signal quality is a radio signal quality based on the DRS. The radio signal quality based on the DRS includes RSRP and/or RSRQ.

In some embodiments, the first-type cell is an SSB-less cell, or equivalently referred to as a DRS cell, or equivalently referred to as a DRS-only cell. When the current serving cell is an SSB-less cell, the neighboring-cell measurement initiation evaluation for the cell reselection is performed based on a radio signal quality of the current serving cell obtained from DRS measurement. The radio signal quality obtained from DRS measurement includes DRS-RSRP and/or DRS-RSRQ. DRS-RSRP represents a reference signal receiving power obtained from DRS measurement. DRS-RSRQ represents a reference signal receiving quality obtained from DRS measurement.

Optionally, when the current serving cell is an SSB-less cell, the neighboring-cell measurement initiation evaluation for the cell reselection is performed based on the DRS-RSRP and/or DRS-RSRQ of the current serving cell.

Optionally, when the current serving cell is a cell transmitting a DRS, the neighboring-cell measurement initiation evaluation for the cell reselection is performed according to a DRS-based radio signal quality.

Optionally, when the current serving cell is a cell transmitting a DRS, the neighboring-cell measurement initiation evaluation for the cell reselection is performed according to the DRS-RSRP and/or DRS-RSRQ.

In some embodiments, the neighboring-cell measurement initiation evaluation for the cell reselection is performed based on a first calibrated radio signal quality of the current serving cell.

In some embodiments, the first calibrated radio signal quality is determined based on the first radio signal quality and a first offset. For example, the first calibrated radio signal quality = the first radio signal quality + the first offset.

For example, the first radio signal quality includes:

$$Srxlev = Q_{rxlevmea} - (Q_{rxlevmin} + Q_{rxlevminoffset}) - P_{compensation} - Qoffset_{temp};$$

$$Squal = Q_{qualmeas} - (Q_{qualmin} + Q_{qualminoffset}) - Qoffset_{temp}.$$

$Q_{rxlevmeas}$ represents a measured RSRP value. Offset represents a third offset. $Q_{rxlevmin}$ represents a minimum required RSRP in the cell, announced in system broadcast. $Q_{rxlevminoffset}$ represents an offset to $Q_{rxlevmin}$. $P_{compensation}$ represents power compensation due to low power of an electronic device, announced in system broadcast. $Qoffset_{temp}$ represents a temporary offset, announced in system broadcast. $Q_{qualmeas}$ represents a measured RSRQ value. $Q_{qualmin}$ represents a minimum required RSRQ in the cell, announced in system broadcast. $Q_{qualminoffset}$ represents an offset to $Q_{qualmin}$.

The first calibrated radio signal quality = the first radio signal quality + the first offset. Therefore, the first calibrated radio signal quality includes the following.

$$Srxlev1 = Q_{rxlevmeas} + offset - (Q_{rxlevmin} + Q_{rxlevminoffset}) - P_{compensation} - Qoffset_{temp};$$

$$Squal1 = Q_{qualmeas} + offset - (Q_{qualmin} + Q_{qualminoffset}) - Qoffset_{temp}.$$

Offset represents the first offset.

In some embodiments, when a current serving cell is the first-type cell, neighboring-cell measurement initiation evaluation for the cell reselection is performed based on a first neighboring-cell measurement initiation condition.

The first neighboring-cell measurement initiation condition is a neighboring-cell measurement initiation condition when the current serving cell is the first-type cell. For example, when the priority of the current serving cell is equal to the priority of the neighboring cell, i.e., when the neighboring-cell measurement is intra-frequency measurement, the first neighboring-cell measurement initiation condition is: $Srxlev1 > S_{IntraSearchP}1$ and $Squal1 > S_{IntraSearchQ}1$. When the first neighboring-cell measurement initiation condition is met, intra-frequency measurement may not be initiated. Otherwise, intra-frequency measurement should be initiated.

Srxlev1 represents an S value related to RSRP of the first-type cell. $S_{IntraSearchP}1$ represents an intra-frequency measurement initiation threshold related to RSRP of the first-type cell. Squal1 represents an S value related to RSRQ of the first-type cell. $S_{IntraSearchQ}1$ represents an intra-frequency measurement initiation threshold related to RSRQ of the first-type cell.

In some embodiments, when the current serving cell is the second-type cell, the neighboring-cell measurement initiation evaluation for the cell reselection is performed based on a second neighboring-cell measurement initiation condition.

The second neighboring-cell measurement initiation condition is a neighboring-cell measurement initiation condition when the current serving cell is the second-type cell. For example, when the priority of the current serving cell is equal to the priority of the neighboring cell, i.e., when the neighboring-cell measurement is intra-frequency measurement, the second neighboring-cell measurement initiation condition is: $Srxlev2 > S_{IntraSearchP}2$ and $Squal2 > S_{IntraSearchQ}2$. When the second neighboring-cell measurement initiation condition is met, intra-frequency measurement may not be initiated. Otherwise, intra-frequency measurement should be initiated.

Srxlev2 represents an S value related to RSRP of the second-type cell. $S_{IntraSearchP}2$ represents an intra-frequency measurement initiation threshold related to RSRP of the second-type cell. Squal2 represents an S value related to RSRQ of the second-type cell. $S_{IntraSearchQ}2$ represents an intra-frequency measurement initiation threshold related to RSRQ of the second-type cell.

In some embodiments, the first neighboring-cell measurement initiation condition is different from the second neighboring-cell measurement initiation condition.

In some embodiments, the first neighboring-cell measurement initiation condition is determined based on the second neighboring-cell measurement initiation condition and a third offset.

For example, the first neighboring-cell measurement initiation condition is: Srxlev2 + offset $>S_{IntraSearchP}1$ and Squal2 + offset $>S_{IntraSearchQ}1$.

Offset represents the third offset.

In some embodiments, a triggering difficulty of the first neighboring-cell measurement initiation condition is lower than a triggering difficulty of the second neighboring-cell measurement initiation condition.

Optionally, a first measurement initiation threshold corresponding to the first neighboring-cell measurement initiation condition is greater than a second measurement initiation threshold corresponding to the second neighboring-cell measurement initiation condition. For example, $S_{IntraSearchP1} > S_{IntraSearchP2}$. Optionally, $S_{IntraSearchP1} = S_{IntraSearchP2}$ + offset.

When the neighboring-cell measurement is intra-frequency measurement, the first neighboring-cell measurement initiation condition is: Srxlev1 $>S_{IntraSearchP}1$ and Squal1 $>S_{IntraSearchQ}1$. When the first neighboring-cell measurement initiation condition is met, intra-frequency measurement may not be initiated. Otherwise, intra-frequency measurement should be initiated. The second neighboring-cell measurement initiation condition is: Srxlev2 $>S_{IntraSearchP}2$ and Squal2 $>S_{IntraSearchQ}2$. When the second neighboring-cell measurement initiation condition is met, intra-frequency measurement may not be initiated. Otherwise, intra-frequency measurement should be initiated.

Assuming Srxlev1 = Srxlev2, Squal1 = Squal2, and $S_{IntraSearchQ}1 = S_{IntraSearchQ}2$, when $S_{IntraSearchP}1 > S_{IntraSearchP}2$, it is easier to satisfy Srxlev1 $\leq S_{IntraSearchP}1$. That is, when Srxlev1 $\leq S_{IntraSearchP}1$ is satisfied, it is not necessarily true that Srxlev2 $\leq S_{IntraSearchP}2$. Therefore, when the first measurement initiation threshold corresponding to the first neighboring-cell measurement initiation condition is greater than the second measurement initiation threshold corresponding to the second neighboring-cell measurement initiation condition, the first neighboring-cell measurement initiation is more likely to be triggered.

Optionally, $Q_{rxlevmin}1$ corresponding to the first neighboring-cell measurement initiation condition is less than $Q_{rxlevmin}2$ corresponding to the second neighboring-cell measurement initiation condition.

Optionally, $Q_{rxlevminoffset}1$ corresponding to the first neighboring-cell measurement initiation condition is less than $Q_{rxlevminoffset}2$ corresponding to the second neighboring-cell measurement initiation condition.

Optionally, $P_{compensation}1$ corresponding to the first neighboring-cell measurement initiation condition is less than the $P_{compensation}2$ corresponding to the second neighboring-cell measurement initiation condition.

Optionally, $Qoffset_{temp}1$ corresponding to the first neighboring-cell measurement initiation condition is less than $Qoffset_{temp}2$ corresponding to the second neighboring-cell measurement initiation condition.

Optionally, $Q_{qualmin}1$ corresponding to the first neighboring-cell measurement initiation condition is less than $Q_{qualmin}2$ corresponding to the second neighboring-cell measurement initiation condition.

Optionally, $Q_{qualminoffset}1$ corresponding to the first neighboring-cell measurement initiation condition is less than $Q_{qualminoffset}2$ corresponding to the second neighboring-cell measurement initiation condition.

In some embodiments, each cell corresponds to its own frequency, and frequencies corresponding to different cells may have the same or different priorities.

In some embodiments, when the first frequency priority of the first-type cell and the second frequency priority of the second-type cell are different, a neighboring-cell measurement initiation condition corresponding to the first frequency priority and a neighboring-cell measurement initiation condition corresponding to the second frequency priority are different. For example, the first frequency priority of the first-type cell corresponds to the first neighboring-cell measurement initiation condition, and the second frequency priority of the second-type cell corresponds to the second neighboring-cell measurement initiation condition, where the first neighboring-cell measurement initiation condition and the second neighboring-cell measurement initiation condition are different.

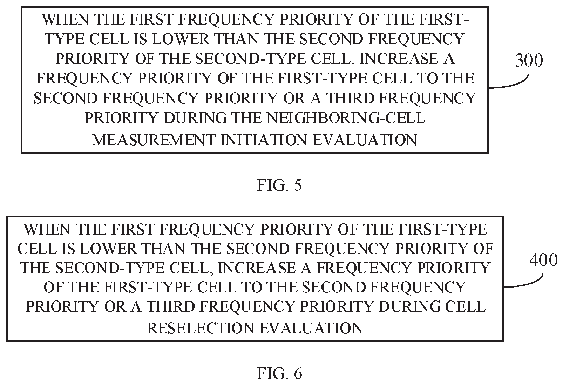

In some embodiments, as illustrated in FIG. 5, the method further includes the following.

Step 300. When the first frequency priority of the first-type cell is lower than the second frequency priority of the second-type cell, a frequency priority of the first-type cell is increased to the second frequency priority or a third frequency priority during the neighboring-cell measurement initiation evaluation.

In some embodiments, when the first frequency priority of the first-type cell is lower than the second frequency priority of the second-type cell, the frequency priority of the first-type cell is increased to the second frequency priority during the neighboring-cell measurement initiation evaluation. That is, the frequency priority of the first-type cell is adjusted to the same frequency priority as the second frequency priority of the second-type cell. Since the first frequency priority and the second frequency priority correspond to different neighboring-cell measurement initiation conditions, adjusting the first frequency priority to the second frequency priority allows the first-type cell and the second-type cell to use the same neighboring-cell measurement initiation condition.

In some embodiments, when the first frequency priority of the first-type cell is lower than the second frequency priority of the second-type cell, the frequency priority of the first-type cell is increased to the third frequency priority during the neighboring-cell measurement initiation evaluation. The third frequency priority is higher than the second frequency priority. That is, the frequency priority of the first-type cell is adjusted to a frequency priority higher than the second frequency priority of the second-type cell.

In some embodiments, the first frequency priority, the second frequency priority, and the third frequency priority correspond to different neighboring-cell measurement initiation conditions.

In some embodiments, when the first frequency priority of the SSB-less cell is lower than the second frequency priority of the SSB cell, the frequency priority of the SSB-less cell is increased to the second frequency priority or the third frequency priority during the neighboring-cell measurement initiation evaluation.

In some embodiments, when the first frequency priority of the first-type cell is higher or lower than the second frequency priority of the second-type cell, the first frequency priority of the first-type cell and the second frequency priority of the second-type cell are maintained.

In conclusion, according to the method provided in this embodiment, when the first frequency priority of the first-type cell is lower than the second frequency priority of the second-type cell, the frequency priority of the first-type cell is increased to the second frequency priority during the neighboring-cell measurement initiation evaluation. As such, when the first frequency priority of the first-type cell is lower than the second frequency priority of the second-type cell, the first frequency priority of the first-type cell can be adjusted to the same frequency priority as the second frequency priority of the second-type cell, thereby increasing the likelihood of the terminal device reselecting from the current serving cell to the first-type cell.

In addition, according to the method provided in this embodiment, when the first frequency priority of the first-type cell is lower than the second frequency priority of the second-type cell, the frequency priority of the first-type cell is increased to the third frequency priority during the neighboring-cell measurement initiation evaluation, where the third frequency priority is higher than the second frequency priority. As such, the frequency priority of the first-type cell is higher than the frequency priority of the second-type cell, thereby increasing the likelihood of the terminal device reselecting from the current serving cell to the first-type cell and ensuring energy saving.

## 1.3 Cell Reselection Evaluation

In some embodiments, when the first frequency priority of the first-type cell and the second frequency priority of the second-type cell are different, the first frequency priority and the second frequency priority correspond to different cell reselection conditions. For example, the first frequency priority of the first-type cell corresponds to a first cell reselection condition, and the second frequency priority of the second-type cell corresponds to a second cell reselection condition. The first cell reselection condition and the second cell reselection condition are different.

In some embodiments, as illustrated in FIG. 6, the method further includes the following.

Step 400. When the first frequency priority of the first-type cell is lower than the second frequency priority of the second-type cell, a frequency priority of the first-type cell is increased to the second frequency priority or a third frequency priority during cell reselection evaluation.

In some embodiments, when the first frequency priority of the first-type cell is lower than the second frequency priority of the second-type cell, the frequency priority of the first-type cell is increased to the second frequency priority during the cell reselection evaluation. That is, the frequency priority of the first-type cell is adjusted to the same as the frequency priority of the second-type cell. Since the first frequency priority and the second frequency priority correspond to different cell reselection conditions, adjusting the first frequency priority to the second frequency priority allows the first-type cell and the second-type cell to use the same cell reselection condition.

In some embodiments, when the first frequency priority of the first-type cell is lower than the second frequency priority of the second-type cell, the frequency priority of the first-type cell is increased to the third frequency priority during the cell reselection evaluation. The third frequency priority is higher than the second frequency priority. That is, the frequency priority of the first-type cell is adjusted to a frequency priority higher than the second frequency priority of the second-type cell.

In some embodiments, when the first frequency priority of the first-type cell is higher or lower than the second frequency priority of the second-type cell, the first frequency priority of the first-type cell and the second frequency priority of the second-type cell are maintained.

In conclusion, according to the method provided in this embodiment, when the first frequency priority of the first-type cell is lower than the second frequency priority of the second-type cell, the frequency priority of the first-type cell is increased to the second frequency priority during the cell reselection evaluation. As such, when the first frequency priority of the first-type cell is lower than the second frequency priority of the second-type cell, the first frequency priority of the first-type cell can be adjusted to the same frequency priority as the second frequency priority of the second-type cell, thereby increasing the likelihood of the terminal device reselecting from the current serving cell to the first-type cell.

In addition, according to the method provided in this embodiment, when the first frequency priority of the first-type cell is lower than the second frequency priority of the second-type cell, the frequency priority of the first-type cell is increased to the third frequency priority during the cell reselection evaluation, where the third frequency priority is higher than the second frequency priority. As such, the frequency priority of the first-type cell is higher than the frequency priority of the second-type cell, thereby increasing the likelihood of the terminal device reselecting from the current serving cell to the first-type cell and ensuring energy saving.

In some embodiments, the at least two cells further include the second-type cell. That is, the at least two cells include both the first-type cell and the second-type cell.

In some embodiments, the cell reselection is performed among the at least two cells by ranking the at least two cells.

In some embodiments, cell ranking in the cell reselection is performed based on a first radio signal quality of the first-type cell and a second radio signal quality of the second-type cell.

The first radio signal quality is determined based on the first common signal. For example, assuming the first common signal is a DRS, the first radio signal quality is a DRS-based radio signal quality. The DRS-based radio signal quality includes RSRP and/or RSRQ.

The second radio signal quality is determined based on the second common signal. For example, assuming the second common signal is an SSB, the second radio signal quality is an SSB-based radio signal quality. The SSB-based radio signal quality includes RSRP and/or RSRQ.

In some embodiments, the first-type cell is an SSB-less cell, or equivalently referred to as a DRS cell, or equivalently referred to as a DRS-only cell. The second-type cell is an SSB cell, or equivalently referred to as a traditional cell, or equivalently referred to as a normal cell.

Optionally, the cell ranking in the cell reselection is performed based on a radio signal quality of the SSB cell obtained from SSB measurement and a radio signal quality of the SSB-less cell obtained from DRS measurement. The radio signal quality obtained from SSB measurement includes SSB-RSRP and/or SSB-RSRQ. The radio signal quality obtained from DRS measurement includes DRS-RSRP and/or DRS-RSRQ.

Optionally, the cell ranking in the cell reselection is performed based on the DRS-RSRP of the SSB-less cell and the SSB-RSRP of the SSB cell.

Optionally, the cell ranking in the cell reselection is performed based on the DRS-RSRQ of the SSB-less cell and the SSB-RSRQ of the SSB cell.

In some embodiments, the cell ranking is performed on the at least two cells based on the first radio signal quality of the first-type cell and the second radio signal quality of the second-type cell.

Optionally, the cell ranking is performed on the at least two cells based on the radio signal quality of the SSB cell obtained from SSB measurement and the radio signal quality of the SSB-less cell obtained from DRS measurement.

Optionally, the cell ranking is performed on the at least two cells based on the DRS-RSRP of the SSB-less cell and the SSB-RSRP of the SSB cell.

Optionally, the cell ranking is performed on the at least two cells based on the DRS-RSRQ of the SSB-less cell and the SSB-RSRQ of the SSB cell.

In some embodiments, the manner of the cell ranking includes at least the following two manners.

Manner 1: Joint Ranking. Joint ranking is performed based on the first radio signal quality of the first-type cell and the second radio signal quality of the second-type cell. For example, assume that the first-type cell includes cell 1 and cell 2, where the first radio signal quality of cell 1 is R1 and the first radio signal quality of cell 2 is R2, and the second-type cell includes cell 3 and cell 4, where the second radio signal quality of cell 3 is R3 and the second radio signal quality of cell 4 is R4. Joint ranking is performed on R1, R2, R3, and R4. For example, R2 > R3 > R1 > R4.

Manner 2: Independent Ranking. Ranking is performed based on the first radio signal quality of the first-type cell and the second radio signal quality of the second-type cell respectively. For example, assume that the first-type cell includes cell 1, cell 2, and cell 3, where the first radio signal quality of cell 1 is R1, the first radio signal quality of cell 2 is R2, and the first radio signal quality of cell 3 is R3, and the second-type cell includes cell 4 and cell 5, where the second radio signal quality of cell 4 is R4 and the second radio signal quality of cell 5 is R5. R1, R2, and R3 are ranked independently, and R4 and R5 are ranked independently.

<u>For Manner 1</u>

In some embodiments, the cell ranking in the cell reselection is performed through joint ranking based on the first radio signal quality of the first-type cell and the second radio signal quality of the second-type cell.

Optionally, the cell ranking in the cell reselection is performed through joint ranking based on the radio signal quality of the SSB cell obtained from SSB measurement and the radio signal quality of the SSB-less cell obtained from DRS measurement.

Optionally, the cell ranking in the cell reselection is performed through joint ranking based on the DRS-RSRP of the SSB-less cell and the SSB-RSRP of the SSB cell.

Optionally, the cell ranking in the cell reselection is performed through joint ranking based on the DRS-RSRQ of the SSB-less cell and the SSB-RSRQ of the SSB cell.

In some embodiments, joint ranking is performed on the at least two cells based on the first radio signal quality of the first-type cell and the second radio signal quality of the second-type cell.

Optionally, joint ranking is performed on the at least two cells based on the radio signal quality of the SSB cell obtained from SSB measurement and the radio signal quality of the SSB-less cell obtained from DRS measurement.

Optionally, joint ranking is performed on the at least two cells based on the DRS-RSRP of the SSB-less cell and the SSB-RSRP of the SSB cell.

Optionally, joint ranking is performed on the at least two cells based on the DRS-RSRQ of the SSB-less cell and the SSB-RSRQ of the SSB cell.

In some embodiments, the cell ranking in the cell reselection is based on the first calibrated radio signal quality of the first-type cell and the second radio signal quality of the second-type cell; or the cell ranking in the cell reselection is based on the first radio signal quality of the first-type cell and a second calibrated radio signal quality of the second-type cell; or the cell ranking in the cell reselection is based on the first calibrated radio signal quality of the first-type cell and the second calibrated radio signal quality of the second-type cell.

In some embodiments, the first calibrated radio signal quality is determined based on the first radio signal quality and a first offset. For example, the first calibrated radio signal quality = the first radio signal quality + the first offset.

For example, when the frequency priority of the current serving cell is equal to the frequency priority of the neighboring cell, assuming the current serving cell is the first-type cell, the first radio signal quality $=Q_{meas,}s + Q_{hyst} - Qoffset_{temp}$.

$Q_{meas,}s$ represents a measured RSRP value of the current serving cell. $Q_{hyst}$ represents a temporary offset, announced in system broadcast of the current serving cell. $Qoffset_{temp}$ represents a cell reselection hysteresis value, announced in system broadcast of the current serving cell.

The first calibrated radio signal quality = the first radio signal quality + the first offset $=Q_{meas,}s + Q_{hyst} - Qoffset_{temp} + offset$. Offset represents the first offset.

For example, when the frequency priority of the current serving cell is equal to the frequency priority of the neighboring cell, assuming the neighboring cell is the first-type cell, the first radio signal quality $=Q_{meas,}n-Qoffset-Qoffset_{temp}$.

$Q_{meas,}n$ represents a measured RSRP value of the neighboring cell. Qoffset represents an offset. $Qoffset_{temp}$ represents a cell reselection hysteresis value, announced in system broadcast of the current serving cell.

The first calibrated radio signal quality = the first radio signal quality + the first offset $=Q_{meas,}n-Qoffset-Qoffset_{temp} + offset$. Offset represents the first offset.

In some embodiments, the first offset is a default value. For example, the default first offset is 10 dB.

In some embodiments, the first offset is obtained based on system information of the first-type cell. For example, the system message indicates that the first offset = 10 dB.

In some embodiments, the first offset is reflected in a reused $Qoffset_{s,n}$. The reused $Qoffset_{s,n}$ = an original $Qoffset_{s,n}$ + the first offset. For example, assuming the original $Qoffset_{s,n} = -10$ dB and the first offset = -10 dB, the reused $Qoffset_{s,n} = -20$ dB. $Qoffset_s$ represents an offset of the first-type cell as the current serving cell. $Qoffset_n$ represents an offset of the first-type cell as the neighboring cell.

In some embodiments, the second calibrated radio signal quality is determined based on the second radio signal quality and a second offset. For example, the second calibrated radio signal quality = the second radio signal quality + the second offset.

For example, when the frequency priority of the current serving cell is equal to the frequency priority of the neighboring cell, assuming the current serving cell is the second-type cell, the second radio signal quality $=Q_{meas,}s + Q_{hyst} - Qoffset_{temp}$.

$Q_{meas,}s$ represents a measured RSRP value of the current serving cell. $Q_{hyst}$ represents a temporary offset, announced in system broadcast of the current serving cell. $Qoffset_{temp}$ represents a cell reselection hysteresis value, announced in system broadcast of the current serving cell.

The second calibrated radio signal quality = the second radio signal quality + the second offset $=Q_{meas,}s + Q_{hyst} - Qoffset_{temp} + offset$. Offset represents the second offset.

For example, when the frequency priority of the current serving cell is equal to the frequency priority of the neighboring cell, assuming the neighboring cell is the first-type cell, the second radio signal quality $=Q_{meas,}n-Qoffset-Qoffset_{temp}$.

$Q_{meas,}n$ represents a measured RSRP value of the neighboring cell. Qoffset represents an offset. $Qoffset_{temp}$ represents a cell reselection hysteresis value, announced in system broadcast of the current serving cell.

The second calibrated radio signal quality = the second radio signal quality + the second offset =$Q_{meas,n}$-Qoffset-Qoffset$_{temp}$ + offset. Offset represents the second offset.

In some embodiments, the second offset is a default value. For example, the default second offset is 10 dB.

In some embodiments, the second offset is obtained based on system information of the second-type cell. For example, the system message indicates that the second offset = 10 dB.

In some embodiments, the second offset is reflected in a reused Qoffset$_{s,n}$. The reused Qoffset$_{s,n}$ = an original Qoffset$_{s,n}$ + the second offset. For example, assuming the original Qoffset$_{s,n}$ = -10 dB and the second offset = -10 dB, the reused Qoffset$_{s,n}$ = -20 dB. Qoffset$_s$ represents an offset of the second-type cell as the current serving cell. Qoffset$_n$ represents an offset of the second-type cell as the neighboring cell.

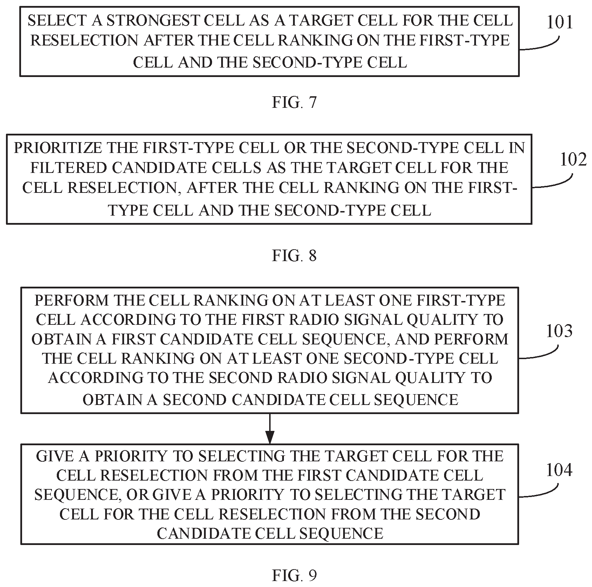

In some embodiments, as illustrated in FIG. 7, step 100 can be replaced by the following sub-steps.

Step 101. A strongest cell is selected as a target cell for the cell reselection after the cell ranking on the first-type cell and the second-type cell.

The strongest cell is a candidate cell ranked first in radio signal quality. The candidate cell is a cell with better radio signal quality than the current serving cell. For example, assuming the ranking result is: the radio signal quality of candidate cell 1 > the radio signal quality of candidate cell 3 > the radio signal quality of candidate cell 2 > the radio signal quality of candidate cell 4, the strongest cell is candidate cell 1.

The target cell is a cell on which the terminal device will camp after the cell reselection. For example, when candidate cell 1 is determined as the target cell for the cell reselection, the terminal device reselects from the current serving cell to candidate cell 1.

In some embodiments, after the cell ranking on at least one first-type cell and at least one second-type cell, reselection is performed from the current serving cell to the strongest cell.

In some embodiments, after the cell ranking on at least one first-type cell and at least one second-type cell, reselection is performed from the current serving cell to the candidate cell ranked first in radio signal quality.

In some embodiments, after the cell ranking on at least one first-type cell and at least one second-type cell, reselection is performed from the current serving cell to the target cell.

In some embodiments, after the cell ranking on at least one SSB-less cell and at least one SSB cell, the strongest cell is selected as the target cell for the cell reselection.

In some embodiments, after the cell ranking on at least one SSB-less cell and at least one SSB cell, reselection is performed from the current serving cell to the strongest cell.

In some embodiments, after the cell ranking on at least one SSB-less cell and at least one SSB cell, reselection is performed from the current serving cell to the candidate cell ranked first in radio signal quality.

In some embodiments, after the cell ranking on at least one SSB-less cell and at least one SSB cell, reselection is performed from the current serving cell to the target cell.

In some embodiments, as illustrated in FIG. 8, step 100 can be replaced by the following sub-steps.

Step 102. The first-type cell or the second-type cell in filtered candidate cells is prioritized as the target cell for the cell reselection, after the cell ranking on the first-type cell and the second-type cell.

The filtered candidate cells are cells for which a difference between a radio signal quality thereof and a radio signal quality of the strongest cell is within a preset range. The preset range is determined by a parameter rangeToBestCell.

In some embodiments, the strongest cell is determined after the cell ranking on the first-type cell and the second-type cell. The strongest cell is a cell ranked first in radio signal quality. For example, assuming the ranking result is: the radio signal quality of first-type cell 1 > the radio signal quality of second-type cell 2 > the radio signal quality of first-type cell 2 > the radio signal quality of second-type cell 1, the strongest cell is first-type cell 1.

In some embodiments, the difference between the radio signal quality of the first-type cell and the radio signal quality of the strongest cell and the difference between the radio signal quality of the second-type cell and the radio signal quality of the strongest cell are calculated. For example, assume that the difference between the radio signal quality of first-type cell 1 and the radio signal quality of the strongest cell is 0 dB, the difference between the radio signal quality of the second-type cell 2 and the radio signal quality of the strongest cell is 1 dB, the difference between the radio signal quality of the first-type cell 2 and the radio signal quality of the strongest cell is 3 dB, and the difference between the radio signal quality of second-type cell 1 and the radio signal quality of the strongest cell is 5 dB.

The difference between the radio signal quality of the first-type cell and the radio signal quality of the strongest cell and the difference between the radio signal quality of the second-type cell and the radio signal quality of the strongest cell are compared with the preset range. For example, assuming the preset range = 2 dB, the difference between the radio signal quality of first-type cell 1 and the radio signal quality of the strongest cell = 0 dB < 2 dB, the difference between the radio signal quality of the second-type cell 2 and the radio signal quality of the strongest cell = 1 dB < 2 dB, the difference between the radio signal quality of the first-type cell 2 and the radio signal quality of the strongest cell = 3 dB > 2 dB, and the difference between the radio signal quality of second-type cell 1 and the radio signal quality of the strongest cell = 5 dB > 2 dB.

Cells for which a difference between a radio signal quality thereof and a radio signal quality of the strongest cell is within the preset range are determined as the filtered candidate cells. For example, first-type cell 1 and the second-type cell 2 are determined as the filtered candidate cells.

In some embodiments, after the cell ranking on at least one first-type cell and at least one second-type cell, the first-type cell in the filtered candidate cells is prioritized as the target cell for the cell reselection. For example, assuming the filtered candidate cells include first-type cell 1 and the second-type cell 2, first-type cell 1 is prioritized as the target cell for the cell reselection. For example, assume the filtered candidate cells include candidate cell 1 and candidate cell 2, where candidate cell 1 is a second-type cell and candidate cell 2 is a first-type cell. In this case, even if the radio signal quality of candidate cell 1 is greater than the radio signal quality of candidate cell 2, candidate cell 2 is still prioritized as the target cell for the cell reselection.

In some embodiments, after the cell ranking on at least one first-type cell and at least one second-type cell, reselection is performed from the current serving cell to the first-type cell in the filtered candidate cells.

In some embodiments, after the cell ranking on at least one first-type cell and at least one second-type cell, the second-type cell in the filtered candidate cells is prioritized as the target cell for the cell reselection. For example, assuming the filtered candidate cells include first-type cell 1 and second-type cell 2, second-type cell 2 is prioritized as the target cell for the cell reselection. For example, assume the filtered candidate cells include candidate cell 1 and candidate cell 2, where candidate cell 1 is a first-type cell and candidate cell 2 is a second-type cell. In this case, even if the radio signal quality of candidate cell 1 is greater than the radio signal quality of candidate cell 2, candidate cell 2 is still prioritized as the target cell for the cell reselection.

In some embodiments, after the cell ranking on at least one first-type cell and at least one second-type cell, reselection is performed from the current serving cell to the second-type cell in the filtered candidate cells.

In some embodiments, after the cell ranking on at least one SSB-less cell and at least one SSB cell, the SSB-less cell in the filtered candidate cells is prioritized as the target cell for the cell reselection.

In some embodiments, after the cell ranking on at least one SSB-less cell and at least one SSB cell, reselection is performed from the current serving cell to the SSB-less cell in the filtered candidate cells.

In some embodiments, after the cell ranking on at least one SSB-less cell and at least one SSB cell, the SSB cell in the filtered candidate cells is prioritized as the target cell for the cell reselection.

In some embodiments, after the cell ranking on at least one SSB-less cell and at least one SSB cell, reselection is performed from the current serving cell to the SSB cell in the filtered candidate cells.

For Manner 2

In some embodiments, the cell ranking in the cell reselection is performed by ranking based on the first radio signal quality of the first-type cell and the second radio signal quality of the second-type cell respectively.

Optionally, the cell ranking in the cell reselection is performed by ranking based on the radio signal quality of the SSB cell obtained from SSB measurement and the radio signal quality of the SSB-less cell obtained from DRS measurement respectively.

Optionally, the cell ranking in the cell reselection is performed by ranking based on the DRS-RSRP of the SSB-less cell and the SSB-RSRP of the SSB cell respectively.

Optionally, the cell ranking in the cell reselection is performed by ranking based on the DRS-RSRQ of the SSB-less cell and the SSB-RSRQ of the SSB cell respectively.

In some embodiments, ranking is performed on the at least two cells based on the first radio signal quality of the first-type cell and the second radio signal quality of the second-type cell respectively.

Optionally, ranking is performed on the at least two cells based on the radio signal quality of the SSB cell obtained from SSB measurement and the radio signal quality of the SSB-less cell obtained from DRS measurement respectively.

Optionally, ranking is performed on the at least two cells based on the DRS-RSRP of the SSB-less cell and the SSB-RSRP of the SSB cell respectively.

Optionally, ranking is performed on the at least two cells based on the DRS-RSRQ of the SSB-less cell and the SSB-RSRQ of the SSB cell respectively.

In some embodiments, as illustrated in FIG. 9, step 100 can also be replaced by the following sub-steps.

Step 103. The cell ranking is performed on at least one first-type cell according to the first radio signal quality to obtain a first candidate cell sequence, and the cell ranking is performed on at least one second-type cell according to the second radio signal quality to obtain a second candidate cell sequence.

In some embodiments, first-type cells are ranked according to the first radio signal quality, and second-type cells are ranked according to the second radio signal quality.

Optionally, radio signal qualities of SSB-less cells obtained from DRS measurement are ranked, and radio signal qualities of SSB cells obtained from SSB measurement are ranked.

Optionally, DRS-RSRPs of SSB-less cells are ranked, and SSB-RSRPs of SSB cells are ranked.

Optionally, DRS-RSRQs of SSB-less cells are ranked, and SSB-RSRQs of SSB cells are ranked.

Step 104. Give a priority to selecting the target cell for the cell reselection from the first candidate cell sequence, or give a priority to selecting the target cell for the cell reselection from the second candidate cell sequence.

In some embodiments, give a priority to selecting the target cell for the cell reselection from the first candidate cell sequence. In some embodiments, a cell with the best radio signal quality in the first candidate cell sequence is prioritized as the target cell for the cell reselection. In some embodiments, reselection is performed from the current serving cell to the cell with the best radio signal quality in the first candidate cell sequence.

In some embodiments, give a priority to selecting the target cell for the cell reselection from the second candidate cell sequence. In some embodiments, a cell with the best radio signal quality in the second candidate cell sequence is prioritized as the target cell for the cell reselection. In some embodiments, reselection is performed from the current serving cell to the cell with the best radio signal quality in the second candidate cell sequence.

In conclusion, according to the method provided in this embodiment, when there are both a first-type cell transmitting a first common signal and a second-type cell transmitting a second common signal, a target cell for cell reselection is determined. As such, cell reselection can be performed even when radio signal qualities of different cells are measured based on different common signals.

In addition, according to the method provided in this embodiment, a first-type cell is prioritized as a target cell for cell reselection. Since the first-type cell has a longer transmission period and a lower transmission energy consumption, the first-type cell is prioritized as the target cell for the cell reselection. As such, energy consumption of the terminal device can be reduced.

In addition, according to the method provided in this embodiment, a second-type cell is prioritized as a target cell for cell reselection. Since the second-type cell has a shorter transmission period and more frequent transmission of a second common signal, the second-type cell is prioritized as the target cell for the cell reselection. As such, the terminal device can timely obtain cell information, such as changes in the system message.

After camping on the current serving cell, a network energy saving (NES) terminal device initiates neighboring-cell measurement to perform cell reselection evaluation, where the neighboring cells include a NES cell transmitting a DRS.

In some embodiments, after camping on the current serving cell, the terminal device continuously receives or measures an SSB and/or DRS of the current serving cell.

In some embodiments, the terminal device obtains a cell reselection message, where the cell reselection message is used for the terminal device to initiate neighboring-cell measurement and perform intra-frequency/inter-frequency/inter-system cell reselection.

Optionally, the cell reselection message includes a neighboring-cell/neighboring-frequency message, a frequency priority message, a parameter of the S criterion and a parameter for the R criterion for initiating neighboring-cell measurement, etc.

Optionally, the cell reselection message may also indicate the type of the neighboring cell/the transmission manner of the common signal in the neighboring cell, such as SSB cell, DRS cell, etc.

Optionally, the cell reselection message is indicated per-cell or per-frequency.

In some embodiments, the terminal device obtains the cell reselection message by receiving a broadcast SIB (such as SIB2/3/4/5) in the current serving cell or via a dedicated signaling.

Optionally, the current serving cell is a first cell, when the first cell does not transmit an SIB, the terminal device will use a cell reselection message stored locally.

Optionally, the current serving cell is a first cell, when the first cell does not transmit an SIB, the terminal device requests the first cell to transmit a cell reselection message, for example, by transmitting a UL-WUS to the first cell.

In some embodiments, the terminal device initiates neighboring-cell measurement based on an SS-RSRP/SS-RSRQ and/or DRS-RSRP/DRS-RSRQ of the current serving cell, as illustrated in table 2.

Optionally, when the current serving cell is a first cell, neighboring-cell measurement initiation is evaluated based on the DRS-RSRP/DRS-RSRQ.

Optionally, when S criterion evaluation of neighboring-cell measurement initiation for the cell reselection is performed based on the DRS-RSRP/DRS-RSRQ, the terminal device applies a new offset based on the S criterion.

$$\text{Srxlev} > 0 \text{ AND Squal} > 0;$$

$$\text{Srxlev} = Q_{rxlevmeas} + \text{offset} - (Q_{rxlevmin} + Q_{rxlevminoffset}) - P_{compensation} - \text{Qoffset}_{temp};$$

$$\text{Squal} = Q_{qualmeas} + \text{offset} - (Q_{qualmin} + Q_{qualminoffset}) - \text{Qoffset}_{temp}.$$

$Q_{rxlevmeas}$ represents a measured RSRP value. Offset represents an offset. $Q_{rxlevmin}$ represents a minimum required RSRP in the cell, announced in system broadcast. $Q_{rxlevminoffset}$ represents an offset to $Q_{rxlevmin}$. $P_{compensation}$ represents power compensation due to low power of an electronic device, announced in system broadcast. $Qoffset_{temp}$ represents a temporary offset, announced in system broadcast. $Q_{qualmeas}$ represents a measured RSRQ value. $Q_{qualmin}$ represents a minimum required RSRQ in the cell, announced in system broadcast. $Q_{qualminoffset}$ represents an offset to $Q_{qualmin}$.

Optionally, different neighboring-cell measurement initiation conditions can be used by the terminal device for different measurement types (SSB measurement/DRS measurement). For example, DRS measurement differs from SSB measurement, and the DRS transmission period may be long. In order to timely detect a DRS neighboring cell, the measurement needs to be initiated earlier.

In some embodiments, the terminal device receives an S criterion parameter configured by the network device for neighboring-cell DRS measurement initiation.

For example, the S criterion parameter includes a dedicated intra-frequency DRS measurement initiation threshold $S_{IntraSearchP}$ -DRS/$S_{IntraSearchQ}$ -DRS and a dedicate inter-frequency or inter-system DRS measurement initiation threshold $S_{nonIntraSearchP}$ -DRS/$S_{nonIntraSearchQ}$ -DRS.

For example, the S criterion parameter includes one or more offsets to the initiation threshold, where a DRS measurement initiation threshold is equal to the measurement initiation threshold $S_{IntraSearchP}$/$S_{IntraSearchQ}$/$S_{nonIntraSearchP}$/$S_{nonIntraSearchQ}$ plus an offset.

In some embodiments, the terminal device initiates intra-frequency/inter-frequency neighboring-cell SSB measurement according to the S criterion parameter for neighboring-cell measurement initiation, or the terminal device initiates intra-frequency/inter-frequency neighboring-cell DRS measurement according to the S criterion parameter for neighboring-cell DRS measurement initiation.

Optionally, when there is a DRS cell at a certain frequency according to the cell reselection message, the terminal device supporting DRS measurement autonomously adjusts the priority of the frequency, and then determines neighboring-cell measurement initiation for the frequency based on a neighboring-cell measurement initiation condition corresponding to the adjusted priority of the frequency.

Optionally, the terminal device autonomously adjusts the priority of the frequency. For example, if the terminal device is an NES terminal device, and there is a DRS cell at a certain frequency, even if the frequency is a lower-priority frequency, the frequency is regarded as an equal-priority frequency or a higher-priority frequency.

Optionally, the terminal device autonomously adjusts the priority of the frequency, which can be configured by the network device.

In some embodiments, upon meeting a measurement condition, the terminal device performs intra-frequency or inter-frequency measurement on neighboring cells of the current serving cell, and obtains a set of candidate cells based on the measurement results.

In some embodiments, the terminal device measures the current serving cell and intra-frequency/inter-frequency/inter-system neighboring cells based on the cell reselection message, and performs cell reselection evaluation (S criterion or R criterion) on candidate cells, where the candidate cells may include an NES cell transmitting a DRS, and the behavior of the terminal device includes at least one of the following.

<u>For candidate cells at the same frequency or with the same priority</u>

When there is a DRS cell in the current serving cell and/or one or more candidate neighboring cells, the terminal device ranks DRS cells according to the R criterion based on the DRS-RSRP, and ranks SSB cells according to the R criterion based on the SS-RSRP.

In some embodiments, among the current serving cell and/or one or more candidate neighboring cells, DRS cells and SSB cells are ranked jointly according to the R criterion. Specifically, when the terminal device ranks the DRS cells according to the R criterion based on the DRS-RSRP, an offset is applied to compensate for the DRS-RSRP.

Optionally, a new offset is introduced for DRS-RSRP.

Current serving cell: $Rs = Q_{meas,}s + Q_{hyst} - Qoffset_{temp} + offset$;
Neighboring cell: $Rn = Q_{meas,}n + offset - Qoffset - Qoffset_{temp}$.

$Q_{meas,}s$ represents a measured RSRP value of the current serving cell. $Q_{hyst}$ represents a temporary offset, announced in system broadcast of the current serving cell. $Qoffset_{temp}$ represents a cell reselection hysteresis value, announced in system broadcast of the current serving cell. $Q_{meas,}n$ represents a measured RSRP value of the neighboring cell. Qoffset represents an offset. $Qoffset_{temp}$ represents a cell reselection hysteresis value, announced in system broadcast of the current serving cell.

In some embodiments, among the current serving cell and/or one or more candidate neighboring cells, DRS cells and SSB cells are ranked jointly according to the R criterion. Candidate cells are controlled by a parameter rangeTo-BestCell. That is, among all the current serving cell and/or one or more candidate neighboring cells for which a difference between a signal quality thereof and a signal quality of the best cell is within rangeToBestCell, the DRS cell or the SSB cell is preferentially selected.

Optionally, the rule of preferential selection is configured by the network device.

In some embodiments, among the current serving cell and/or one or more candidate neighboring cells, DRS cells and SSB cells are ranked independently according to the R criterion, and then the DRS cell or the SSB cell is selected preferentially.

Optionally, the rule of preferential selection is configured by the network device.

For candidate cells at higher-priority frequencies

In some embodiments, the candidate cells are DRS cells, and the terminal device performs cell reselection evaluation based on the DRS-RSRP/Q of the candidate cell.

Optionally, when performing cell reselection evaluation based on the DRS-RSRP/DRS-RSRQ of the candidate cell, the terminal device applies a new offset based on the S criterion.

$$\text{Srxlev} > 0 \text{ AND Squal} > 0;$$

$$\text{Srxlev} = Q_{rxlevmeas} + \text{offset} - (Q_{rxlevmin} + Q_{rxlevminoffset}) - P_{compensation} - Qoffset_{temp};$$

$$\text{Squal} = Q_{qualmeas} + \text{offset} - (Q_{qualmin} + Q_{qualminoffset}) - Qoffset_{temp}.$$

$Q_{rxlevmeas}$ represents a measured RSRP value. Offset represents an offset. $Q_{rxlevmin}$ represents a minimum required RSRP in the cell, announced in system broadcast. $Q_{rxlevminoffset}$ represents an offset to $Q_{rxlevmin}$. $P_{compensation}$ represents power compensation due to low power of an electronic device, announced in system broadcast. $Qoffset_{temp}$ represents a temporary offset, announced in system broadcast. $Q_{qualmeas}$ represents a measured RSRQ value. $Q_{qualmin}$ represents a minimum required RSRQ in the cell, announced in system broadcast. $Q_{qualminoffset}$ represents an offset to $Q_{qualmin}$.

For candidate cells at lower-priority frequencies

In some embodiments, the current serving cell and/or candidate cells are DRS cells, and the terminal device performs cell reselection evaluation based on the DRS-RSRP/Q of the current serving cell and/or candidate cell.

Optionally, when performing cell reselection evaluation based on the DRS-RSRP/DRS-RSRQ of the current serving cell and/or candidate cell, the terminal device applies a new offset based on the S criterion:

$$\text{Srxlev} > 0 \text{ AND Squal} > 0;$$

$$\text{Srxlev} = Q_{rxlevmeas} + \text{offset} - (Q_{rxlevmin} + Q_{rxlevminoffset}) - P_{compensation} - Qoffset_{temp};$$

$$\text{Squal} = Q_{qualmeas} + \text{offset} - (Q_{qualmin} + Q_{qualminoffset}) - Qoffset_{temp}.$$

$Q_{rxlevmeas}$ represents a measured RSRP value. Offset represents an offset. $Q_{rxlevmin}$ represents a minimum required RSRP in the cell, announced in system broadcast. $Q_{rxlevminoffset}$ represents an offset to $Q_{rxlevmin}$. $P_{compensation}$ represents power compensation due to low power of an electronic device, announced in system broadcast. $Qoffset_{temp}$ represents a temporary offset, announced in system broadcast. $Q_{qualmeas}$ represents a measured RSRQ value. $Q_{qualmin}$ represents a minimum required RSRQ in the cell, announced in system broadcast. $Q_{qualminoffset}$ represents an offset to $Q_{qualmin}$.

In some embodiments, the terminal device obtains a system message of the target cell and performs an S criterion check based on a parameter provided in a first system message of the target cell. The first system message is all or part of the system message of the target cell.

According to the method for cell reselection provided in embodiments of the disclosure, how to perform cell reselection evaluation when measurement results of different neighboring cells may be based on different common signals (SSBs or DRSs) is clarified, and for intra-frequencies or equal-priority frequencies, whether RSRP/RSRQ measurement results from different sources can be directly compared and how to rank cells are clarified.

## 2. Cell Selection

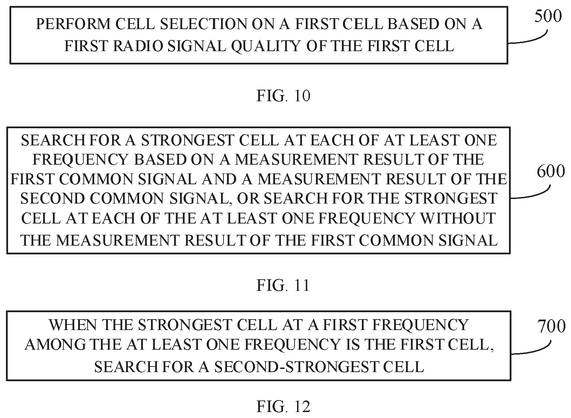

FIG. 10 illustrates a schematic flowchart of a method for cell selection provided in some exemplary embodiments of the disclosure. For example, the method is performed by a terminal device. The method further includes the following.

Step 500. Cell selection is performed on a first cell based on a first radio signal quality of the first cell.

The first cell is a cell among first-type cells. The first-type cell is configured to transmit a first common signal. The first common signal indicates a terminal device in the first-type cell to perform cell search and/or cell synchronization. For example, a terminal device in the first-type cell achieves time synchronization with the first-type cell by acquiring the first common signal.

A transmission energy consumption of the first common signal is less than a transmission energy consumption of a second common signal transmitted by a second-type cell. A transmission period of the first common signal is longer than a transmission period of the second common signal transmitted by the second-type cell. Within a same duration, a transmission frequency of the first common signal is lower than a transmission frequency of the second common signal. Therefore, the energy consumption of transmitting the first common signal is less than the energy consumption of transmitting the second common signal. The second common signal indicates a terminal device in the second-type cell to perform cell search and/or cell synchronization.

For example, if the first common signal is a DRS, the first-type cell is a cell transmitting a DRS. If the second common signal is an SSB, the second-type cell is a cell transmitting an SSB.

The first radio signal quality is determined based on the first common signal. For example, assuming the first common signal is a DRS, the first radio signal quality is a DRS-based radio signal quality. The DRS-based radio signal quality includes RSRP and/or RSRQ.

Optionally, the cell selection is performed on a cell transmitting a DRS according to the DRS-based radio signal quality.

In some embodiments, the first cell is selected as the serving cell based on the first radio signal quality of the first cell.

In some embodiments, a second cell is selected as the serving cell based on a second radio signal quality of the second cell.

In some embodiments, the first cell is selected as the serving cell based on the first radio signal quality of the first cell and the second radio signal quality of the second cell.

In some embodiments, the second cell is selected as the serving cell based on the first radio signal quality of the first cell and the second radio signal quality of the second cell.

In some embodiments, the first-type cell is an SSB-less cell, or equivalently referred to as a DRS cell, or equivalently referred to as a DRS-only cell. The second-type cell is an SSB cell, or equivalently referred to as a traditional cell, or equivalently referred to as a normal cell.

Optionally, the first cell is an SSB-less cell. The first radio signal quality of the first cell is a radio signal quality obtained from DRS measurement. The radio signal quality obtained from DRS measurement includes DRS-RSRP and/or DRS-RSRQ.

Optionally, the second cell is an SSB cell. The second radio signal quality of the second cell is a radio signal quality obtained from SSB measurement. The radio signal quality obtained from SSB measurement includes SSB-RSRP and/or SSB-RSRQ.

Optionally, the SSB-less cell is selected as the serving cell based on the DRS-RSRP and/or DRS-RSRQ.

Optionally, the SSB cell is selected as the serving cell based on the SSB-RSRP and/or SSB-RSRQ.

Optionally, the SSB-less cell is selected as the serving cell based on the DRS-RSRP and/or DRS-RSRQ and the SSB-RSRP and/or SSB-RSRQ.

Optionally, the SSB cell is selected as the serving cell based on the DRS-RSRP and/or DRS-RSRQ and the SSB-RSRP and/or SSB-RSRQ.

In conclusion, according to the method provided in this embodiment, a first cell is selected based on the first radio signal quality of the first cell. As such, how to camp on the first cell through cell selection is clarified.

## 2.1 Parameter Acquisition

In some embodiments, an evaluation parameter for the cell selection is a default value, is obtained from system information of the first cell, or is obtained from UE cached information.

Optionally, when no system message is transmitted by the first cell, the evaluation parameter for the cell selection is the default value.

Optionally, when a system message is transmitted by the first cell, the evaluation parameter for the cell selection is obtained from the system information of the first cell.

Optionally, the system message transmitted by the first cell includes all or part of the SIB.

In some embodiments, the system information of the first cell is obtained from the first cell or another cell, where the another cell is a cell other than the first cell.

In some embodiments, the terminal device requests the first cell or the another cell to transmit the system message of the first cell by transmitting an UL wake-up signal. The UL wake-up signal is used to request the first cell or the another cell to transmit the system information of the first cell.

In some embodiments, the evaluation parameter for the cell selection is carried in a master information block (MIB) message and/or SIB message.

### 2.2 Strongest Cell Measurement

In some embodiments, as illustrated in FIG. 11, the method further includes the following.

Step 600. Search for a strongest cell at each of at least one frequency based on a measurement result of the first common signal and a measurement result of the second common signal, or search for the strongest cell at each of the at least one frequency without the measurement result of the first common signal.

The strongest cell is a cell with a best measurement result at each frequency.

In some embodiments, search for the strongest cell at each of the at least one frequency based on the measurement result of the first common signal and the measurement result of the second common signal. The strongest cell is the first-type cell or the second-type cell.

Optionally, search for the strongest cell at each of the at least one frequency according to a DRS-based measurement result and an SSB-based measurement result. The strongest cell is the cell transmitting the DRS or the cell transmitting the SSB.

In some embodiments, search for the strongest cell at each of the at least one frequency based on the measurement result of the first common signal. The strongest cell is the first-type cell.

Optionally, search for the strongest cell at each of the at least one frequency according to the DRS-based measurement result. The strongest cell is the cell transmitting the DRS.

In some embodiments, search for the strongest cell at each of the at least one frequency based on the measurement result of the second common signal. The strongest cell is the second-type cell.

Optionally, search for the strongest cell at each of the at least one frequency according to the SSB-based measurement result. The strongest cell is the cell transmitting the SSB.

In some embodiments, search for the strongest cell at each of the at least one frequency without the measurement result of the first common signal. The strongest cell is not the first-type cell.

For example, when there is a cell transmitting a DRS and a cell transmitting an SSB, search for the strongest cell at each of the at least one frequency without the DRS-based measurement result.

In some embodiments, as illustrated in FIG. 12, the method further includes the following.

Step 700. When the strongest cell at a first frequency among the at least one frequency is the first cell, search for a second-strongest cell.

The second-strongest cell is a cell with a best measurement result at each frequency excluding the strongest cell.

In some embodiments, search for the second-strongest cell at each of the at least one frequency based on the measurement result of the first common signal and the measurement result of the second common signal. The second-strongest cell is the first-type cell or the second-type cell.

Optionally, search for the second-strongest cell at each of the at least one frequency according to a DRS-based measurement result and an SSB-based measurement result. The second-strongest cell is the cell transmitting the DRS or the cell transmitting the SSB.

In some embodiments, search for the second-strongest cell at each of the at least one frequency based on the measurement result of the first common signal. The second-strongest cell is the first-type cell.

Optionally, search for the second-strongest cell at each of the at least one frequency according to the DRS-based measurement result. The second-strongest cell is the cell transmitting the DRS.

In some embodiments, search for the second-strongest cell at each of the at least one frequency based on the measurement result of the second common signal. The second-strongest cell is the second-type cell.

Optionally, search for the second-strongest cell at each of the at least one frequency according to the SSB-based measurement result. The second-strongest cell is the cell transmitting the SSB.

In some embodiments, search for the second-strongest cell at each of the at least one frequency without the measurement result of the first common signal. The second-strongest cell is not the first-type cell.

For example, when there is a cell transmitting a DRS and a cell transmitting an SSB, search for the second-strongest cell at each of the at least one frequency without the DRS-based measurement result.

In conclusion, according to the method provided in this embodiment, how to perform cell selection when there is a first cell by searching for the strongest cell is clarified. Since the transmission period of the first common signal is typically longer, if initial cell search is performed based on the measurement result of the first common signal, the terminal device will remain at each frequency for a longer period. Therefore, restricting the initial cell search from being based on the measurement result of the first common signal is beneficial to accelerating the initial cell search.

2.3 Cell Selection Evaluation

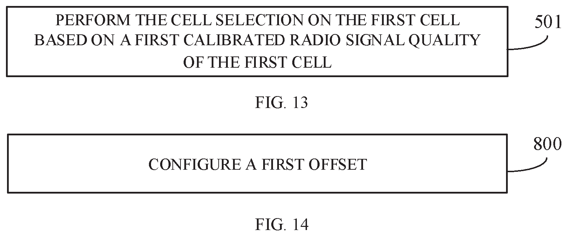

In some embodiments, as illustrated in FIG. 13, step 500 further includes the following sub-steps.

Step 501. The cell selection is performed on the first cell based on a first calibrated radio signal quality of the first cell.

In some embodiments, the first calibrated radio signal quality is determined based on the first radio signal quality and a first offset. For example, the first calibrated radio signal quality = the first radio signal quality + the first offset.

In some embodiments, the first cell is selected as the serving cell based on the first calibrated radio signal quality of the first cell.

In some embodiments, the second cell is selected as the serving cell based on a second calibrated radio signal quality of the second cell.

In some embodiments, the first cell is selected as the serving cell based on the first calibrated radio signal quality of the first cell and the second radio signal quality of the second cell.

In some embodiments, the second cell is selected as the serving cell based on the first radio signal quality of the first cell and the second calibrated radio signal quality of the second cell.

In some embodiments, the second cell is selected as the serving cell based on the first calibrated radio signal quality of the first cell and the second calibrated radio signal quality of the second cell.

In conclusion, according to the method provided in this embodiment, the first radio signal quality is adjusted by using the first offset. As such, when the radio signal quality of the first cell is in a different dimension from the radio signal quality of another cell, the first radio signal quality can be adjusted by using the first offset, so that when performing cell selection evaluation, the radio signal quality of the first cell and the radio signal quality of the another cell are in the same dimension.

In some embodiments, the disclosure discloses a method for cell selection. The method includes the following.

A NES terminal device in IDLE/INACTIVE state camps on a first cell through cell selection. The first cell does not transmit an SSB, but only a DRS or both a DRS and a SIB.

After the terminal device is powered on and completes PLMN selection, the terminal device performs initial cell selection or cell selection based on a stored message.

For initial cell selection

In some embodiments, the terminal device scans all radio frequency channels within the NR band according to its capabilities to find a suitable cell.

At each frequency, the terminal device only needs to search for the strongest cell with the strongest RSRP/RSRQ based on the measurement result of SSB measurement (referred to as SSB measurement) and/or measurement result based on DRS measurement (referred to as DRS measurement).

Optionally, the terminal device searches for the strongest cell at each frequency only based on SSB measurement. That is, during the initial cell selection, the terminal device does not perform cell search based on DRS measurement result and does not camp on a NES cell.

During the initial cell search by the terminal device, assume the SSB repeats at least every 20ms. To save network energy, the DRS period is typically longer. If the initial cell search is also based on DRS measurement, the terminal device has to remain at each frequency for an even longer period. Therefore, restricting the initial cell search from being based on DRS measurement is beneficial to accelerating the initial cell search.

Optionally, the terminal device searches for only the strongest cell at each frequency based on both SSB measurement and DRS measurement. That is, the strongest cell can be based on SSB measurements or DRS measurement.

Optionally, if the strongest cell is a cell based on DRS measurement, the terminal device can search for the next strongest cell at the frequency.

In some embodiments, when the terminal device finds a cell to be selected, the terminal device performs channel quality evaluation through SSB measurement and/or DRS measurement to determine whether the cell meets a camping condition.

In some embodiments, the cell to be selected is the first cell, that is, the cell to be selected is a cell that does not transmit an SSB, but only a DRS or both a DRS and a SIB.

The behavior of the terminal device includes at least one of the following.

The terminal device obtains the DRS-RSRP/DRS-RSRQ measurement result by receiving or measuring the DRS of the first cell.

The terminal device performs cell selection and/or camping decision based on the DRS-RSRP/DRS-RSRQ measurement result of the first cell, for example, by performing the S criterion decision.

Optionally, when the S criterion evaluation is performed based on the DRS-RSRP/DRS-RSRQ, the terminal device applies a new offset based on the S criterion.

$$\text{Srxlev} > 0 \text{ AND Squal} > 0;$$

$$\text{Srxlev} = Q_{rxlevmeas} + \text{offset} - (Q_{rxlevmin} + Q_{rxlevminoffset}) - P_{compensation} - Q\text{offset}_{temp};$$

$$\text{Squal} = Q_{qualmeas} + \text{offset} - (Q_{qualmin} + Q_{qualminoffset}) - Q\text{offset}_{temp}.$$

$Q_{rxlevmeas}$ represents a measured RSRP value. Offset represents an offset. $Q_{rxlevmin}$ represents a minimum required RSRP in the cell, announced in system broadcast. $Q_{rxlevminoffset}$ represents an offset to $Q_{rxlevmin}$. $P_{compensation}$ represents power compensation due to low power of an electronic device, announced in system broadcast. $Q\text{offset}_{temp}$ represents a temporary offset, announced in system broadcast. $Q_{qualmeas}$ represents a measured RSRQ value. $Q_{qualmin}$ represents a minimum required RSRQ in the cell, announced in system broadcast. $Q_{qualminoffset}$ represents an offset to $Q_{qualmin}$.

Optionally, when the first cell does not transmit a MIB message and/or SIB message, the parameter of the S criterion (including the newly introduced offset) use a default value.

Optionally, the terminal device obtains the parameter of the S criterion (including the newly introduced offset) through the MIB message and/or SIB message of the first cell.

In some embodiments, the terminal device obtains the MIB message and/or SIB message of the first cell.

Optionally, the SIB message includes at least all or part of the SIB message, such as a message of at least one of SIB1 and SIB2/3/4/5, for example, at least part of a specific SIB (such as SIB1) message.

Optionally, the SIB message includes at least one of: a frequency message, the parameter of the S criterion, whether to prohibit, etc.

Optionally, the terminal device obtains the MIB message and/or SIB message of the first cell from the first cell.

In some embodiments, the terminal device requests the first cell to transmit the MIB message and/or SIB message of the first cell by transmitting a UL-WUS signal to the first cell.

Optionally, the terminal device obtains the MIB and/or SIB message of the first cell from another cell. The terminal device requests another cell to transmit the MIB and/or SIB message of the first cell by transmitting a UL-WUS signal to the another cell (such as an anchor cell).

In some embodiments, the terminal device ultimately determines whether to select the first cell, or whether to camp on the first cell, or perform a final check based on the DRS and/or SIB message of the first cell.

For example, whether to prohibit is determined based on a cell barring indication message in the SIB message.

For cell selection based on stored message

In some embodiments, the terminal device performs cell search based on a message already stored in the terminal device, including a frequency message and/or cell parameter message.

Optionally, the frequency message and/or cell parameter message may be obtained from the previously camped cell or from a previously received RRC message.

Optionally, the terminal device performs cell search based on the SSB according to the message already stored in the terminal device preferentially.

Optionally, the terminal device performs cell search based on the SSB and the DRS according to the message already stored in the terminal device preferentially.

Optionally, the frequency message and/or cell parameter message may include the frequency message and/or cell parameter message of the first cell (the first cell does not transmit an SSB, but only a DRS or both a DRS and a SIB).

Optionally, the frequency message and/or parameter message of the first cell includes an indication message indicating that the first cell is a cell that does not transmit an SSB and/or transmits a DRS.

Optionally, the frequency message and/or parameter message of the first cell includes a message for cell selection, such as a parameter of the S criterion, whether to prohibit, etc.

Optionally, the frequency message and/or parameter message of the first cell includes the MIB and/or SIB message of the first cell. Optionally, the SIB message includes at least all or part of the SIB message, such as a message of at least one of SIB1 and SIB2/3/4/5, for example, at least part of a specific SIB (such as SIB1) message.

In some embodiments, when the terminal device finds a cell to be selected, the terminal device performs channel quality evaluation through SSB measurement and/or DRS measurement to determine whether the cell meets a camping condition.

In some embodiments, the cell to be selected is the first cell, that is, the cell to be selected is a cell that does not transmit an SSB, but only a DRS or both a DRS and a SIB.

The behavior of the terminal device includes at least one of the following.

The terminal device obtains the DRS-RSRP/DRS-RSRQ measurement result by receiving or measuring the DRS of the first cell.

The terminal device performs cell selection and/or camping decision based on the DRS-RSRP/DRS-RSRQ measurement result of the first cell, for example, by performing the S criterion decision.

Optionally, when the S criterion evaluation is performed based on the DRS-RSRP/DRS-RSRQ, the terminal device applies a new offset based on the S criterion.

$$\mathrm{Srxlev} > 0 \text{ AND } \mathrm{Squal} > 0;$$

$$\mathrm{Srxlev} = Q_{rxlevmeas} + \mathrm{offset} - (Q_{rxlevmin} + Q_{rxlevminoffset}) - P_{compensation} - \mathrm{Qoffset}_{temp};$$

$$\mathrm{Squal} = Q_{qualmeas} + \mathrm{offset} - (Q_{qualmin} + Q_{qualminoffset}) - \mathrm{Qoffset}_{temp}.$$

$Q_{rxlevmeas}$ represents a measured RSRP value. Offset represents an offset. $Q_{rxlevmin}$ represents a minimum required RSRP in the cell, announced in system broadcast. $Q_{rxlevminoffset}$ represents an offset to $Q_{rxlevmin}$. $P_{compensation}$ represents power compensation due to low power of an electronic device, announced in system broadcast. $\mathrm{Qoffset}_{temp}$ represents a temporary offset, announced in system broadcast. $Q_{qualmeas}$ represents a measured RSRQ value. $Q_{qualmin}$ represents a minimum required RSRQ in the cell, announced in system broadcast. $Q_{qualminoffset}$ represents an offset to $Q_{qualmin}$.

Optionally, when the first cell does not transmit a MIB message and/or SIB message, the parameter of the S criterion (including the newly introduced offset) use a default value.

Optionally, when the first cell does not transmit a MIB message and/or SIB message, the terminal device performs cell selection evaluation based on the frequency message and/or parameter message of the first cell already stored in the terminal device. That is, the terminal device uses the pre-configured parameter of the S criterion (including the newly introduced offset).

Optionally, the terminal device may maintain the validity of the message based on a validity timer, where the validity timer may be configured by the network.

Optionally, the terminal device obtains the parameter of the S criterion (including the newly introduced offset) through the MIB message and/or SIB message of the first cell.

Optionally, the terminal device obtains the MIB message and/or SIB message of the first cell.

Optionally, the SIB message includes at least all or part of the SIB message, such as a message of at least one of SIB1 and SIB2/3/4/5, for example, at least part of a specific SIB (such as SIB1) message.

Optionally, the SIB message includes at least one of: a frequency message, the parameter of the S criterion, whether to prohibit, etc.

Optionally, the terminal device obtains the MIB and/or SIB message of the first cell from a message already stored in the terminal device.

Optionally, the terminal device obtains the MIB message and/or SIB message of the first cell from the first cell.

The terminal device requests the first cell to transmit the MIB and/or SIB message of the first cell by transmitting a UL-WUS signal to the first cell.

In some embodiments, the terminal device ultimately determines whether to select the first cell, or whether to camp on the first cell, or perform a check based on the DRS and/or SIB message of the first cell.

For example, whether the first cell is prohibited is determined based on a cell barring indication message in the SIB message.

When the terminal device cannot find a suitable cell based on the message already stored in the terminal device, the terminal device will initiate initial cell selection.

According to the method for cell selection provided in embodiments of the disclosure, how a non-connected terminal device can camp on an SSB-less cell through cell selection is clarified.

It is noted that, in embodiments of the disclosure, steps 101, 102, 103, 104, 210, 220, 300, 400, 501, 600, and 700 are optional. In different embodiments, one or more of these steps may be omitted or replaced.

Step 101 can be implemented as an independent embodiment. Step 102 can be implemented as an independent embodiment. Steps 103 and 104 can be implemented as an independent embodiment. Step 210 can be implemented as an independent embodiment. Step 220 can be implemented as an independent embodiment. Step 300 can be implemented as an independent embodiment. Step 400 can be implemented as an independent embodiment.

Steps 100 and 210 can be implemented as an independent embodiment. Steps 100 and 220 can be implemented as an independent embodiment. Steps 100 and 300 can be implemented as an independent embodiment. Steps 100 and 400 can be implemented as an independent embodiment. Steps 100, 210, and 220 can be implemented as an independent embodiment. Steps 100, 210, and 300 can be implemented as an independent embodiment. Steps 100, 210, and 400 can be implemented as an independent embodiment. Steps 100, 220, and 300 can be implemented as an independent embodiment. Steps 100, 220, and 400 can be implemented as an independent embodiment. Steps 100, 300, and 400 can be implemented as an independent embodiment. Steps 100, 210, 220, and 300 can be implemented as an independent embodiment. Steps 100, 210, 220, and 400 can be implemented as an independent embodiment. Steps 100, 220, 300, and 400 can be implemented as an independent embodiment. Steps 100, 210, 220, 300, and 400 can be implemented as an independent embodiment.

Steps 101 and 210 can be implemented as an independent embodiment. Steps 101 and 220 can be implemented as an independent embodiment. Steps 101 and 300 can be implemented as an independent embodiment. Steps 101 and 400 can be implemented as an independent embodiment. Steps 101, 210, and 220 can be implemented as an independent embodiment. Steps 101, 210, and 300 can be implemented as an independent embodiment. Steps 101, 210, and 400 can be implemented as an independent embodiment. Steps 101, 220, and 300 can be implemented as an independent embodiment. Steps 101, 220, and 400 can be implemented as an independent embodiment. Steps 101, 300, and 400 can be implemented as an independent embodiment. Steps 101, 210, 220, and 300 can be implemented as an independent embodiment. Steps 101, 210, 220, and 400 can be implemented as an independent embodiment. Steps 101, 220, 300, and 400 can be implemented as an independent embodiment. Steps 101, 210, 220, 300, and 400 can be implemented as an independent embodiment.

Steps 102 and 210 can be implemented as an independent embodiment. Steps 102 and 220 can be implemented as an independent embodiment. Steps 102 and 300 can be implemented as an independent embodiment. Steps 102 and 400 can be implemented as an independent embodiment. Steps 102, 210, and 220 can be implemented as an independent embodiment. Steps 102, 210, and 300 can be implemented as an independent embodiment. Steps 102, 210, and 400 can be implemented as an independent embodiment. Steps 102, 220, and 300 can be implemented as an independent embodiment. Steps 102, 220, and 400 can be implemented as an independent embodiment. Steps 102, 300, and 400 can be implemented as an independent embodiment. Steps 102, 210, 220, and 300 can be implemented as an independent embodiment. Steps 102, 210, 220, and 400 can be implemented as an independent embodiment. Steps 102, 220, 300, and 400 can be implemented as an independent embodiment. Steps 102, 210, 220, 300, and 400 can be implemented as an independent embodiment.

Steps 103, 104, and 210 can be implemented as an independent embodiment. Steps 103, 104, and 220 can be implemented as an independent embodiment. Steps 103, 104, and 300 can be implemented as an independent embodiment. Steps 103, 104, and 400 can be implemented as an independent embodiment. Steps 103, 104, 210, and 220 can be implemented as an independent embodiment. Steps 103, 104, 210, and 300 can be implemented as an independent embodiment. Steps 103, 104, 210, and 400 can be implemented as an independent embodiment. Steps 103, 104, 220, and 300 can be implemented as an independent embodiment. Steps 103, 104, 220, and 400 can be implemented as an independent embodiment. Steps 103, 104, 300, and 400 can be implemented as an independent embodiment. Steps 103, 104, 210, 220, and 300 can be implemented as an independent embodiment. Steps 103, 104, 210, 220, and 400 can be implemented as an independent embodiment. Steps 103, 104, 220, 300, and 400 can be implemented as an independent embodiment. Steps 103, 104, 210, 220, 300, and 400 can be implemented as an independent embodiment.

Steps 210 and 220 can be implemented as an independent embodiment. Steps 210 and 300 can be implemented as an independent embodiment. Steps 210 and 400 can be implemented as an independent embodiment. Steps 220 and 300 can be implemented as an independent embodiment. Steps 220 and 400 can be implemented as an independent embodiment. Steps 300 and 400 can be implemented as an independent embodiment. Steps 210, 220, and 300 can be implemented as an independent embodiment. Steps 210, 220, and 400 can be implemented as an independent embodiment. Steps 220, 300, and 400 can be implemented as an independent embodiment. Steps 210, 220, 300, and 400 can be implemented as an independent embodiment.

Step 501 can be implemented as an independent embodiment. Step 600 can be implemented as an independent embodiment. Step 700 can be implemented as an independent embodiment.

Steps 500 and 600 can be implemented as an independent embodiment. Steps 500 and 700 can be implemented as an independent embodiment. Steps 600 and 700 can be implemented as an independent embodiment. Steps 500, 600, and 700 can be implemented as an independent embodiment.

Steps 501 and 600 can be implemented as an independent embodiment. Steps 501 and 700 can be implemented as an independent embodiment. Steps 600 and 700 can be implemented as an independent embodiment. Steps 501, 600, and 700 can be implemented as an independent embodiment.

3. Information Indication

FIG. 14 illustrates a schematic flowchart of a method for information indication provided in some exemplary embodiments of the disclosure. For example, the method is performed by a network device. The method includes the following.

Step 800. A first offset is configured.

The first offset is used to determine a first calibrated radio signal quality of a first-type cell. The first-type cell is a cell transmitting a first common signal. The first common signal is transmitted by the first-type cell. The first common signal indicates a terminal device in the first-type cell to perform cell search and/or cell synchronization. For example, a terminal device in the first-type cell achieves time-frequency synchronization with the first-type cell by acquiring the first common signal.

A transmission energy consumption of the first common signal is less than a transmission energy consumption of a second common signal transmitted by a second-type cell. In some embodiments, a transmission period of the first common signal is longer than a transmission period of the second common signal transmitted by the second-type cell. Within a same duration, a transmission frequency of the first common signal is lower than a transmission frequency of the second common signal. Therefore, the energy consumption of transmitting the first common signal is less than the energy consumption of transmitting the second common signal. The second common signal indicates a terminal device in the second-type cell to perform cell search and/or cell synchronization.

For example, if the first common signal is a DRS, the first-type cell is a cell transmitting a DRS. If the second common signal is an SSB, the second-type cell is a cell transmitting an SSB.

In some embodiments, the first-type cell is an SSB-less cell, or equivalently referred to as a DRS cell, or equivalently referred to as a DRS-only cell. The second-type cell is an SSB cell, or equivalently referred to as a traditional cell, or equivalently referred to as a normal cell.

In some embodiments, the first calibrated radio signal quality is used for cell selection or cell reselection.

For Cell Reselection

In some embodiments, the method further includes the following.

Step 900. Cell reselection information is transmitted. The cell reselection information carries the first offset.

In some embodiments, the cell reselection information includes at least one of: a frequency of the first-type cell, a frequency of the second-type cell, a first frequency priority of the first-type cell, a second frequency priority of the second-type cell, a transmission manner of a common signal of the first-type cell, a transmission manner of a common signal of the second-type cell, an S criterion parameter and an R criterion parameter corresponding to the first-type cell, and an S criterion parameter and an R criterion parameter corresponding to the second-type cell.

In some embodiments, the transmission manner of the common signal of the first-type cell includes: only transmitting the first common signal, or transmitting the first common signal and part of system information.

Optionally, the transmission manner of the common signal of the first-type cell includes: only transmitting a DRS.

Optionally, the transmission manner of the common signal of the first-type cell includes: only transmitting a DRS and part of system information.

Optionally, the transmission manner of the common signal of the SSB-less cell includes: only transmitting a DRS.

Optionally, the transmission manner of the common signal of the SSB-less cell includes: only transmitting a DRS and part of system information.

In some embodiments, the transmission manner of the common signal is indicated at cell granularity or frequency granularity. For example, the transmission manner of the common signal is indicated per-cell or per-frequency.

Optionally, the transmission manner of the DRS is indicated at cell granularity or frequency granularity.

In some embodiments, the S criterion parameter corresponding to the first-type cell includes at least one of: Srxlev, Squal, $S_{IntraSearchP}$, $S_{IntraSearchQ}$, $Q_{rxlevmeas}$, offset, $Q_{rxlevmin}$, $Q_{rxlevminoffset}$, $P_{compensation}$, $Qoffset_{temp}$, $Q_{qualmeas}$, $Q_{qualmin}$, and $Q_{qualminoffset}$.

Srxlev represents an S value related to RSRP. $S_{IntraSearchP}$ represents an intra-frequency measurement initiation threshold related to RSRP. Squal represents an S value related to RSRQ. $S_{IntraSearchQ}$ represents an intra-frequency measurement initiation threshold related to RSRQ. $Q_{rxlevmeas}$ represents a measured RSRP value. Offset represents an offset. $Q_{rxlevmin}$ represents a minimum required RSRP in the cell, announced in system broadcast. $Q_{rxlevminoffset}$ represents an offset to $Q_{rxlevmin}$. $P_{compensation}$ represents power compensation due to low power of an electronic device, announced in system broadcast. $Qoffset_{temp}$ represents a temporary offset, announced in system broadcast. $Q_{qualmeas}$ represents a measured RSRQ value. $Q_{qualmin}$ represents a minimum required RSRQ in the cell, announced in system broadcast. $Q_{qualminoffset}$ represents an offset to $Q_{qualmin}$.

In some embodiments, the R criterion parameter corresponding to the first-type cell include at least one of: $Q_{meas,}$s, $Q_{hyst}$, $Qoffset_{temp}$, $Q_{meas,}$n, Qoffset, $Qoffset_{temp}$, and offset.

$Q_{meas,}$s represents a measured RSRP value of the first-type cell as the current serving cell. $Q_{hyst}$ represents a temporary offset, announced in system broadcast of the current serving cell. $Qoffset_{temp}$ represents a cell reselection hysteresis value, announced in system broadcast of the current serving cell. $Q_{meas,}$n represents a measured RSRP value of the first-type cell as a neighboring cell. Qoffset represents an offset. $Qoffset_{temp}$ represents a cell reselection hysteresis value, announced in system broadcast of the current serving cell. Offset represents an offset.

In some embodiments, the S criterion parameter corresponding to the second-type cell includes at least one of: Srxlev, Squal, $S_{IntraSearchP}$, $S_{IntraSearchQ}$, $Q_{rxlevmeas}$, $Q_{rxlevmin}$, $Q_{rxlevminoffset}$, $P_{compensation}$, $Qoffset_{temp}$, $Q_{qualmeas}$, $Q_{qualmin}$, and $Q_{qualminoffset}$.

In some embodiments, the R criterion parameter corresponding to the second-type cell includes at least one of: $Q_{meas,}$s, $Q_{hyst}$, $Qoffset_{temp}$, $Q_{meas,}$n, Qoffset, and $Qoffset_{temp}$.

In some embodiments, the cell reselection information is obtained from a current serving cell, or the cell reselection information is obtained from the first-type cell, or the cell reselection information is obtained from the second-type cell, or the cell reselection information is obtained from terminal-stored information.

Optionally, the cell reselection information is obtained from an SSB-less cell.

Optionally, the cell reselection information is obtained from an SSB cell.

In some embodiments, the cell reselection information includes a cell type. For example, the cell reselection information includes that cell 1 is a first-type cell and cell 2 is a second-type cell. For example, the cell reselection information includes that cell 1 is an SSB-less cell and cell 2 is an SSB cell.

In some embodiments, the cell reselection information is requested, via the UL wake-up signal transmitted by the terminal device, to be transmitted by the current serving cell and/or neighboring cell.

In some embodiments, when a current serving cell is the first-type cell, neighboring-cell measurement initiation evaluation for the cell reselection is performed based on a first radio signal quality of the current serving cell.

The first radio signal quality is determined based on the first common signal. For example, if the first common signal is a DRS, the first-type cell is a cell transmitting a DRS, and the first radio signal quality is a radio signal quality based on the DRS. The radio signal quality based on the DRS includes RSRP and/or RSRQ.

In some embodiments, the first-type cell is an SSB-less cell, or equivalently referred to as a DRS cell, or equivalently referred to as a DRS-only cell. When the current serving cell is an SSB-less cell, the neighboring-cell measurement initiation evaluation for the cell reselection is performed based on a radio signal quality of the current serving cell obtained from DRS measurement. The radio signal quality obtained from DRS measurement includes DRS-RSRP and/or DRS-RSRQ. DRS-RSRP represents a reference signal receiving power obtained from DRS measurement. DRS-RSRQ represents a reference signal receiving quality obtained from DRS measurement.

Optionally, when the current serving cell is an SSB-less cell, the neighboring-cell measurement initiation evaluation for the cell reselection is performed based on the DRS-RSRP and/or DRS-RSRQ of the current serving cell.

Optionally, when the current serving cell is a cell transmitting a DRS, the neighboring-cell measurement initiation evaluation for the cell reselection is performed according to a DRS-based radio signal quality.

Optionally, when the current serving cell is a cell transmitting a DRS, the neighboring-cell measurement initiation evaluation for the cell reselection is performed according to the DRS-RSRP and/or DRS-RSRQ.

In some embodiments, the neighboring-cell measurement initiation evaluation for the cell reselection is performed based on a first calibrated radio signal quality of the current serving cell.

In some embodiments, the first calibrated radio signal quality is determined based on the first radio signal quality and a first offset. For example, the first calibrated radio signal quality = the first radio signal quality + the first offset.

For example, the first radio signal quality includes:

$$Srxlev = Q_{rxlevmeas} - (Q_{rxlevmin} + Q_{rxlevminoffset}) - P_{compensation} - Qoffset_{temp};$$

$$Squal = Q_{qualmeas} - (Q_{qualmin} + Q_{qualminoffset}) - Qoffset_{temp}.$$

$Q_{rxlevmeas}$ represents a measured RSRP value. Offset represents a third offset. $Q_{rxlevmin}$ represents a minimum required RSRP in the cell, announced in system broadcast. $Q_{rxlevminoffset}$ represents an offset to $Q_{rxlevmin}$. $P_{compensation}$ represents power compensation due to low power of an electronic device, announced in system broadcast. $Qoffset_{temp}$ represents a temporary offset, announced in system broadcast. $Q_{qualmeas}$ represents a measured RSRQ value. $Q_{qualmin}$ represents a minimum required RSRQ in the cell, announced in system broadcast. $Q_{qualminoffset}$ represents an offset to $Q_{qualmin}$.

The first calibrated radio signal quality = the first radio signal quality + the first offset. Therefore, the first calibrated radio signal quality includes the following.

$$Srxlev1 = Q_{rxlevmeas} + offset - (Q_{rxlevmin} + Q_{rxlevminoffset}) - P_{compensation} - Qoffset_{temp};$$

$$Squal1 = Q_{qualmeas} + offset - (Q_{qualmin} + Q_{qualminoffset}) - Qoffset_{temp}.$$

Offset represents the first offset.

In some embodiments, when a current serving cell is the first-type cell, neighboring-cell measurement initiation evaluation for the cell reselection is performed based on a first neighboring-cell measurement initiation condition.

The first neighboring-cell measurement initiation condition is a neighboring-cell measurement initiation condition when the current serving cell is the first-type cell. For example, when the priority of the current serving cell is equal to the priority of the neighboring cell, i.e., when the neighboring-cell measurement is intra-frequency measurement, the first neighboring-cell measurement initiation condition is: $Srxlev1 > S_{IntraSearchP}1$ and $Squal1 > S_{IntraSearchQ}1$. When the first neighboring-cell measurement initiation condition is met, intra-frequency measurement may not be initiated. Otherwise, intra-frequency measurement should be initiated.

Srxlev1 represents an S value related to RSRP of the first-type cell. $S_{IntraSearchP}1$ represents an intra-frequency measurement initiation threshold related to RSRP of the first-type cell. Squal1 represents an S value related to RSRQ of the first-type cell. $S_{IntraSearchQ}1$ represents an intra-frequency measurement initiation threshold related to RSRQ of the first-type cell.

In some embodiments, when the current serving cell is the second-type cell, the neighboring-cell measurement initiation evaluation for the cell reselection is performed based on a second neighboring-cell measurement initiation condition.

The second neighboring-cell measurement initiation condition is a neighboring-cell measurement initiation condition when the current serving cell is the second-type cell. For example, when the priority of the current serving cell is equal to the priority of the neighboring cell, i.e., when the neighboring-cell measurement is intra-frequency measurement, the second neighboring-cell measurement initiation condition is: $Srxlev2 > S_{IntraSearchP}2$ and $Squal2 > S_{IntraSearchQ}2$. When the second neighboring-cell measurement initiation condition is met, intra-frequency measurement may not be initiated. Otherwise, intra-frequency measurement should be initiated.

Srxlev2 represents an S value related to RSRP of the second-type cell. $S_{IntraSearchP}2$ represents an intra-frequency measurement initiation threshold related to RSRP of the second-type cell. Squal2 represents an S value related to RSRQ of the second-type cell. $S_{IntraSearchQ}2$ represents an intra-frequency measurement initiation threshold related to RSRQ of the second-type cell.

In some embodiments, the first neighboring-cell measurement initiation condition is different from the second neighboring-cell measurement initiation condition.

In some embodiments, the method further includes the following.

Step 1000. A third offset is configured. The third offset is used to determine the first neighboring-cell measurement initiation condition.

In some embodiments, the first neighboring-cell measurement initiation condition is determined based on the second neighboring-cell measurement initiation condition and the third offset.

For example, the first neighboring-cell measurement initiation condition is: $Srxlev2 + offset > S_{IntraSearchP}1$ and $Squal2 + offset > S_{IntraSearchQ}1$.

Offset represents the third offset.

In some embodiments, a triggering difficulty of the first neighboring-cell measurement initiation condition is lower than a triggering difficulty of the second neighboring-cell measurement initiation condition.

Optionally, a first measurement initiation threshold corresponding to the first neighboring-cell measurement initiation condition is greater than a second measurement initiation threshold corresponding to the second neighboring-cell measurement initiation condition. For example, $S_{IntraSearchP1} > S_{IntraSearchP2}$. Optionally, $S_{IntraSearchP1} = S_{IntraSearchP2} + offset$.

When the neighboring-cell measurement is intra-frequency measurement, the first neighboring-cell measurement initiation condition is: $Srxlev1 > S_{IntraSearchP}1$ and $Squal1 > S_{IntraSearchQ}1$. When the first neighboring-cell measurement initiation condition is met, intra-frequency measurement may not be initiated. Otherwise, intra-frequency measurement should be initiated. The second neighboring-cell measurement initiation condition is: $Srxlev2 > S_{IntraSearchP}2$ and $Squal2 > S_{IntraSearchQ}2$. When the second neighboring-cell measurement initiation condition is met, intra-frequency measurement may not be initiated. Otherwise, intra-frequency measurement should be initiated.

Assuming $Srxlev1 = Srxlev2$, $Squal1 = Squal2$, and $S_{IntraSearchQ}1 = S_{IntraSearchQ}2$, when $S_{IntraSearchP}1 > S_{IntraSearchP}2$, it is easier to satisfy $Srxlev1 \leq S_{IntraSearchP}1$. That is, when $Srxlev1 \leq S_{IntraSearchP}1$ is satisfied, it is not necessarily true that Srxlev2≤$S_{IntraSearchP}$2. Therefore, when the first measurement initiation threshold corresponding to the first neighboring-cell measurement initiation condition is greater than the second measurement initiation threshold corresponding to the second neighboring-cell measurement initiation condition, the first neighboring-cell measurement initiation is more likely to be triggered.

Optionally, $Q_{rxlevmin}$1 corresponding to the first neighboring-cell measurement initiation condition is less than $Q_{rxlevmin}$2 corresponding to the second neighboring-cell measurement initiation condition.

Optionally, $Q_{rxlevminoffset}$1 corresponding to the first neighboring-cell measurement initiation condition is less than $Q_{rxlevminoffset}$2 corresponding to the second neighboring-cell measurement initiation condition.

Optionally, $P_{compensation}$1 corresponding to the first neighboring-cell measurement initiation condition is less than the $P_{compensation}$2 corresponding to the second neighboring-cell measurement initiation condition.

Optionally, $Qoffset_{temp}$1 corresponding to the first neighboring-cell measurement initiation condition is less than $Qoffset_{temp}$2 corresponding to the second neighboring-cell measurement initiation condition.

Optionally, $Q_{qualmin}$1 corresponding to the first neighboring-cell measurement initiation condition is less than $Q_{qualmin}$2 corresponding to the second neighboring-cell measurement initiation condition.

Optionally, $Q_{qualminoffset}$1 corresponding to the first neighboring-cell measurement initiation condition is less than $Q_{qualminoffset}$2 corresponding to the second neighboring-cell measurement initiation condition.

In some embodiments, each cell corresponds to its own frequency, and frequencies corresponding to different cells may have the same or different priorities.

In some embodiments, when the first frequency priority of the first-type cell and the second frequency priority of the second-type cell are different, a neighboring-cell measurement initiation condition corresponding to the first frequency priority and a neighboring-cell measurement initiation condition corresponding to the second frequency priority are different. For example, the first frequency priority of the first-type cell corresponds to the first neighboring-cell measurement initiation condition, and the second frequency priority of the second-type cell corresponds to the second neighboring-cell measurement initiation condition, where the first neighboring-cell measurement initiation condition and the second neighboring-cell measurement initiation condition are different.

In some embodiments, when the first frequency priority of the first-type cell and the second frequency priority of the second-type cell are different, the first frequency priority and the second frequency priority correspond to different cell reselection conditions. For example, the first frequency priority of the first-type cell corresponds to a first cell reselection condition, and the second frequency priority of the second-type cell corresponds to a second cell reselection condition. The first cell reselection condition and the second cell reselection condition are different.

In some embodiments, cell ranking in the cell reselection is performed based on a first radio signal quality of the first-type cell and a second radio signal quality of the second-type cell.

The first radio signal quality is determined based on the first common signal. For example, assuming the first common signal is a DRS, the first radio signal quality is a DRS-based radio signal quality. The DRS-based radio signal quality includes RSRP and/or RSRQ.

The second radio signal quality is determined based on the second common signal. For example, assuming the second common signal is an SSB, the second radio signal quality is an SSB-based radio signal quality. The SSB-based radio signal quality includes RSRP and/or RSRQ.

In some embodiments, the first-type cell is an SSB-less cell, or equivalently referred to as a DRS cell, or equivalently referred to as a DRS-only cell. The second-type cell is an SSB cell, or equivalently referred to as a traditional cell, or equivalently referred to as a normal cell.

Optionally, the cell ranking in the cell reselection is performed based on a radio signal quality of the SSB cell obtained from SSB measurement and a radio signal quality of the SSB-less cell obtained from DRS measurement. The radio signal quality obtained from SSB measurement includes SSB-RSRP and/or SSB-RSRQ. The radio signal quality obtained from DRS measurement includes DRS-RSRP and/or DRS-RSRQ.

Optionally, the cell ranking in the cell reselection is performed based on the DRS-RSRP of the SSB-less cell and the SSB-RSRP of the SSB cell.

Optionally, the cell ranking in the cell reselection is performed based on the DRS-RSRQ of the SSB-less cell and the SSB-RSRQ of the SSB cell.

In some embodiments, the cell ranking is performed on the at least two cells based on the first radio signal quality of the first-type cell and the second radio signal quality of the second-type cell.

Optionally, the cell ranking is performed on the at least two cells based on the radio signal quality of the SSB cell obtained from SSB measurement and the radio signal quality of the SSB-less cell obtained from DRS measurement.

Optionally, the cell ranking is performed on the at least two cells based on the DRS-RSRP of the SSB-less cell and the SSB-RSRP of the SSB cell.

Optionally, the cell ranking is performed on the at least two cells based on the DRS-RSRQ of the SSB-less cell and the SSB-RSRQ of the SSB cell.

In some embodiments, the manner of the cell ranking includes at least the following two manners.

Manner 1: Joint Ranking. Joint ranking is performed based on the first radio signal quality of the first-type cell and the second radio signal quality of the second-type cell. For example, assume that the first-type cell includes cell 1 and cell 2, where the first radio signal quality of cell 1 is R1 and the first radio signal quality of cell 2 is R2, and the second-type cell includes cell 3 and cell 4, where the second radio signal quality of cell 3 is R3 and the second radio signal quality of cell 4 is R4. Joint ranking is performed on R1, R2, R3, and R4. For example, R2 > R3 > R1 > R4.

Manner 2: Independent Ranking. Ranking is performed based on the first radio signal quality of the first-type cell and the second radio signal quality of the second-type cell respectively. For example, assume that the first-type cell includes cell 1, cell 2, and cell 3, where the first radio signal quality of cell 1 is R1, the first radio signal quality of cell 2 is R2, and the first radio signal quality of cell 3 is R3, and the second-type cell includes cell 4 and cell 5, where the second radio signal quality of cell 4 is R4 and the second radio signal quality of cell 5 is R5. R1, R2, and R3 are ranked independently, and R4 and R5 are ranked independently.

For Manner 1

In some embodiments, the cell ranking in the cell reselection is performed through joint ranking based on the first radio signal quality of the first-type cell and the second radio signal quality of the second-type cell.

Optionally, the cell ranking in the cell reselection is performed through joint ranking based on the radio signal quality of the SSB cell obtained from SSB measurement and the radio signal quality of the SSB-less cell obtained from DRS measurement.

Optionally, the cell ranking in the cell reselection is performed through joint ranking based on the DRS-RSRP of the SSB-less cell and the SSB-RSRP of the SSB cell.

Optionally, the cell ranking in the cell reselection is performed through joint ranking based on the DRS-RSRQ of the SSB-less cell and the SSB-RSRQ of the SSB cell.

In some embodiments, joint ranking is performed on the at least two cells based on the first radio signal quality of the first-type cell and the second radio signal quality of the second-type cell.

Optionally, joint ranking is performed on the at least two cells based on the radio signal quality of the SSB cell obtained from SSB measurement and the radio signal quality of the SSB-less cell obtained from DRS measurement.

Optionally, joint ranking is performed on the at least two cells based on the DRS-RSRP of the SSB-less cell and the SSB-RSRP of the SSB cell.

Optionally, joint ranking is performed on the at least two cells based on the DRS-RSRQ of the SSB-less cell and the SSB-RSRQ of the SSB cell.

In some embodiments, the cell ranking in the cell reselection is based on the first calibrated radio signal quality of the first-type cell and the second radio signal quality of the second-type cell; or the cell ranking in the cell reselection is based on the first radio signal quality of the first-type cell and a second calibrated radio signal quality of the second-type cell; or the cell ranking in the cell reselection is based on the first calibrated radio signal quality of the first-type cell and the second calibrated radio signal quality of the second-type cell.

In some embodiments, the first calibrated radio signal quality is determined based on the first radio signal quality and a first offset. For example, the first calibrated radio signal quality = the first radio signal quality + the first offset.

For example, when the frequency priority of the current serving cell is equal to the frequency priority of the neighboring cell, assuming the current serving cell is the first-type cell, the first radio signal quality $= Q_{meas,}s + Q_{hyst} - Qoffset_{temp}$.

$Q_{meas,}s$ represents a measured RSRP value of the current serving cell. $Q_{hyst}$ represents a temporary offset, announced in system broadcast of the current serving cell. $Qoffset_{temp}$ represents a cell reselection hysteresis value, announced in system broadcast of the current serving cell.

The first calibrated radio signal quality = the first radio signal quality + the first offset $= Q_{meas,}s + Q_{hyst} - Qoffset_{temp} + offset$. Offset represents the first offset.

For example, when the frequency priority of the current serving cell is equal to the frequency priority of the neighboring cell, assuming the neighboring cell is the first-type cell, the first radio signal quality $= Q_{meas,}n - Qoffset - Qoffset_{temp}$.

$Q_{meas,}n$ represents a measured RSRP value of the neighboring cell. Qoffset represents an offset. $Qoffset_{temp}$ represents a cell reselection hysteresis value, announced in system broadcast of the current serving cell.

The first calibrated radio signal quality = the first radio signal quality + the first offset $= Q_{meas,}n - Qoffset - Qoffset_{temp} + offset$. Offset represents the first offset.

In some embodiments, the first offset is a default value. For example, the default first offset is 10 dB.

In some embodiments, the first offset is obtained based on system information of the first-type cell. For example, the system message indicates that the first offset = 10 dB.

In some embodiments, the first offset is reflected in a reused $Qoffset_{s,n}$. The reused $Qoffset_{s,n}$ = an original $Qoffset_{s,n}$ + the first offset. For example, assuming the original $Qoffset_{s,n}$ = -10 dB and the first offset = -10 dB, the reused Qoffset$_{s,n}$ = -20 dB. Qoffset$_s$ represents an offset of the first-type cell as the current serving cell. Qoffset$_n$ represents an offset of the first-type cell as the neighboring cell.

In some embodiments, the method further includes the following.

Step 1100. A second offset is configured. The second offset is used to determine the second calibrated radio signal quality.

In some embodiments, the second calibrated radio signal quality is determined based on the second radio signal quality and a second offset. For example, the second calibrated radio signal quality = the second radio signal quality + the second offset.

For example, when the frequency priority of the current serving cell is equal to the frequency priority of the neighboring cell, assuming the current serving cell is the second-type cell, the second radio signal quality =Q$_{meas,}$s + Q$_{hyst}$ - Qoffset$_{temp.}$

Q$_{meas,}$s represents a measured RSRP value of the current serving cell. Q$_{hyst}$ represents a temporary offset, announced in system broadcast of the current serving cell. Qoffset$_{temp}$ represents a cell reselection hysteresis value, announced in system broadcast of the current serving cell.

The second calibrated radio signal quality = the second radio signal quality + the second offset =Q$_{meas,}$s + Q$_{hyst}$ - Qoffset$_{temp}$ +offset. Offset represents the second offset.

For example, when the frequency priority of the current serving cell is equal to the frequency priority of the neighboring cell, assuming the neighboring cell is the first-type cell, the second radio signal quality =Q$_{meas,}$n-Qoffset-Qoffset$_{temp.}$

Q$_{meas,}$n represents a measured RSRP value of the neighboring cell. Qoffset represents an offset. Qoffset$_{temp}$ represents a cell reselection hysteresis value, announced in system broadcast of the current serving cell.

The second calibrated radio signal quality = the second radio signal quality + the second offset =Q$_{meas,}$n-Qoffset-Qoffset$_{temp}$ + offset. Offset represents the second offset.

In some embodiments, the second offset is a default value. For example, the default second offset is 10 dB.

In some embodiments, the second offset is obtained based on system information of the second-type cell. For example, the system message indicates that the second offset = 10 dB.

In some embodiments, the second offset is reflected in a reused Qoffset$_{s,n}$. The reused Qoffset$_{s,n}$ = an original Qoffset$_{s,n}$ + the second offset. For example, assuming the original Qoffset$_{s,n}$ = -10 dB and the second offset = -10 dB, the reused Qoffset$_{s,n}$ = -20 dB. Qoffset$_s$ represents an offset of the second-type cell as the current serving cell. Qoffset$_n$ represents an offset of the second-type cell as the neighboring cell.

## For Manner 2

In some embodiments, the cell ranking in the cell reselection is performed by ranking based on the first radio signal quality of the first-type cell and the second radio signal quality of the second-type cell respectively.

Optionally, the cell ranking in the cell reselection is performed by ranking based on the radio signal quality of the SSB cell obtained from SSB measurement and the radio signal quality of the SSB-less cell obtained from DRS measurement respectively.

Optionally, the cell ranking in the cell reselection is performed by ranking based on the DRS-RSRP of the SSB-less cell and the SSB-RSRP of the SSB cell respectively.

Optionally, the cell ranking in the cell reselection is performed by ranking based on the DRS-RSRQ of the SSB-less cell and the SSB-RSRQ of the SSB cell respectively.

In some embodiments, ranking is performed on the at least two cells based on the first radio signal quality of the first-type cell and the second radio signal quality of the second-type cell respectively.

Optionally, ranking is performed on the at least two cells based on the radio signal quality of the SSB cell obtained from SSB measurement and the radio signal quality of the SSB-less cell obtained from DRS measurement respectively.

Optionally, ranking is performed on the at least two cells based on the DRS-RSRP of the SSB-less cell and the SSB-RSRP of the SSB cell respectively.

Optionally, ranking is performed on the at least two cells based on the DRS-RSRQ of the SSB-less cell and the SSB-RSRQ of the SSB cell respectively.

## For Cell Selection

In some embodiments, the first cell is selected as the serving cell based on the first calibrated radio signal quality of the first cell. The first calibrated radio signal quality is determined based on the first radio signal quality and a first offset. For example, the first calibrated radio signal quality = the first radio signal quality + the first offset.

In some embodiments, the second cell is selected as the serving cell based on a second calibrated radio signal quality of the second cell.

In some embodiments, the first cell is selected as the serving cell based on the first calibrated radio signal quality of the first cell and the second radio signal quality of the second cell.

In some embodiments, the second cell is selected as the serving cell based on the first radio signal quality of the first cell and the second calibrated radio signal quality of the second cell.

In some embodiments, the second cell is selected as the serving cell based on the first calibrated radio signal quality of the first cell and the second calibrated radio signal quality of the second cell.

In some embodiments, an evaluation parameter for the cell selection is a default value, is obtained from system information of the first cell, or is obtained from UE cached information.

Optionally, when no system message is transmitted by the first cell, the evaluation parameter for the cell selection is the default value.

Optionally, when a system message is transmitted by the first cell, the evaluation parameter for the cell selection is obtained from the system information of the first cell.

Optionally, the system message transmitted by the first cell includes all or part of the SIB.

In some embodiments, the system information of the first cell is obtained from the first cell or another cell, where the another cell is a cell other than the first cell.

In some embodiments, the terminal device requests the first cell or the another cell to transmit the system message of the first cell by transmitting an UL wake-up signal. The UL wake-up signal is used to request the first cell or the another cell to transmit the system information of the first cell.

In some embodiments, the evaluation parameter for the cell selection is carried in a MIB message and/or SIB message.

In some embodiments, the method further includes the following.

Step 1200: A UL wake-up signal is received.

In some embodiments, the UL wake-up signal is used to request the first-type cell to transmit cell reselection information. In some embodiments, the UL wake-up signal is used to request the second-type cell to transmit cell reselection information. In some embodiments, the UL wake-up signal is used to request both the first-type cell and the second-type cell to transmit cell reselection information.

In some embodiments, the UL wake-up signal is used to request the SSB-less cell to transmit cell reselection information. In some embodiments, the UL wake-up signal is used to request the SSB cell to transmit cell reselection information. In some embodiments, the UL wake-up signal is used to request both the SSB-less cell and the SSB cell to transmit cell reselection information.

In some embodiments, the UL wake-up signal is transmitted by the terminal device to a network device.

In some embodiments, the UL wake-up signal is used to request the first cell or another cell to transmit the evaluation parameter for the cell selection of the first cell.

In conclusion, according to the method provided in this embodiment, a first offset is configured by the network device. As such, the terminal device can perform cell reselection or cell selection when there is a first-type cell.

It is noted that, in embodiments of the disclosure, steps 900, 1000, 1100, and 1200 are optional. In different embodiments, one or more of these steps may be omitted or replaced.

Step 900 can be implemented as an independent embodiment. Step 1000 can be implemented as an independent embodiment. Step 1100 can be implemented as an independent embodiment. Step 1200 can be implemented as an independent embodiment.

Steps 800 and 900 can be implemented as an independent embodiment. Steps 800 and 1000 can be implemented as an independent embodiment. Steps 800 and 1100 can be implemented as an independent embodiment. Steps 800 and 1200 can be implemented as an independent embodiment. Steps 900 and 1000 can be implemented as an independent embodiment. Steps 900 and 1100 can be implemented as an independent embodiment. Steps 900 and 1200 can be implemented as an independent embodiment. Steps 1000 and 1100 can be implemented as an independent embodiment. Steps 1000 and 1200 can be implemented as an independent embodiment. Steps 1100 and 1200 can be implemented as an independent embodiment.

Steps 800, 900, and 1000 can be implemented as an independent embodiment. Steps 800, 900, and 1100 can be implemented as an independent embodiment. Steps 800, 900, and 1200 can be implemented as an independent embodiment. Steps 800, 1000, and 1100 can be implemented as an independent embodiment. Steps 800, 1000, and 1200 can be implemented as an independent embodiment. Steps 800, 1100, and 1200 can be implemented as an independent embodiment. Steps 900, 1000, and 1100 can be implemented as an independent embodiment. Steps 900, 1000, and 1200 can be implemented as an independent embodiment. Steps 900, 1100, and 1200 can be implemented as an independent embodiment. Steps 1000, 1100, and 1200 can be implemented as an independent embodiment.

Steps 800, 900, 1000, and 1100 can be implemented as an independent embodiment. Steps 800, 900, 1000, and 1200 can be implemented as an independent embodiment. Steps 800, 900, 1100, and 1200 can be implemented as an independent embodiment. Steps 900, 1000, 1100, and 1200 can be implemented as an independent embodiment.

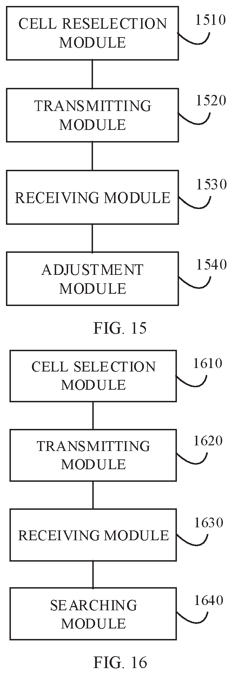

FIG. 15 illustrates a schematic diagram of an apparatus for cell reselection provided in some exemplary embodiments of the disclosure. The apparatus includes a cell reselection module 1510. The cell reselection module 1510 is configured to perform cell reselection among at least two cells.

The at least two cells include a first-type cell. The first-type cell is configured to transmit a first common signal. The first common signal indicates a terminal device in the first-type cell to perform cell search and/or cell synchronization. For example, a terminal device in the first-type cell achieves time-frequency synchronization with the first-type cell by acquiring the first common signal.

A transmission energy consumption of the first common signal is less than a transmission energy consumption of a second common signal transmitted by a second-type cell. In some embodiments, a transmission period of the first common signal is longer than a transmission period of the second common signal transmitted by the second-type cell. Within a same duration, a transmission frequency of the first common signal is lower than a transmission frequency of the second common signal. Therefore, the energy consumption of transmitting the first common signal is less than the energy consumption of transmitting the second common signal. The second common signal indicates a terminal device in the second-type cell to perform cell search and/or cell synchronization.

For example, if the first common signal is a DRS, the first-type cell is a cell transmitting a DRS. If the second common signal is an SSB, the second-type cell is a cell transmitting an SSB.

In some embodiments, the first-type cell is an SSB-less cell, or equivalently referred to as a DRS cell, or equivalently referred to as a DRS-only cell. The second-type cell is an SSB cell, or equivalently referred to as a traditional cell, or equivalently referred to as a normal cell.

Optionally, the at least two cells include a cell transmitting a DRS.

Optionally, the at least two cells include an SSB-less cell.

In some embodiments, the at least two cells are all first-type cells.

In some embodiments, the at least two cells include at least one first-type cell. In some embodiments, the at least two cells include at least one first-type cell and at least one second-type cell.

Optionally, the at least two cells are all SSB-less cells.

Optionally, the at least two cells include at least one SSB-less cell. Optionally, the at least two cells include at least one SSB-less cell and at least one SSB cell.

In some embodiments, the apparatus further includes a transmitting module 1520. The transmitting module 1520 is configured to transmit an UL wake-up signal.

In some embodiments, the UL wake-up signal is used to request the first-type cell to transmit cell reselection information. In some embodiments, the UL wake-up signal is used to request the second-type cell to transmit cell reselection information. In some embodiments, the UL wake-up signal is used to request both the first-type cell and the second-type cell to transmit cell reselection information.

In some embodiments, the UL wake-up signal is used to request the SSB-less cell to transmit cell reselection information. In some embodiments, the UL wake-up signal is used to request the SSB cell to transmit cell reselection information. In some embodiments, the UL wake-up signal is used to request both the SSB-less cell and the SSB cell to transmit cell reselection information.

In some embodiments, the UL wake-up signal is transmitted by the terminal device to a network device.

In some embodiments, the apparatus further includes a receiving module 1530. The receiving module 1530 is configured to obtain cell reselection information.

In some embodiments, the cell reselection information includes at least one of: a frequency of the first-type cell, a frequency of the second-type cell, a first frequency priority of the first-type cell, a second frequency priority of the second-type cell, a transmission manner of a common signal of the first-type cell, a transmission manner of a common signal of the second-type cell, an S criterion parameter and an R criterion parameter corresponding to the first-type cell, and an S criterion parameter and an R criterion parameter corresponding to the second-type cell.

In some embodiments, the transmission manner of the common signal of the first-type cell includes: only transmitting the first common signal, or transmitting the first common signal and part of system information.

Optionally, the transmission manner of the common signal of the first-type cell includes: only transmitting a DRS.

Optionally, the transmission manner of the common signal of the first-type cell includes: only transmitting a DRS and part of system information.

Optionally, the transmission manner of the common signal of the SSB-less cell includes: only transmitting a DRS.

Optionally, the transmission manner of the common signal of the SSB-less cell includes: only transmitting a DRS and part of system information.

In some embodiments, the transmission manner of the common signal is indicated at cell granularity or frequency granularity. For example, the transmission manner of the common signal is indicated per-cell or per-frequency.

Optionally, the transmission manner of the DRS is indicated at cell granularity or frequency granularity.

In some embodiments, the S criterion parameter corresponding to the first-type cell includes at least one of: Srxlev, Squal, $S_{IntraSearchP}$, $S_{IntraSearchQ}$, $Q_{rxlevmeas}$, offset, $Q_{rxlevmin}$, $Q_{rxlevminoffset}$, $P_{compensation}$, $Qoffset_{temp}$, $Q_{qualmeas}$, $Q_{qualmin}$, and $Q_{qualminoffset}$.

Srxlev represents an S value related to RSRP. $S_{IntraSearchP}$ represents an intra-frequency measurement initiation threshold related to RSRP. Squal represents an S value related to RSRQ. $S_{IntraSearchQ}$ represents an intra-frequency measurement initiation threshold related to RSRQ. $Q_{rxlevmeas}$ represents a measured RSRP value. Offset represents an offset. $Q_{rxlevmin}$ represents a minimum required RSRP in the cell, announced in system broadcast. $Q_{rxlevminoffset}$ represents an offset to $Q_{rxlevmin}$. $P_{compensation}$ represents power compensation due to low power of an electronic device, announced in system broadcast. $Qoffset_{temp}$ represents a temporary offset, announced in system broadcast. $Q_{qualmeas}$ represents a measured RSRQ value. $Q_{qualmin}$ represents a minimum required RSRQ in the cell, announced in system broadcast. $Q_{qualminoffset}$ represents an offset to $Q_{qualmin}$.

In some embodiments, the R criterion parameter corresponding to the first-type cell include at least one of: $Q_{meas}$, s, $Q_{hyst}$, $Qoffset_{temp}$, $Q_{meas}$, n, Qoffset, $Qoffset_{temp}$, and offset.

$Q_{meas}$,s represents a measured RSRP value of the first-type cell as the current serving cell. $Q_{hyst}$ represents a temporary offset, announced in system broadcast of the current serving cell. $Qoffset_{temp}$ represents a cell reselection hysteresis value, announced in system broadcast of the current serving cell. $Q_{meas}$,n represents a measured RSRP value of the first-type cell as a neighboring cell. Qoffset represents an offset. $Qoffset_{temp}$ represents a cell reselection hysteresis value, announced in system broadcast of the current serving cell. Offset represents an offset.

In some embodiments, the S criterion parameter corresponding to the second-type cell includes at least one of: Srxlev, Squal, $S_{IntraSearchP}$, $S_{IntraSearchQ}$, $Q_{rxlevmeas}$, $Q_{rxlevmin}$, $Q_{rxlevminoffset}$, $P_{compensation}$, $Qoffset_{temp}$, $Q_{qualmeas}$, $Q_{qualmin}$, and $Q_{qualminoffset}$.

In some embodiments, the R criterion parameter corresponding to the second-type cell includes at least one of: $Q_{meas}$,s, $Q_{hyst}$, $Qoffset_{temp}$, $Q_{meas}$,n, Qoffset, and $Qoffset_{temp}$.

In some embodiments, the cell reselection information is obtained from a current serving cell, or the cell reselection information is obtained from the first-type cell, or the cell reselection information is obtained from the second-type cell, or the cell reselection information is obtained from terminal-stored information.

Optionally, the cell reselection information is obtained from an SSB-less cell.

Optionally, the cell reselection information is obtained from an SSB cell.

In some embodiments, the cell reselection information includes a cell type. For example, the cell reselection information includes that cell 1 is a first-type cell and cell 2 is a second-type cell. For example, the cell reselection information includes that cell 1 is an SSB-less cell and cell 2 is an SSB cell.

In some embodiments, the cell reselection information is requested, via the UL wake-up signal transmitted by the terminal device, to be transmitted by the current serving cell and/or neighboring cell.

In some embodiments, when a current serving cell is the first-type cell, neighboring-cell measurement initiation evaluation for the cell reselection is performed based on a first radio signal quality of the current serving cell.

The first radio signal quality is determined based on the first common signal. For example, if the first common signal is a DRS, the first-type cell is a cell transmitting a DRS, and the first radio signal quality is a radio signal quality based on the DRS. The radio signal quality based on the DRS includes RSRP and/or RSRQ.

In some embodiments, the first-type cell is an SSB-less cell, or equivalently referred to as a DRS cell, or equivalently referred to as a DRS-only cell. When the current serving cell is an SSB-less cell, the neighboring-cell measurement initiation evaluation for the cell reselection is performed based on a radio signal quality of the current serving cell obtained from DRS measurement. The radio signal quality obtained from DRS measurement includes DRS-RSRP and/or DRS-RSRQ. DRS-RSRP represents a reference signal receiving power obtained from DRS measurement. DRS-RSRQ represents a reference signal receiving quality obtained from DRS measurement.

Optionally, when the current serving cell is an SSB-less cell, the neighboring-cell measurement initiation evaluation for the cell reselection is performed based on the DRS-RSRP and/or DRS-RSRQ of the current serving cell.

Optionally, when the current serving cell is a cell transmitting a DRS, the neighboring-cell measurement initiation evaluation for the cell reselection is performed according to a DRS-based radio signal quality.

Optionally, when the current serving cell is a cell transmitting a DRS, the neighboring-cell measurement initiation evaluation for the cell reselection is performed according to the DRS-RSRP and/or DRS-RSRQ.

In some embodiments, the neighboring-cell measurement initiation evaluation for the cell reselection is performed based on a first calibrated radio signal quality of the current serving cell.

In some embodiments, the first calibrated radio signal quality is determined based on the first radio signal quality and a first offset. For example, the first calibrated radio signal quality = the first radio signal quality + the first offset.

For example, the first radio signal quality includes:

$$Srxlev = Q_{rxlevmea} - (Q_{rxlevmin} + Q_{rxlevminoffset}) - P_{compensation} - Qoffset_{temp};$$

$$\mathrm{Squal}=Q_{qualmeas}-(Q_{qualmin}+Q_{qualminoffset})-Qoffset_{temp}.$$

$Q_{rxlevmeas}$ represents a measured RSRP value. Offset represents a third offset. $Q_{rxlevmin}$ represents a minimum required RSRP in the cell, announced in system broadcast. $Q_{rxlevminoffset}$ represents an offset to $Q_{rxlevmin}$. $P_{compensation}$ represents power compensation due to low power of an electronic device, announced in system broadcast. $Qoffset_{temp}$ represents a temporary offset, announced in system broadcast. $Q_{qualmeas}$ represents a measured RSRQ value. $Q_{qualmin}$ represents a minimum required RSRQ in the cell, announced in system broadcast. $Q_{qualminoffset}$ represents an offset to $Q_{qualmin}$.

The first calibrated radio signal quality = the first radio signal quality + the first offset. Therefore, the first calibrated radio signal quality includes the following.

$$\mathrm{Srxlev1}=Q_{rxlevmeas}+\mathrm{offset} - (Q_{rxlevmin} + Q_{rxlevminoffset}) - P_{compensation} - Qoffset_{temp};$$

$$\mathrm{Squal1}=Q_{qualmeas}+\mathrm{offset} - (Q_{qualmin} + Q_{qualminoffset}) - Qoffset_{temp}.$$

Offset represents the first offset.

In some embodiments, when a current serving cell is the first-type cell, neighboring-cell measurement initiation evaluation for the cell reselection is performed based on a first neighboring-cell measurement initiation condition.

The first neighboring-cell measurement initiation condition is a neighboring-cell measurement initiation condition when the current serving cell is the first-type cell. For example, when the priority of the current serving cell is equal to the priority of the neighboring cell, i.e., when the neighboring-cell measurement is intra-frequency measurement, the first neighboring-cell measurement initiation condition is: $Srxlev1 > S_{IntraSearchP}1$ and $Squal1 > S_{IntraSearchQ}1$. When the first neighboring-cell measurement initiation condition is met, intra-frequency measurement may not be initiated. Otherwise, intra-frequency measurement should be initiated.

Srxlev1 represents an S value related to RSRP of the first-type cell. $S_{IntraSearchP}1$ represents an intra-frequency measurement initiation threshold related to RSRP of the first-type cell. Squal1 represents an S value related to RSRQ of the first-type cell. $S_{IntraSearchQ}1$ represents an intra-frequency measurement initiation threshold related to RSRQ of the first-type cell.

In some embodiments, when the current serving cell is the second-type cell, the neighboring-cell measurement initiation evaluation for the cell reselection is performed based on a second neighboring-cell measurement initiation condition.

The second neighboring-cell measurement initiation condition is a neighboring-cell measurement initiation condition when the current serving cell is the second-type cell. For example, when the priority of the current serving cell is equal to the priority of the neighboring cell, i.e., when the neighboring-cell measurement is intra-frequency measurement, the second neighboring-cell measurement initiation condition is: $Srxlev2 > S_{IntraSearchP}2$ and $Squal2 > S_{IntraSearchQ}2$. When the second neighboring-cell measurement initiation condition is met, intra-frequency measurement may not be initiated. Otherwise, intra-frequency measurement should be initiated.

Srxlev2 represents an S value related to RSRP of the second-type cell. $S_{IntraSearchP}2$ represents an intra-frequency measurement initiation threshold related to RSRP of the second-type cell. Squal2 represents an S value related to RSRQ of the second-type cell. $S_{IntraSearchQ}2$ represents an intra-frequency measurement initiation threshold related to RSRQ of the second-type cell.

In some embodiments, the first neighboring-cell measurement initiation condition is different from the second neighboring-cell measurement initiation condition.

In some embodiments, the first neighboring-cell measurement initiation condition is determined based on the second neighboring-cell measurement initiation condition and a third offset.

For example, the first neighboring-cell measurement initiation condition is: $Srxlev2 + \mathrm{offset} > S_{IntraSearchP}1$ and $Squal2 + \mathrm{offset} > S_{IntraSearchQ}1$.

Offset represents the third offset.

In some embodiments, a triggering difficulty of the first neighboring-cell measurement initiation condition is lower than a triggering difficulty of the second neighboring-cell measurement initiation condition.

Optionally, a first measurement initiation threshold corresponding to the first neighboring-cell measurement initiation condition is greater than a second measurement initiation threshold corresponding to the second neighboring-cell measurement initiation condition. For example, $S_{IntraSearchP1} > S_{IntraSearchP2}$. Optionally, $S_{IntraSearchP1} = S_{IntraSearchP2} + \mathrm{offset}$.

When the neighboring-cell measurement is intra-frequency measurement, the first neighboring-cell measurement initiation condition is: $Srxlev1 > S_{IntraSearchP}1$ and $Squal1 > S_{IntraSearchQ}1$. When the first neighboring-cell measurement initiation condition is met, intra-frequency measurement may not be initiated. Otherwise, intra-frequency measurement should be initiated. The second neighboring-cell measurement initiation condition is: $Srxlev2 > S_{IntraSearchP}2$ and $Squal2 > S_{IntraSearchQ}2$. When the second neighboring-cell measurement initiation condition is met, intra-frequency measurement may not be initiated. Otherwise, intra-frequency measurement should be initiated.

Assuming $Srxlev1 = Srxlev2$, $Squal1 = Squal2$, and $S_{IntraSearchQ}1 = S_{IntraSearchQ}2$, when $S_{IntraSearchP}1 > S_{IntraSearchP}2$, it is easier to satisfy $Srxlev1 \leq S_{IntraSearchP}1$. That is, when $Srxlev1 \leq S_{IntraSearchP}1$ is satisfied, it is not necessarily true that $Srxlev2 \leq S_{IntraSearchP}2$. Therefore, when the first measurement initiation threshold corresponding to the first neighboring-cell measurement initiation condition is greater than the second measurement initiation threshold corresponding to the second neighboring-cell measurement initiation condition, the first neighboring-cell measurement initiation is more likely to be triggered.

Optionally, $Q_{rxlevmin}1$ corresponding to the first neighboring-cell measurement initiation condition is less than $Q_{rxlevmin}2$ corresponding to the second neighboring-cell measurement initiation condition.

Optionally, $Q_{rxlevminoffset}1$ corresponding to the first neighboring-cell measurement initiation condition is less than $Q_{rxlevminoffset}2$ corresponding to the second neighboring-cell measurement initiation condition.

Optionally, $P_{compensation}1$ corresponding to the first neighboring-cell measurement initiation condition is less than the $P_{compensation}2$ corresponding to the second neighboring-cell measurement initiation condition.

Optionally, $Qoffset_{temp}1$ corresponding to the first neighboring-cell measurement initiation condition is less than $Qoffset_{temp}2$ corresponding to the second neighboring-cell measurement initiation condition.

Optionally, $Q_{qualmin}1$ corresponding to the first neighboring-cell measurement initiation condition is less than $Q_{qualmin}2$ corresponding to the second neighboring-cell measurement initiation condition.

Optionally, $Q_{qualminoffset}1$ corresponding to the first neighboring-cell measurement initiation condition is less than $Q_{qualminoffset}2$ corresponding to the second neighboring-cell measurement initiation condition.

In some embodiments, each cell corresponds to its own frequency, and frequencies corresponding to different cells may have the same or different priorities.

In some embodiments, when the first frequency priority of the first-type cell and the second frequency priority of the second-type cell are different, a neighboring-cell measurement initiation condition corresponding to the first frequency priority and a neighboring-cell measurement initiation condition corresponding to the second frequency priority are different. For example, the first frequency priority of the first-type cell corresponds to the first neighboring-cell measurement initiation condition, and the second frequency priority of the second-type cell corresponds to the second neighboring-cell measurement initiation condition, where the first neighboring-cell measurement initiation condition and the second neighboring-cell measurement initiation condition are different.

In some embodiments, the apparatus further includes an adjustment module 1540. The adjustment module 1540 is configured to, when the first frequency priority of the first-type cell is lower than the second frequency priority of the second-type cell, increase a frequency priority of the first-type cell to the second frequency priority or a third frequency priority during the neighboring-cell measurement initiation evaluation.

The adjustment module 1540 is further configured to, when the first frequency priority of the first-type cell is lower than the second frequency priority of the second-type cell, increase the frequency priority of the first-type cell to the second frequency priority during the neighboring-cell measurement initiation evaluation. That is, the frequency priority of the first-type cell is adjusted to the same frequency priority as the second frequency priority of the second-type cell. Since the first frequency priority and the second frequency priority correspond to different neighboring-cell measurement initiation conditions, adjusting the first frequency priority to the second frequency priority allows the first-type cell and the second-type cell to use the same neighboring-cell measurement initiation condition.

The adjustment module 1540 is further configured to, when the first frequency priority of the first-type cell is lower than the second frequency priority of the second-type cell, increase the frequency priority of the first-type cell to the third frequency priority during the neighboring-cell measurement initiation evaluation. The third frequency priority is higher than the second frequency priority. That is, the frequency priority of the first-type cell is adjusted to a frequency priority higher than the second frequency priority of the second-type cell.

In some embodiments, the first frequency priority, the second frequency priority, and the third frequency priority correspond to different neighboring-cell measurement initiation conditions.

The adjustment module 1540 is further configured to, when the first frequency priority of the SSB-less cell is lower than the second frequency priority of the SSB cell, increase the frequency priority of the SSB-less cell to the second frequency priority or the third frequency priority during the neighboring-cell measurement initiation evaluation.

The adjustment module 1540 is further configured to, when the first frequency priority of the first-type cell is higher or lower than the second frequency priority of the second-type cell, maintain the first frequency priority of the first-type cell and the second frequency priority of the second-type cell.

In some embodiments, when the first frequency priority of the first-type cell and the second frequency priority of the second-type cell are different, the first frequency priority and the second frequency priority correspond to different cell reselection conditions. For example, the first frequency priority of the first-type cell corresponds to a first cell reselection condition, and the second frequency priority of the second-type cell corresponds to a second cell reselection condition. The first cell reselection condition and the second cell reselection condition are different.

The adjustment module 1540 is further configured to, when the first frequency priority of the first-type cell is lower than the second frequency priority of the second-type cell, increase a frequency priority of the first-type cell to the second frequency priority or a third frequency priority during cell reselection evaluation.

The adjustment module 1540 is further configured to, when the first frequency priority of the first-type cell is lower than the second frequency priority of the second-type cell, increase the frequency priority of the first-type cell to the second frequency priority during the cell reselection evaluation. That is, the frequency priority of the first-type cell is adjusted to the same frequency priority as the second frequency priority of the second-type cell. Since the first frequency priority and the second frequency priority correspond to different cell reselection conditions, adjusting the first frequency priority to the second frequency priority allows the first-type cell and the second-type cell to use the same cell reselection condition.

The adjustment module 1540 is further configured to, when the first frequency priority of the first-type cell is lower than the second frequency priority of the second-type cell, increase the frequency priority of the first-type cell to the third frequency priority during the cell reselection evaluation. The third frequency priority is higher than the second frequency priority. That is, the frequency priority of the first-type cell is adjusted to a frequency priority higher than the second frequency priority of the second-type cell.

The adjustment module 1540 is further configured to, when the first frequency priority of the first-type cell is higher or lower than the second frequency priority of the second-type cell, maintain the first frequency priority of the first-type cell and the second frequency priority of the second-type cell.

In some embodiments, the at least two cells further include the second-type cell. That is, the at least two cells include both the first-type cell and the second-type cell.

In some embodiments, the cell reselection is performed among the at least two cells by ranking the at least two cells.

In some embodiments, cell ranking in the cell reselection is performed based on a first radio signal quality of the first-type cell and a second radio signal quality of the second-type cell.

The first radio signal quality is determined based on the first common signal. For example, assuming the first common signal is a DRS, the first radio signal quality is a DRS-based radio signal quality. The DRS-based radio signal quality includes RSRP and/or RSRQ.

The second radio signal quality is determined based on the second common signal. For example, assuming the second common signal is an SSB, the second radio signal quality is an SSB-based radio signal quality. The SSB-based radio signal quality includes RSRP and/or RSRQ.

In some embodiments, the first-type cell is an SSB-less cell, or equivalently referred to as a DRS cell, or equivalently referred to as a DRS-only cell. The second-type cell is an SSB cell, or equivalently referred to as a traditional cell, or equivalently referred to as a normal cell.

Optionally, the cell ranking in the cell reselection is performed based on a radio signal quality of the SSB cell obtained from SSB measurement and a radio signal quality of the SSB-less cell obtained from DRS measurement. The radio signal quality obtained from SSB measurement includes SSB-RSRP and/or SSB-RSRQ. The radio signal quality obtained from DRS measurement includes DRS-RSRP and/or DRS-RSRQ.

Optionally, the cell ranking in the cell reselection is performed based on the DRS-RSRP of the SSB-less cell and the SSB-RSRP of the SSB cell.

Optionally, the cell ranking in the cell reselection is performed based on the DRS-RSRQ of the SSB-less cell and the SSB-RSRQ of the SSB cell.

In some embodiments, the cell ranking is performed on the at least two cells based on the first radio signal quality of the first-type cell and the second radio signal quality of the second-type cell.

Optionally, the cell ranking is performed on the at least two cells based on the radio signal quality of the SSB cell obtained from SSB measurement and the radio signal quality of the SSB-less cell obtained from DRS measurement.

Optionally, the cell ranking is performed on the at least two cells based on the DRS-RSRP of the SSB-less cell and the SSB-RSRP of the SSB cell.

Optionally, the cell ranking is performed on the at least two cells based on the DRS-RSRQ of the SSB-less cell and the SSB-RSRQ of the SSB cell.

In some embodiments, the manner of the cell ranking includes at least the following two manners.

Manner 1: Joint Ranking. Joint ranking is performed based on the first radio signal quality of the first-type cell and the second radio signal quality of the second-type cell. For example, assume that the first-type cell includes cell 1 and cell 2, where the first radio signal quality of cell 1 is R1 and the first radio signal quality of cell 2 is R2, and the second-type cell includes cell 3 and cell 4, where the second radio signal quality of cell 3 is R3 and the second radio signal quality of cell 4 is R4. Joint ranking is performed on R1, R2, R3, and R4. For example, R2 > R3 > R1 > R4.

Manner 2: Independent Ranking. Ranking is performed based on the first radio signal quality of the first-type cell and the second radio signal quality of the second-type cell respectively. For example, assume that the first-type cell includes cell 1, cell 2, and cell 3, where the first radio signal quality of cell 1 is R1, the first radio signal quality of cell 2 is R2, and the first radio signal quality of cell 3 is R3, and the second-type cell includes cell 4 and cell 5, where the second radio signal quality of cell 4 is R4 and the second radio signal quality of cell 5 is R5. R1, R2, and R3 are ranked independently, and R4 and R5 are ranked independently.

For Manner 1

In some embodiments, the cell ranking in the cell reselection is performed through joint ranking based on the first radio signal quality of the first-type cell and the second radio signal quality of the second-type cell.

Optionally, the cell ranking in the cell reselection is performed through joint ranking based on the radio signal quality of the SSB cell obtained from SSB measurement and the radio signal quality of the SSB-less cell obtained from DRS measurement.

Optionally, the cell ranking in the cell reselection is performed through joint ranking based on the DRS-RSRP of the SSB-less cell and the SSB-RSRP of the SSB cell.

Optionally, the cell ranking in the cell reselection is performed through joint ranking based on the DRS-RSRQ of the SSB-less cell and the SSB-RSRQ of the SSB cell.

In some embodiments, joint ranking is performed on the at least two cells based on the first radio signal quality of the first-type cell and the second radio signal quality of the second-type cell.

Optionally, joint ranking is performed on the at least two cells based on the radio signal quality of the SSB cell obtained from SSB measurement and the radio signal quality of the SSB-less cell obtained from DRS measurement.

Optionally, joint ranking is performed on the at least two cells based on the DRS-RSRP of the SSB-less cell and the SSB-RSRP of the SSB cell.

Optionally, joint ranking is performed on the at least two cells based on the DRS-RSRQ of the SSB-less cell and the SSB-RSRQ of the SSB cell.

In some embodiments, the cell ranking in the cell reselection is based on the first calibrated radio signal quality of the first-type cell and the second radio signal quality of the second-type cell; or the cell ranking in the cell reselection is based on the first radio signal quality of the first-type cell and a second calibrated radio signal quality of the second-type cell; or the cell ranking in the cell reselection is based on the first calibrated radio signal quality of the first-type cell and the second calibrated radio signal quality of the second-type cell.

In some embodiments, the first calibrated radio signal quality is determined based on the first radio signal quality and a first offset. For example, the first calibrated radio signal quality = the first radio signal quality + the first offset.

For example, when the frequency priority of the current serving cell is equal to the frequency priority of the neighboring cell, assuming the current serving cell is the first-type cell, the first radio signal quality $=Q_{meas,}s + Q_{hyst} - Qoffset_{temp}$.

$Q_{meas,}s$ represents a measured RSRP value of the current serving cell. $Q_{hyst}$ represents a temporary offset, announced in system broadcast of the current serving cell. $Qoffset_{temp}$ represents a cell reselection hysteresis value, announced in system broadcast of the current serving cell.

The first calibrated radio signal quality = the first radio signal quality + the first offset $=Q_{meas,}s + Q_{hyst} - Qoffset_{temp} + offset$. Offset represents the first offset.

For example, when the frequency priority of the current serving cell is equal to the frequency priority of the neighboring cell, assuming the neighboring cell is the first-type cell, the first radio signal quality $=Q_{meas,}n-Qoffset-Qoffset_{temp}$.

$Q_{meas,}n$ represents a measured RSRP value of the neighboring cell. Qoffset represents an offset. $Qoffset_{temp}$ represents a cell reselection hysteresis value, announced in system broadcast of the current serving cell.

The first calibrated radio signal quality = the first radio signal quality + the first offset $=Q_{meas,}n-Qoffset-Qoffset_{temp} + offset$. Offset represents the first offset.

In some embodiments, the first offset is a default value. For example, the default first offset is 10 dB.

In some embodiments, the first offset is obtained based on system information of the first-type cell. For example, the system message indicates that the first offset = 10 dB.

In some embodiments, the first offset is reflected in a reused $Qoffset_{s,n}$. The reused $Qoffset_{s,n}$ = an original $Qoffset_{s,n}$ + the first offset. For example, assuming the original $Qoffset_{s,n}$ = -10 dB and the first offset = -10 dB, the reused $Qoffset_{s,n}$ = -20 dB. $Qoffset_s$ represents an offset of the first-type cell as the current serving cell. $Qoffset_n$ represents an offset of the first-type cell as the neighboring cell.

In some embodiments, the second calibrated radio signal quality is determined based on the second radio signal quality and a second offset. For example, the second calibrated radio signal quality = the second radio signal quality + the second offset.

For example, when the frequency priority of the current serving cell is equal to the frequency priority of the neighboring cell, assuming the current serving cell is the second-type cell, the second radio signal quality $=Q_{meas,}s + Q_{hyst} -$

Qoffset$_{temp.}$

$Q_{meas}$,s represents a measured RSRP value of the current serving cell. $Q_{hyst}$ represents a temporary offset, announced in system broadcast of the current serving cell. Qoffset$_{temp}$ represents a cell reselection hysteresis value, announced in system broadcast of the current serving cell.

The second calibrated radio signal quality = the second radio signal quality + the second offset =$Q_{meas}$,s + $Q_{hyst}$ - Qoffset$_{temp}$ +offset. Offset represents the second offset.

For example, when the frequency priority of the current serving cell is equal to the frequency priority of the neighboring cell, assuming the neighboring cell is the first-type cell, the second radio signal quality =$Q_{meas}$,n-Qoffset-Qoffset$_{temp}$.

$Q_{meas}$,n represents a measured RSRP value of the neighboring cell. Qoffset represents an offset. Qoffset$_{temp}$ represents a cell reselection hysteresis value, announced in system broadcast of the current serving cell.

The second calibrated radio signal quality = the second radio signal quality + the second offset =$Q_{meas}$,n-Qoffset-Qoffset$_{temp}$ + offset. Offset represents the second offset.

In some embodiments, the second offset is a default value. For example, the default second offset is 10 dB.

In some embodiments, the second offset is obtained based on system information of the second-type cell. For example, the system message indicates that the second offset = 10 dB.

In some embodiments, the second offset is reflected in a reused Qoffset$_{s,n}$. The reused Qoffset$_{s,n}$ = an original Qoffset$_{s,n}$ + the second offset. For example, assuming the original Qoffset$_{s,n}$ = -10 dB and the second offset = -10 dB, the reused Qoffset$_{s,n}$ = -20 dB. Qoffset$_s$ represents an offset of the second-type cell as the current serving cell. Qoffset$_n$ represents an offset of the second-type cell as the neighboring cell.

The cell reselection module 1510 is further configured to select a strongest cell as a target cell for the cell reselection after the cell ranking on the first-type cell and the second-type cell.

The strongest cell is a candidate cell ranked first in radio signal quality. The candidate cell is a cell with better radio signal quality than the current serving cell. For example, assuming the ranking result is: the radio signal quality of candidate cell 1 > the radio signal quality of candidate cell 3 > the radio signal quality of candidate cell 2 > the radio signal quality of candidate cell 4, the strongest cell is candidate cell 1.

The target cell is a cell on which the terminal device will camp after the cell reselection. For example, when candidate cell 1 is determined as the target cell for the cell reselection, the terminal device reselects from the current serving cell to candidate cell 1.

The cell reselection module 1510 is further configured to, after the cell ranking on at least one first-type cell and at least one second-type cell, perform reselection from the current serving cell to the strongest cell.

The cell reselection module 1510 is further configured to, after the cell ranking on at least one first-type cell and at least one second-type cell, perform reselection from the current serving cell to the candidate cell ranked first in radio signal quality.

The cell reselection module 1510 is further configured to, after the cell ranking on at least one first-type cell and at least one second-type cell, perform reselection from the current serving cell to the target cell.

The cell reselection module 1510 is further configured to, after the cell ranking on at least one SSB-less cell and at least one SSB cell, select the strongest cell as the target cell for the cell reselection.

The cell reselection module 1510 is further configured to, after the cell ranking on at least one SSB-less cell and at least one SSB cell, perform reselection from the current serving cell to the strongest cell.

The cell reselection module 1510 is further configured to, after the cell ranking on at least one SSB-less cell and at least one SSB cell, perform reselection from the current serving cell to the candidate cell ranked first in radio signal quality.

The cell reselection module 1510 is further configured to, after the cell ranking on at least one SSB-less cell and at least one SSB cell, perform reselection from the current serving cell to the target cell.

The cell reselection module 1510 is further configured to prioritize the first-type cell or the second-type cell in filtered candidate cells as the target cell for the cell reselection, after the cell ranking on the first-type cell and the second-type cell.

The filtered candidate cells are cells for which a difference between a radio signal quality thereof and a radio signal quality of the strongest cell is within a preset range. The preset range is determined by a parameter rangeTo-BestCell.

The cell reselection module 1510 is further configured to determine the strongest cell after the cell ranking on the first-type cell and the second-type cell. The strongest cell is a cell ranked first in radio signal quality. For example, assuming the ranking result is: the radio signal quality of first-type cell 1 > the radio signal quality of second-type cell 2 > the radio signal quality of first-type cell 2 > the radio signal quality of second-type cell 1, the strongest cell is first-type cell 1.

The cell reselection module 1510 is further configured to calculate the difference between the radio signal quality of the first-type cell and the radio signal quality of the strongest cell and the difference between the radio signal quality of the second-type cell and the radio signal quality of the strongest cell. For example, assume that the difference between the radio signal quality of first-type cell 1 and the radio signal quality of the strongest cell is 0 dB, the difference between the radio signal quality of the second-type cell 2 and the radio signal quality of the strongest cell is 1 dB, the difference between the radio signal quality of the first-type cell 2 and the radio signal quality of the strongest cell is 3 dB, and the difference between the radio signal quality of second-type cell 1 and the radio signal quality of the strongest cell is 5 dB.

The cell reselection module 1510 is further configured to compare the difference between the radio signal quality of the first-type cell and the radio signal quality of the strongest cell and the difference between the radio signal quality of the second-type cell and the radio signal quality of the strongest cell with the preset range. For example, assuming the preset range = 2 dB, the difference between the radio signal quality of first-type cell 1 and the radio signal quality of the strongest cell = 0 dB < 2 dB, the difference between the radio signal quality of the second-type cell 2 and the radio signal quality of the strongest cell = 1 dB < 2 dB, the difference between the radio signal quality of the first-type cell 2 and the radio signal quality of the strongest cell = 3 dB > 2 dB, and the difference between the radio signal quality of second-type cell 1 and the radio signal quality of the strongest cell = 5 dB > 2 dB.

The cell reselection module 1510 is further configured to determine cells for which a difference between a radio signal quality thereof and a radio signal quality of the strongest cell is within the preset range as the filtered candidate cells. For example, first-type cell 1 and the second-type cell 2 are determined as the filtered candidate cells.

The cell reselection module 1510 is further configured to, after the cell ranking on at least one first-type cell and at least one second-type cell, prioritize the first-type cell in the filtered candidate cells as the target cell for the cell reselection. For example, assuming the filtered candidate cells include first-type cell 1 and the second-type cell 2, first-type cell 1 is prioritized as the target cell for the cell reselection. For example, assume the filtered candidate cells include candidate cell 1 and candidate cell 2, where candidate cell 1 is a second-type cell and candidate cell 2 is a first-type cell. In this case, even if the radio signal quality of candidate cell 1 is greater than the radio signal quality of candidate cell 2, candidate cell 2 is still prioritized as the target cell for the cell reselection.

The cell reselection module 1510 is further configured to, after the cell ranking on at least one first-type cell and at least one second-type cell, perform reselection from the current serving cell to the first-type cell in the filtered candidate cells.

The cell reselection module 1510 is further configured to, after the cell ranking on at least one first-type cell and at least one second-type cell, prioritize the second-type cell in the filtered candidate cells as the target cell for the cell reselection. For example, assuming the filtered candidate cells include first-type cell 1 and second-type cell 2, second-type cell 2 is prioritized as the target cell for the cell reselection. For example, assume the filtered candidate cells include candidate cell 1 and candidate cell 2, where candidate cell 1 is a first-type cell and candidate cell 2 is a second-type cell. In this case, even if the radio signal quality of candidate cell 1 is greater than the radio signal quality of candidate cell 2, candidate cell 2 is still prioritized as the target cell for the cell reselection.

The cell reselection module 1510 is further configured to, after the cell ranking on at least one first-type cell and at least one second-type cell, perform reselection from the current serving cell to the second-type cell in the filtered candidate cells.

The cell reselection module 1510 is further configured to, after the cell ranking on at least one SSB-less cell and at least one SSB cell, prioritize the SSB-less cell in the filtered candidate cells as the target cell for the cell reselection.

The cell reselection module 1510 is further configured to, after the cell ranking on at least one SSB-less cell and at least one SSB cell, perform reselection from the current serving cell to the SSB-less cell in the filtered candidate cells.

The cell reselection module 1510 is further configured to, after the cell ranking on at least one SSB-less cell and at least one SSB cell, prioritize the SSB cell in the filtered candidate cells as the target cell for the cell reselection.

The cell reselection module 1510 is further configured to, after the cell ranking on at least one SSB-less cell and at least one SSB cell, perform reselection from the current serving cell to the SSB cell in the filtered candidate cells.

For Manner 2

In some embodiments, the cell ranking in the cell reselection is performed by ranking based on the first radio signal quality of the first-type cell and the second radio signal quality of the second-type cell respectively.

Optionally, the cell ranking in the cell reselection is performed by ranking based on the radio signal quality of the SSB cell obtained from SSB measurement and the radio signal quality of the SSB-less cell obtained from DRS measurement respectively.

Optionally, the cell ranking in the cell reselection is performed by ranking based on the DRS-RSRP of the SSB-less cell and the SSB-RSRP of the SSB cell respectively.

Optionally, the cell ranking in the cell reselection is performed by ranking based on the DRS-RSRQ of the SSB-less cell and the SSB-RSRQ of the SSB cell respectively.

In some embodiments, ranking is performed on the at least two cells based on the first radio signal quality of the first-type cell and the second radio signal quality of the second-type cell respectively.

Optionally, ranking is performed on the at least two cells based on the radio signal quality of the SSB cell obtained from SSB measurement and the radio signal quality of the SSB-less cell obtained from DRS measurement respectively.

Optionally, ranking is performed on the at least two cells based on the DRS-RSRP of the SSB-less cell and the SSB-RSRP of the SSB cell respectively.

Optionally, ranking is performed on the at least two cells based on the DRS-RSRQ of the SSB-less cell and the SSB-RSRQ of the SSB cell respectively.

The cell reselection module 1510 is further configured to perform the cell ranking on at least one first-type cell according to the first radio signal quality to obtain a first candidate cell sequence, and perform the cell ranking on at least one second-type cell according to the second radio signal quality to obtain a second candidate cell sequence.

The cell reselection module 1510 is further configured to rank first-type cells according to the first radio signal quality, and rank second-type cells according to the second radio signal quality.

The cell reselection module 1510 is further configured to rank radio signal qualities of SSB-less cells obtained from DRS measurement, and rank radio signal qualities of SSB cells obtained from SSB measurement.

The cell reselection module 1510 is further configured to rank DRS-RSRPs of SSB-less cells are ranked, and rank SSB-RSRPs of SSB cells.

The cell reselection module 1510 is further configured to rank DRS-RSRQs of SSB-less cells are ranked, and rank SSB-RSRQs of SSB cells.

The cell reselection module 1510 is further configured to give a priority to selecting the target cell for the cell reselection from the first candidate cell sequence, or give a priority to selecting the target cell for the cell reselection from the second candidate cell sequence.

The cell reselection module 1510 is further configured to give a priority to selecting the target cell for the cell reselection from the first candidate cell sequence. In some embodiments, a cell with the best radio signal quality in the first candidate cell sequence is prioritized as the target cell for the cell reselection. In some embodiments, reselection is performed from the current serving cell to the cell with the best radio signal quality in the first candidate cell sequence.

The cell reselection module 1510 is further configured to give a priority to selecting the target cell for the cell reselection from the second candidate cell sequence. In some embodiments, a cell with the best radio signal quality in the second candidate cell sequence is prioritized as the target cell for the cell reselection. In some embodiments, reselection is performed from the current serving cell to the cell with the best radio signal quality in the second candidate cell sequence.

It should be noted that, for the apparatus provided in the above embodiments, only the division into the above functional modules is taken an example for illustration. In practice, the above functions can be allocated to different functional modules according to actual needs, that is, the internal structure of the device is divided into different functional modules to complete all or some of the functions described above.

Regarding the apparatus in embodiments, the manner in which each module performs operations has been described in detail in the related method embodiments and thus will not be elaborated again herein.

In some embodiments, the transmitting module 1520, the receiving module 1530, and the adjustment module 1540 are optional. The transmitting module 1520, the receiving module 1530, and the adjustment module 1540 can each be an independent module. In some embodiments, the transmitting module 1520 and the receiving module 1530 can be combined into a single independent module, such as a transceiver module. In some embodiments, the transmitting module 1520 and the adjustment module 1540 can be combined into a single independent module, such as a transmitting and adjustment module. In some embodiments, the receiving module 1530 and the adjustment module 1540 can be combined into a single independent module, such as a receiving and adjustment module. In some embodiments, the transmitting module 1520, the receiving module 1530, and the adjustment module 1540 can be combined into a single independent module, such as a transmitting, receiving, and adjustment module.

In some embodiments, the cell reselection module 1510 and the transmitting module 1520 can be combined into a single independent module, such as a cell reselection and transmitting module. In some embodiments, the cell reselection module 1510 and the receiving module 1530 can be combined into a single independent module, such as a cell reselection and receiving module. In some embodiments, the cell reselection module 1510 and the adjustment module 1540 can be combined into a single independent module, such as a cell reselection and adjustment module. In some embodiments, the cell reselection module 1510, the transmitting module 1520, and the receiving module 1530 can be combined into a single independent module, such as a cell reselection, transmitting, and receiving module. In some embodiments, the cell reselection module 1510, the transmitting module 1520, and the adjustment module 1540 can be combined into a single independent module, such as a cell reselection, transmitting, and adjustment module. In some embodiments, the cell reselection module 1510, the receiving module 1530, and the adjustment module 1540 can be combined into a single independent module, such as a cell reselection, receiving, and adjustment module.

FIG. 16 illustrates a schematic diagram of an apparatus for cell selection provided in some exemplary embodiments of the disclosure. The apparatus includes a cell selection module 1610. The cell selection module 1610 is configured to perform cell selection on a first cell based on a first radio signal quality of the first cell.

The first cell is a cell among first-type cells. The first-type cell is configured to transmit a first common signal. The first common signal indicates a terminal device in the first-type cell to perform cell search and/or cell synchronization. For example, a terminal device in the first-type cell achieves time synchronization with the first-type cell by acquiring the first common signal.

A transmission energy consumption of the first common signal is less than a transmission energy consumption of a second common signal transmitted by a second-type cell. A transmission period of the first common signal is longer than a transmission period of the second common signal transmitted by the second-type cell. Within a same duration, a transmission frequency of the first common signal is lower than a transmission frequency of the second common signal. Therefore, the energy consumption of transmitting the first common signal is less than the energy consumption of transmitting the second common signal. The second common signal indicates a terminal device in the second-type cell to perform cell search and/or cell synchronization.

For example, if the first common signal is a DRS, the first-type cell is a cell transmitting a DRS. If the second common signal is an SSB, the second-type cell is a cell transmitting an SSB.

The first radio signal quality is determined based on the first common signal. For example, assuming the first common signal is a DRS, the first radio signal quality is a DRS-based radio signal quality. The DRS-based radio signal quality includes RSRP and/or RSRQ.

The cell selection module 1610 is further configured to perform the cell selection on a cell transmitting a DRS according to the DRS-based radio signal quality.

The cell selection module 1610 is further configured to select the first cell as the serving cell based on the first radio signal quality of the first cell.

The cell selection module 1610 is further configured to select a second cell as the serving cell based on a second radio signal quality of the second cell.

The cell selection module 1610 is further configured to select the first cell as the serving cell based on the first radio signal quality of the first cell and the second radio signal quality of the second cell.

The cell selection module 1610 is further configured to select the second cell as the serving cell based on the first radio signal quality of the first cell and the second radio signal quality of the second cell.

In some embodiments, the first-type cell is an SSB-less cell, or equivalently referred to as a DRS cell, or equivalently referred to as a DRS-only cell. The second-type cell is an SSB cell, or equivalently referred to as a traditional cell, or equivalently referred to as a normal cell.

Optionally, the first cell is an SSB-less cell. The first radio signal quality of the first cell is a radio signal quality obtained from DRS measurement. The radio signal quality obtained from DRS measurement includes DRS-RSRP and/or DRS-RSRQ.

Optionally, the second cell is an SSB cell. The second radio signal quality of the second cell is a radio signal quality obtained from SSB measurement. The radio signal quality obtained from SSB measurement includes SSB-RSRP and/or SSB-RSRQ.

The cell selection module 1610 is further configured to select the SSB-less cell as the serving cell based on the DRS-RSRP and/or DRS-RSRQ.

The cell selection module 1610 is further configured to select the SSB cell as the serving cell based on the SSB-RSRP and/or SSB-RSRQ.

The cell selection module 1610 is further configured to select the SSB-less cell as the serving cell based on the DRS-RSRP and/or DRS-RSRQ and the SSB-RSRP and/or SSB-RSRQ.

The cell selection module 1610 is further configured to select the SSB cell as the serving cell based on the DRS-RSRP and/or DRS-RSRQ and the SSB-RSRP and/or SSB-RSRQ.

In some embodiments, an evaluation parameter for the cell selection is a default value, is obtained from system information of the first cell, or is obtained from UE cached information.

Optionally, when no system message is transmitted by the first cell, the evaluation parameter for the cell selection is the default value.

Optionally, when a system message is transmitted by the first cell, the evaluation parameter for the cell selection is obtained from the system information of the first cell.

Optionally, the system message transmitted by the first cell includes all or part of the SIB.

In some embodiments, the system information of the first cell is obtained from the first cell or another cell, where the another cell is a cell other than the first cell.

In some embodiments, the apparatus further includes a transmitting module 1620. The transmitting module 1620 is configured to request the first cell or the another cell to transmit the system message of the first cell by transmitting an UL wake-up signal. The UL wake-up signal is used to request the first cell or the another cell to transmit the system information of the first cell.

In some embodiments, the apparatus further includes a receiving module 1630. The receiving module 1630 is configured to receive the system message from the first cell.

In some embodiments, the evaluation parameter for the cell selection is carried in a MIB message and/or SIB message.

In some embodiments, the apparatus further includes a searching module 1640. The searching module 1640 is configured to search for a strongest cell at each of at least one frequency based on a measurement result of the first common signal and a measurement result of the second common signal, or search for the strongest cell at each of the at least one frequency without the measurement result of the first common signal.

The strongest cell is a cell with a best measurement result at each frequency.

The searching module 1640 is further configured to search for the strongest cell at each of the at least one frequency based on the measurement result of the first common signal and the measurement result of the second common signal. The strongest cell is the first-type cell or the second-type cell.

The searching module 1640 is further configured to search for the strongest cell at each of the at least one frequency according to a DRS-based measurement result and an SSB-based measurement result. The strongest cell is the cell transmitting the DRS or the cell transmitting the SSB.

The searching module 1640 is further configured to search for the strongest cell at each of the at least one frequency based on the measurement result of the first common signal. The strongest cell is the first-type cell.

The searching module 1640 is further configured to search for the strongest cell at each of the at least one frequency according to the DRS-based measurement result. The strongest cell is the cell transmitting the DRS.

The searching module 1640 is further configured to search for the strongest cell at each of the at least one frequency based on the measurement result of the second common signal. The strongest cell is the second-type cell.

The searching module 1640 is further configured to search for the strongest cell at each of the at least one frequency according to the SSB-based measurement result. The strongest cell is the cell transmitting the SSB.

The searching module 1640 is further configured to search for the strongest cell at each of the at least one frequency without the measurement result of the first common signal. The strongest cell is not the first-type cell.

The searching module 1640 is further configured to, when there is a cell transmitting a DRS and a cell transmitting an SSB, search for the strongest cell at each of the at least one frequency without the DRS-based measurement result.

The searching module 1640 is further configured to, when the strongest cell at a first frequency among the at least one frequency is the first cell, search for a second-strongest cell.

The second-strongest cell is a cell with a best measurement result at each frequency excluding the strongest cell.

The searching module 1640 is further configured to search for the second-strongest cell at each of the at least one frequency based on the measurement result of the first common signal and the measurement result of the second common signal. The second-strongest cell is the first-type cell or the second-type cell.

The searching module 1640 is further configured to search for the second-strongest cell at each of the at least one frequency according to a DRS-based measurement result and an SSB-based measurement result. The second-strongest cell is the cell transmitting the DRS or the cell transmitting the SSB.

The searching module 1640 is further configured to search for the second-strongest cell at each of the at least one frequency based on the measurement result of the first common signal. The second-strongest cell is the first-type cell.

The searching module 1640 is further configured to search for the second-strongest cell at each of the at least one frequency according to the DRS-based measurement result. The second-strongest cell is the cell transmitting the DRS.

The searching module 1640 is further configured to search for the second-strongest cell at each of the at least one frequency based on the measurement result of the second common signal. The second-strongest cell is the second-type cell.

The searching module 1640 is further configured to search for the second-strongest cell at each of the at least one frequency according to the SSB-based measurement result. The second-strongest cell is the cell transmitting the SSB.

The searching module 1640 is further configured to search for the second-strongest cell at each of the at least one frequency without the measurement result of the first common signal. The second-strongest cell is not the first-type cell.

The searching module 1640 is further configured to, when there is a cell transmitting a DRS and a cell transmitting an SSB, search for the second-strongest cell at each of the at least one frequency without the DRS-based measurement result.

The cell selection module 1610 is further configured to perform the cell selection on the first cell based on a first calibrated radio signal quality of the first cell.

In some embodiments, the first calibrated radio signal quality is determined based on the first radio signal quality and a first offset. For example, the first calibrated radio signal quality = the first radio signal quality + the first offset.

The cell selection module 1610 is further configured to select the first cell as the serving cell based on the first calibrated radio signal quality of the first cell.

The cell selection module 1610 is further configured to select the second cell as the serving cell based on a second calibrated radio signal quality of the second cell.

The cell selection module 1610 is further configured to select the first cell as the serving cell based on the first calibrated radio signal quality of the first cell and the second radio signal quality of the second cell.

The cell selection module 1610 is further configured to select the second cell as the serving cell based on the first radio signal quality of the first cell and the second calibrated radio signal quality of the second cell.

The cell selection module 1610 is further configured to select the second cell as the serving cell based on the first calibrated radio signal quality of the first cell and the second calibrated radio signal quality of the second cell.

It should be noted that, for the apparatus provided in the above embodiments, only the division into the above functional modules is taken an example for illustration. In practice, the above functions can be allocated to different functional modules according to actual needs, that is, the internal structure of the device is divided into different functional modules to complete all or some of the functions described above.

Regarding the apparatus in embodiments, the manner in which each module performs operations has been described in detail in the related method embodiments and thus will not be elaborated again herein.

In some embodiments, the transmitting module 1620, the receiving module 1630, and the searching module 1640 are optional. The transmitting module 1620, the receiving module 1630, and the searching module 1640 can each be an independent module. In some embodiments, the transmitting module 1620 and the receiving module 1630 can be combined into an independent module, such as a transceiver module. In some embodiments, the transmitting module 1620 and the searching module 1640 can be combined into an independent module, such as a transmitting and searching module. In some embodiments, the receiving module 1630 and the searching module 1640 can be combined into an independent module, such as a receiving and searching module. In some embodiments, the transmitting module 1620, the receiving module 1630, and the searching module 1640 can be combined into an independent module, such as a transmitting, receiving, and searching module. Embodiments of the disclosure are not limited in this regard.

In some embodiments, the cell selection module 1610 and the transmitting module 1620 can be combined into a single independent module, such as a cell selection and transmitting module. In some embodiments, the cell selection module 1610 and the receiving module 1630 can be combined into a single independent module, such as a cell selection and receiving module. In some embodiments, the cell selection module 1610 and the searching module 1640 can be combined into a single independent module, such as a cell selection and searching module. In some embodiments, the cell selection module 1610, the transmitting module 1620, and the receiving module 1630 can be combined into a single independent module, such as a cell selection, transmitting, and receiving module. The cell selection module 1610, the transmitting module 1620, and the searching module 1640 can be combined into a single independent module, such as a cell selection, transmitting, and searching module. In some embodiments, the cell selection module 1610, the receiving module 1630, and the searching module 1640 can be combined into a single independent module, such as a cell selection, receiving, and searching module.

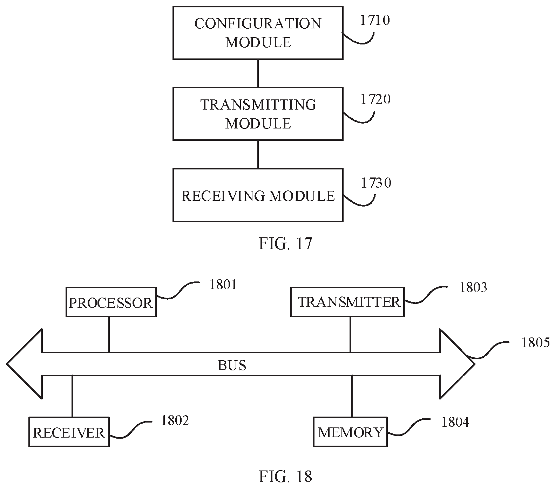

FIG. 17 illustrates a schematic diagram of an apparatus for information indication provided in some exemplary embodiments of the disclosure. The apparatus includes a configuration module 1710. The configuration module 1710 is configured to configure a first offset.

The first offset is used to determine a first calibrated radio signal quality of a first-type cell. The first-type cell is a cell transmitting a first common signal. The first common signal is transmitted by the first-type cell. The first common signal indicates a terminal device in the first-type cell to perform cell search and/or cell synchronization. For example, a terminal device in the first-type cell achieves time-frequency synchronization with the first-type cell by acquiring the first common signal.

A transmission energy consumption of the first common signal is less than a transmission energy consumption of a second common signal transmitted by a second-type cell. In some embodiments, a transmission period of the first common signal is longer than a transmission period of the second common signal transmitted by the second-type cell. Within a same duration, a transmission frequency of the first common signal is lower than a transmission frequency of the second common signal. Therefore, the energy consumption of transmitting the first common signal is less than the energy consumption of transmitting the second common signal. The second common signal indicates a terminal device in the second-type cell to perform cell search and/or cell synchronization.

For example, if the first common signal is a DRS, the first-type cell is a cell transmitting a DRS. If the second common signal is an SSB, the second-type cell is a cell transmitting an SSB.

In some embodiments, the first-type cell is an SSB-less cell, or equivalently referred to as a DRS cell, or equivalently referred to as a DRS-only cell. The second-type cell is an SSB cell, or equivalently referred to as a traditional cell, or equivalently referred to as a normal cell.

In some embodiments, the first calibrated radio signal quality is used for cell selection or cell reselection.

For Cell Reselection

In some embodiments, the apparatus further includes a transmitting module 1720. The transmitting module 1720 is configured to transmit cell reselection information is transmitted. The cell reselection information carries the first offset.

In some embodiments, the cell reselection information includes at least one of: a frequency of the first-type cell, a frequency of the second-type cell, a first frequency priority of the first-type cell, a second frequency priority of the second-type cell, a transmission manner of a common signal of the first-type cell, a transmission manner of a common signal of the second-type cell, an S criterion parameter and an R criterion parameter corresponding to the first-type cell, and an S criterion parameter and an R criterion parameter corresponding to the second-type cell.

In some embodiments, the transmission manner of the common signal of the first-type cell includes: only transmitting the first common signal, or transmitting the first common signal and part of system information.

Optionally, the transmission manner of the common signal of the first-type cell includes: only transmitting a DRS.

Optionally, the transmission manner of the common signal of the first-type cell includes: only transmitting a DRS and part of system information.

Optionally, the transmission manner of the common signal of the SSB-less cell includes: only transmitting a DRS.

Optionally, the transmission manner of the common signal of the SSB-less cell includes: only transmitting a DRS and part of system information.

In some embodiments, the transmission manner of the common signal is indicated at cell granularity or frequency granularity. For example, the transmission manner of the common signal is indicated per-cell or per-frequency.

Optionally, the transmission manner of the DRS is indicated at cell granularity or frequency granularity.

In some embodiments, the S criterion parameter corresponding to the first-type cell includes at least one of: Srxlev, Squal, $S_{IntraSearchP}$, $S_{IntraSearchQ}$, $Q_{rxlevmeas}$, offset, $Q_{rxlevmin}$, $Q_{rxlevminoffset}$, $P_{compensation}$, $Qoffset_{temp}$, $Q_{qualmeas}$, $Q_{qualmin}$, and $Q_{qualminoffset}$.

Srxlev represents an S value related to RSRP. $S_{IntraSearchP}$ represents an intra-frequency measurement initiation threshold related to RSRP. Squal represents an S value related to RSRQ. $S_{IntraSearchQ}$ represents an intra-frequency measurement initiation threshold related to RSRQ. $Q_{rxlevmeas}$ represents a measured RSRP value. Offset represents an offset. $Q_{rxlevmin}$ represents a minimum required RSRP in the cell, announced in system broadcast. $Q_{rxlevminoffset}$ represents an offset to $Q_{rxlevmin}$. $P_{compensation}$ represents power compensation due to low power of an electronic device, announced in system broadcast. $Qoffset_{temp}$ represents a temporary offset, announced in system broadcast. $Q_{qualmeas}$ represents a measured RSRQ value. $Q_{qualmin}$ represents a minimum required RSRQ in the cell, announced in system broadcast. $Q_{qualminoffset}$ represents an offset to $Q_{qualmin}$.

In some embodiments, the R criterion parameter corresponding to the first-type cell include at least one of: $Q_{meas}$, s, $Q_{hyst}$, $Qoffset_{temp}$, $Q_{meas}$, n, Qoffset, $Qoffset_{temp}$, and offset.

$Q_{meas}$, s represents a measured RSRP value of the first-type cell as the current serving cell. $Q_{hyst}$ represents a temporary offset, announced in system broadcast of the current serving cell. $Qoffset_{temp}$ represents a cell reselection hysteresis value, announced in system broadcast of the current serving cell. $Q_{meas}$, n represents a measured RSRP value of the first-type cell as a neighboring cell. Qoffset represents an offset. $Qoffset_{temp}$ represents a cell reselection hysteresis value, announced in system broadcast of the current serving cell. Offset represents an offset.

In some embodiments, the S criterion parameter corresponding to the second-type cell includes at least one of: Srxlev, Squal, $S_{IntraSearchP}$, $S_{IntraSearchQ}$, $Q_{rxlevmeas}$, $Q_{rxlevmin}$, $Q_{rxlevminoffset}$, $P_{compensation}$, $Qoffset_{temp}$, $Q_{qualmeas}$, $Q_{qualmin}$, and $Q_{qualminoffset}$.

In some embodiments, the R criterion parameter corresponding to the second-type cell includes at least one of: $Q_{meas}$, s, $Q_{hyst}$, $Qoffset_{temp}$, $Q_{meas}$, n, Qoffset, and $Qoffset_{temp}$.

In some embodiments, the cell reselection information is obtained from a current serving cell, or the cell reselection information is obtained from the first-type cell, or the cell reselection information is obtained from the second-type cell, or the cell reselection information is obtained from terminal-stored information.

Optionally, the cell reselection information is obtained from an SSB-less cell.

Optionally, the cell reselection information is obtained from an SSB cell.

In some embodiments, the cell reselection information includes a cell type. For example, the cell reselection information includes that cell 1 is a first-type cell and cell 2 is a second-type cell. For example, the cell reselection information includes that cell 1 is an SSB-less cell and cell 2 is an SSB cell.

In some embodiments, the cell reselection information is requested, via the UL wake-up signal transmitted by the terminal device, to be transmitted by the current serving cell and/or neighboring cell.

In some embodiments, when a current serving cell is the first-type cell, neighboring-cell measurement initiation evaluation for the cell reselection is performed based on a first radio signal quality of the current serving cell.

The first radio signal quality is determined based on the first common signal. For example, if the first common signal is a DRS, the first-type cell is a cell transmitting a DRS, and the first radio signal quality is a radio signal quality based on the DRS. The radio signal quality based on the DRS includes RSRP and/or RSRQ.

In some embodiments, the first-type cell is an SSB-less cell, or equivalently referred to as a DRS cell, or equivalently referred to as a DRS-only cell. When the current serving cell is an SSB-less cell, the neighboring-cell measurement initiation evaluation for the cell reselection is performed based on a radio signal quality of the current serving cell obtained from DRS measurement. The radio signal quality obtained from DRS measurement includes DRS-RSRP and/or DRS-RSRQ. DRS-RSRP represents a reference signal receiving power obtained from DRS measurement. DRS-RSRQ represents a reference signal receiving quality obtained from DRS measurement.

Optionally, when the current serving cell is an SSB-less cell, the neighboring-cell measurement initiation evaluation for the cell reselection is performed based on the DRS-RSRP and/or DRS-RSRQ of the current serving cell.

Optionally, when the current serving cell is a cell transmitting a DRS, the neighboring-cell measurement initiation evaluation for the cell reselection is performed according to a DRS-based radio signal quality.

Optionally, when the current serving cell is a cell transmitting a DRS, the neighboring-cell measurement initiation evaluation for the cell reselection is performed according to the DRS-RSRP and/or DRS-RSRQ.

In some embodiments, the neighboring-cell measurement initiation evaluation for the cell reselection is performed based on a first calibrated radio signal quality of the current serving cell.

In some embodiments, the first calibrated radio signal quality is determined based on the first radio signal quality and a first offset. For example, the first calibrated radio signal quality = the first radio signal quality + the first offset.

For example, the first radio signal quality includes:

$$Srxlev=Q_{rxlevmea}-(Q_{rxlevmin}+Q_{rxlevminoffset})-P_{compensation}-Qoffset_{temp};$$

$$Squal=Q_{qualmeas}-(Q_{qualmin}+Q_{qualminoffset})-Qoffset_{temp}.$$

$Q_{rxlevmeas}$ represents a measured RSRP value. Offset represents a third offset. $Q_{rxlevmin}$ represents a minimum required RSRP in the cell, announced in system broadcast. $Q_{rxlevminoffset}$ represents an offset to $Q_{rxlevmin}$. $P_{compensation}$ represents power compensation due to low power of an electronic device, announced in system broadcast. $Qoffset_{temp}$ represents a temporary offset, announced in system broadcast. $Q_{qualmeas}$ represents a measured RSRQ value. $Q_{qualmin}$ represents a minimum required RSRQ in the cell, announced in system broadcast. $Q_{qualminoffset}$ represents an offset to $Q_{qualmin}$.

The first calibrated radio signal quality = the first radio signal quality + the first offset. Therefore, the first calibrated radio signal quality includes the following.

$$Srxlev1=Q_{rxlevmeas}+offset-(Q_{rxlevmin}+Q_{rxlevminoffset})-P_{compensation}-Qoffset_{temp};$$

$$Squal1=Q_{qualmeas}+offset-(Q_{qualmin}+Q_{qualminoffset})-Qoffset_{temp}.$$

Offset represents the first offset.

In some embodiments, when a current serving cell is the first-type cell, neighboring-cell measurement initiation evaluation for the cell reselection is performed based on a first neighboring-cell measurement initiation condition.

The first neighboring-cell measurement initiation condition is a neighboring-cell measurement initiation condition when the current serving cell is the first-type cell. For example, when the priority of the current serving cell is equal to the priority of the neighboring cell, i.e., when the neighboring-cell measurement is intra-frequency measurement, the first neighboring-cell measurement initiation condition is: $Srxlev1 > S_{IntraSearchP}1$ and $Squal1 > S_{IntraSearchQ}1$. When the first neighboring-cell measurement initiation condition is met, intra-frequency measurement may not be initiated. Otherwise, intra-frequency measurement should be initiated.

Srxlev1 represents an S value related to RSRP of the first-type cell. $S_{IntraSearchP}1$ represents an intra-frequency measurement initiation threshold related to RSRP of the first-type cell. Squal1 represents an S value related to RSRQ of the first-type cell. $S_{IntraSearchQ}1$ represents an intra-frequency measurement initiation threshold related to RSRQ of the first-type cell.

In some embodiments, when the current serving cell is the second-type cell, the neighboring-cell measurement initiation evaluation for the cell reselection is performed based on a second neighboring-cell measurement initiation condition.

The second neighboring-cell measurement initiation condition is a neighboring-cell measurement initiation condition when the current serving cell is the second-type cell. For example, when the priority of the current serving cell is equal to the priority of the neighboring cell, i.e., when the neighboring-cell measurement is intra-frequency measurement, the second neighboring-cell measurement initiation condition is: $Srxlev2 > S_{IntraSearchP}2$ and $Squal2 > S_{IntraSearchQ}2$. When the second neighboring-cell measurement initiation condition is met, intra-frequency measurement may not be initiated. Otherwise, intra-frequency measurement should be initiated.

Srxlev2 represents an S value related to RSRP of the second-type cell. $S_{IntraSearchP}2$ represents an intra-frequency measurement initiation threshold related to RSRP of the second-type cell. Squal2 represents an S value related to RSRQ of the second-type cell. $S_{IntraSearchQ}2$ represents an intra-frequency measurement initiation threshold related to RSRQ of the second-type cell.

In some embodiments, the first neighboring-cell measurement initiation condition is different from the second neighboring-cell measurement initiation condition.

In some embodiments, the method further includes the following.

The configuration module 1710 is further configured to configure a third offset. The third offset is used to determine the first neighboring-cell measurement initiation condition.

In some embodiments, the first neighboring-cell measurement initiation condition is determined based on the second neighboring-cell measurement initiation condition and the third offset.

For example, the first neighboring-cell measurement initiation condition is: $Srxlev2 + offset > S_{IntraSearchP}1$ and $Squal2 + offset > S_{IntraSearchQ}1$.

Offset represents the third offset.

In some embodiments, a triggering difficulty of the first neighboring-cell measurement initiation condition is lower than a triggering difficulty of the second neighboring-cell measurement initiation condition.

Optionally, a first measurement initiation threshold corresponding to the first neighboring-cell measurement initiation condition is greater than a second measurement initiation threshold corresponding to the second neighboring-cell measurement initiation condition. For example, $S_{IntraSearchP1} > S_{IntraSearchP2}$. Optionally, $S_{IntraSearchP1} = S_{IntraSearchP2} + offset$.

When the neighboring-cell measurement is intra-frequency measurement, the first neighboring-cell measurement initiation condition is: $Srxlev1 > S_{IntraSearchP}1$ and $Squal1 > S_{IntraSearchQ}1$. When the first neighboring-cell measurement initiation condition is met, intra-frequency measurement may not be initiated. Otherwise, intra-frequency measurement should be initiated. The second neighboring-cell measurement initiation condition is: $Srxlev2 > S_{IntraSearchP}2$ and $Squal2 > S_{IntraSearchQ}2$. When the second neighboring-cell measurement initiation condition is met, intra-frequency measurement may not be initiated. Otherwise, intra-frequency measurement should be initiated.

Assuming $Srxlev1 = Srxlev2$, $Squal1 = Squal2$, and $S_{IntraSearchQ}1 = S_{IntraSearchQ}2$, when $S_{IntraSearchP}1 > S_{IntraSearchP}2$, it is easier to satisfy $Srxlev1 \leq S_{IntraSearchP}1$. That is, when $Srxlev1 \leq S_{IntraSearchP}1$ is satisfied, it is not necessarily true that $Srxlev2 \leq S_{IntraSearchP}2$. Therefore, when the first measurement initiation threshold corresponding to the first neighboring-cell measurement initiation condition is greater than the second measurement initiation threshold corresponding to the second neighboring-cell measurement initiation condition, the first neighboring-cell measurement initiation is more likely to be triggered.

Optionally, $Q_{rxlevmin}1$ corresponding to the first neighboring-cell measurement initiation condition is less than $Q_{rxlevmin}2$ corresponding to the second neighboring-cell measurement initiation condition.

Optionally, $Q_{rxlevminoffset}1$ corresponding to the first neighboring-cell measurement initiation condition is less than $Q_{rxlevminoffset}2$ corresponding to the second neighboring-cell measurement initiation condition.

Optionally, $P_{compensation}1$ corresponding to the first neighboring-cell measurement initiation condition is less than the $P_{compensation}2$ corresponding to the second neighboring-cell measurement initiation condition.

Optionally, $Qoffset_{temp}1$ corresponding to the first neighboring-cell measurement initiation condition is less than $Qoffset_{temp}2$ corresponding to the second neighboring-cell measurement initiation condition.

Optionally, $Q_{qualmin}1$ corresponding to the first neighboring-cell measurement initiation condition is less than $Q_{qualmin}2$ corresponding to the second neighboring-cell measurement initiation condition.

Optionally, $Q_{qualminoffset}1$ corresponding to the first neighboring-cell measurement initiation condition is less than $Q_{qualminoffset}2$ corresponding to the second neighboring-cell measurement initiation condition.

In some embodiments, each cell corresponds to its own frequency, and frequencies corresponding to different cells may have the same or different priorities.

In some embodiments, when the first frequency priority of the first-type cell and the second frequency priority of the second-type cell are different, a neighboring-cell measurement initiation condition corresponding to the first frequency priority and a neighboring-cell measurement initiation condition corresponding to the second frequency priority are different. For example, the first frequency priority of the first-type cell corresponds to the first neighboring-cell measurement initiation condition, and the second frequency priority of the second-type cell corresponds to the second neighboring-cell measurement initiation condition, where the first neighboring-cell measurement initiation condition and the second neighboring-cell measurement initiation condition are different.

In some embodiments, when the first frequency priority of the first-type cell and the second frequency priority of the second-type cell are different, the first frequency priority and the second frequency priority correspond to different cell reselection conditions. For example, the first frequency priority of the first-type cell corresponds to a first cell reselection condition, and the second frequency priority of the second-type cell corresponds to a second cell reselection condition. The first cell reselection condition and the second cell reselection condition are different.

In some embodiments, cell ranking in the cell reselection is performed based on a first radio signal quality of the first-type cell and a second radio signal quality of the second-type cell.

The first radio signal quality is determined based on the first common signal. For example, assuming the first common signal is a DRS, the first radio signal quality is a DRS-based radio signal quality. The DRS-based radio signal quality includes RSRP and/or RSRQ.

The second radio signal quality is determined based on the second common signal. For example, assuming the second common signal is an SSB, the second radio signal quality is an SSB-based radio signal quality. The SSB-based radio signal quality includes RSRP and/or RSRQ.

In some embodiments, the first-type cell is an SSB-less cell, or equivalently referred to as a DRS cell, or equivalently referred to as a DRS-only cell. The second-type cell is an SSB cell, or equivalently referred to as a traditional cell, or equivalently referred to as a normal cell.

Optionally, the cell ranking in the cell reselection is performed based on a radio signal quality of the SSB cell obtained from SSB measurement and a radio signal quality of the SSB-less cell obtained from DRS measurement. The radio signal quality obtained from SSB measurement includes SSB-RSRP and/or SSB-RSRQ. The radio signal quality obtained from DRS measurement includes DRS-RSRP and/or DRS-RSRQ.

Optionally, the cell ranking in the cell reselection is performed based on the DRS-RSRP of the SSB-less cell and the SSB-RSRP of the SSB cell.

Optionally, the cell ranking in the cell reselection is performed based on the DRS-RSRQ of the SSB-less cell and the SSB-RSRQ of the SSB cell.

In some embodiments, the cell ranking is performed on the at least two cells based on the first radio signal quality of the first-type cell and the second radio signal quality of the second-type cell.

Optionally, the cell ranking is performed on the at least two cells based on the radio signal quality of the SSB cell obtained from SSB measurement and the radio signal quality of the SSB-less cell obtained from DRS measurement.

Optionally, the cell ranking is performed on the at least two cells based on the DRS-RSRP of the SSB-less cell and the SSB-RSRP of the SSB cell.

Optionally, the cell ranking is performed on the at least two cells based on the DRS-RSRQ of the SSB-less cell and the SSB-RSRQ of the SSB cell.

In some embodiments, the manner of the cell ranking includes at least the following two manners.

Manner 1: Joint Ranking. Joint ranking is performed based on the first radio signal quality of the first-type cell and the second radio signal quality of the second-type cell. For example, assume that the first-type cell includes cell 1 and cell 2, where the first radio signal quality of cell 1 is R1 and the first radio signal quality of cell 2 is R2, and the second-type cell includes cell 3 and cell 4, where the second radio signal quality of cell 3 is R3 and the second radio signal quality of cell 4 is R4. Joint ranking is performed on R1, R2, R3, and R4. For example, R2 > R3 > R1 > R4.

Manner 2: Independent Ranking. Ranking is performed based on the first radio signal quality of the first-type cell and the second radio signal quality of the second-type cell respectively. For example, assume that the first-type cell includes cell 1, cell 2, and cell 3, where the first radio signal quality of cell 1 is R1, the first radio signal quality of cell 2 is R2, and the first radio signal quality of cell 3 is R3, and the second-type cell includes cell 4 and cell 5, where the second radio signal quality of cell 4 is R4 and the second radio signal quality of cell 5 is R5. R1, R2, and R3 are ranked independently, and R4 and R5 are ranked independently.

## For Manner 1

In some embodiments, the cell ranking in the cell reselection is performed through joint ranking based on the first radio signal quality of the first-type cell and the second radio signal quality of the second-type cell.

Optionally, the cell ranking in the cell reselection is performed through joint ranking based on the radio signal quality of the SSB cell obtained from SSB measurement and the radio signal quality of the SSB-less cell obtained from DRS measurement.

Optionally, the cell ranking in the cell reselection is performed through joint ranking based on the DRS-RSRP of the SSB-less cell and the SSB-RSRP of the SSB cell.

Optionally, the cell ranking in the cell reselection is performed through joint ranking based on the DRS-RSRQ of the SSB-less cell and the SSB-RSRQ of the SSB cell.

In some embodiments, joint ranking is performed on the at least two cells based on the first radio signal quality of the first-type cell and the second radio signal quality of the second-type cell.

Optionally, joint ranking is performed on the at least two cells based on the radio signal quality of the SSB cell obtained from SSB measurement and the radio signal quality of the SSB-less cell obtained from DRS measurement.

Optionally, joint ranking is performed on the at least two cells based on the DRS-RSRP of the SSB-less cell and the SSB-RSRP of the SSB cell.

Optionally, joint ranking is performed on the at least two cells based on the DRS-RSRQ of the SSB-less cell and the SSB-RSRQ of the SSB cell.

In some embodiments, the cell ranking in the cell reselection is based on the first calibrated radio signal quality of the first-type cell and the second radio signal quality of the second-type cell; or the cell ranking in the cell reselection is based on the first radio signal quality of the first-type cell and a second calibrated radio signal quality of the second-type cell; or the cell ranking in the cell reselection is based on the first calibrated radio signal quality of the first-type cell and the second calibrated radio signal quality of the second-type cell.

In some embodiments, the first calibrated radio signal quality is determined based on the first radio signal quality and a first offset. For example, the first calibrated radio signal quality = the first radio signal quality + the first offset.

For example, when the frequency priority of the current serving cell is equal to the frequency priority of the neighboring cell, assuming the current serving cell is the first-type cell, the first radio signal quality $= Q_{meas},s + Q_{hyst} - Qoffset_{temp}$.

$Q_{meas},s$ represents a measured RSRP value of the current serving cell. $Q_{hyst}$ represents a temporary offset, announced in system broadcast of the current serving cell. $Qoffset_{temp}$ represents a cell reselection hysteresis value, announced in system broadcast of the current serving cell.

The first calibrated radio signal quality = the first radio signal quality + the first offset $= Q_{meas},s + Q_{hyst} - Qoffset_{temp}$ + offset. Offset represents the first offset.

For example, when the frequency priority of the current serving cell is equal to the frequency priority of the neighboring cell, assuming the neighboring cell is the first-type cell, the first radio signal quality $= Q_{meas},n - Qoffset - Qoffset_{temp}$.

$Q_{meas},n$ represents a measured RSRP value of the neighboring cell. Qoffset represents an offset. $Qoffset_{temp}$ represents a cell reselection hysteresis value, announced in system broadcast of the current serving cell.

The first calibrated radio signal quality = the first radio signal quality + the first offset $= Q_{meas},n - Qoffset - Qoffset_{temp}$ + offset. Offset represents the first offset.

In some embodiments, the first offset is a default value. For example, the default first offset is 10 dB.

In some embodiments, the first offset is obtained based on system information of the first-type cell. For example, the system message indicates that the first offset = 10 dB.

In some embodiments, the first offset is reflected in a reused $Qoffset_{s,n}$. The reused $Qoffset_{s,n}$ = an original $Qoffset_{s,n}$ + the first offset. For example, assuming the original $Qoffset_{s,n}$ = -10 dB and the first offset = -10 dB, the reused $Qoffset_{s,n}$ = -20 dB. $Qoffset_s$ represents an offset of the first-type cell as the current serving cell. $Qoffset_n$ represents an offset of the first-type cell as the neighboring cell.

The configuration module 1710 is further configured to configure a second offset. The second offset is used to determine the second calibrated radio signal quality.

In some embodiments, the second calibrated radio signal quality is determined based on the second radio signal quality and a second offset. For example, the second calibrated radio signal quality = the second radio signal quality + the second offset.

For example, when the frequency priority of the current serving cell is equal to the frequency priority of the neighboring cell, assuming the current serving cell is the second-type cell, the second radio signal quality $= Q_{meas},s + Q_{hyst} - Qoffset_{temp}$.

$Q_{meas},s$ represents a measured RSRP value of the current serving cell. $Q_{hyst}$ represents a temporary offset, announced in system broadcast of the current serving cell. $Qoffset_{temp}$ represents a cell reselection hysteresis value, announced in system broadcast of the current serving cell.

The second calibrated radio signal quality = the second radio signal quality + the second offset $= Q_{meas},s + Q_{hyst} - Qoffset_{temp}$ + offset. Offset represents the second offset.

For example, when the frequency priority of the current serving cell is equal to the frequency priority of the neighboring cell, assuming the neighboring cell is the first-type cell, the second radio signal quality $= Q_{meas},n - Qoffset - Qoffset_{temp}$.

$Q_{meas},n$ represents a measured RSRP value of the neighboring cell. Qoffset represents an offset. $Qoffset_{temp}$ represents a cell reselection hysteresis value, announced in system broadcast of the current serving cell.

The second calibrated radio signal quality = the second radio signal quality + the second offset $= Q_{meas},n - Qoffset - Qoffset_{temp}$ + offset. Offset represents the second offset.

In some embodiments, the second offset is a default value. For example, the default second offset is 10 dB.

In some embodiments, the second offset is obtained based on system information of the second-type cell. For example, the system message indicates that the second offset = 10 dB.

In some embodiments, the second offset is reflected in a reused $Qoffset_{s,n}$. The reused $Qoffset_{s,n}$ = an original $Qoffset_{s,n}$ + the second offset. For example, assuming the original $Qoffset_{s,n}$ = -10 dB and the second offset = -10 dB, the reused $Qoffset_{s,n}$ = -20 dB. $Qoffset_s$ represents an offset of the second-type cell as the current serving cell. $Qoffset_n$ represents an offset of the second-type cell as the neighboring cell.

For Manner 2

In some embodiments, the cell ranking in the cell reselection is performed by ranking based on the first radio signal quality of the first-type cell and the second radio signal quality of the second-type cell respectively.

Optionally, the cell ranking in the cell reselection is performed by ranking based on the radio signal quality of the SSB cell obtained from SSB measurement and the radio signal quality of the SSB-less cell obtained from DRS measurement respectively.

Optionally, the cell ranking in the cell reselection is performed by ranking based on the DRS-RSRP of the SSB-less cell and the SSB-RSRP of the SSB cell respectively.

Optionally, the cell ranking in the cell reselection is performed by ranking based on the DRS-RSRQ of the SSB-less cell and the SSB-RSRQ of the SSB cell respectively.

In some embodiments, ranking is performed on the at least two cells based on the first radio signal quality of the first-type cell and the second radio signal quality of the second-type cell respectively.

Optionally, ranking is performed on the at least two cells based on the radio signal quality of the SSB cell obtained from SSB measurement and the radio signal quality of the SSB-less cell obtained from DRS measurement respectively.

Optionally, ranking is performed on the at least two cells based on the DRS-RSRP of the SSB-less cell and the SSB-RSRP of the SSB cell respectively.

Optionally, ranking is performed on the at least two cells based on the DRS-RSRQ of the SSB-less cell and the SSB-RSRQ of the SSB cell respectively.

For Cell Selection

In some embodiments, the first cell is selected as the serving cell based on the first calibrated radio signal quality of the first cell. The first calibrated radio signal quality is determined based on the first radio signal quality and a first offset. For example, the first calibrated radio signal quality = the first radio signal quality + the first offset.

In some embodiments, the second cell is selected as the serving cell based on a second calibrated radio signal quality of the second cell.

In some embodiments, the first cell is selected as the serving cell based on the first calibrated radio signal quality of the first cell and the second radio signal quality of the second cell.

In some embodiments, the second cell is selected as the serving cell based on the first radio signal quality of the first cell and the second calibrated radio signal quality of the second cell.

In some embodiments, the second cell is selected as the serving cell based on the first calibrated radio signal quality of the first cell and the second calibrated radio signal quality of the second cell.

In some embodiments, an evaluation parameter for the cell selection is a default value, is obtained from system information of the first cell, or is obtained from UE cached information.

Optionally, when no system message is transmitted by the first cell, the evaluation parameter for the cell selection is the default value.

Optionally, when a system message is transmitted by the first cell, the evaluation parameter for the cell selection is obtained from the system information of the first cell.

Optionally, the system message transmitted by the first cell includes all or part of the SIB.

In some embodiments, the system information of the first cell is obtained from the first cell or another cell, where the another cell is a cell other than the first cell.

In some embodiments, the terminal device requests the first cell or the another cell to transmit the system message of the first cell by transmitting an UL wake-up signal. The UL wake-up signal is used to request the first cell or the another cell to transmit the system information of the first cell.

In some embodiments, the evaluation parameter for the cell selection is carried in a MIB message and/or SIB message.

The receiving module 1730 is further configured to receive a UL wake-up signal.

In some embodiments, the UL wake-up signal is used to request the first-type cell to transmit cell reselection information. In some embodiments, the UL wake-up signal is used to request the second-type cell to transmit cell reselection information. In some embodiments, the UL wake-up signal is used to request both the first-type cell and the second-type cell to transmit cell reselection information.

In some embodiments, the UL wake-up signal is used to request the SSB-less cell to transmit cell reselection information. In some embodiments, the UL wake-up signal is used to request the SSB cell to transmit cell reselection information. In some embodiments, the UL wake-up signal is used to request both the SSB-less cell and the SSB cell to transmit cell reselection information.

In some embodiments, the UL wake-up signal is transmitted by the terminal device to a network device.

In some embodiments, the UL wake-up signal is used to request the first cell or another cell to transmit the evaluation parameter for the cell selection of the first cell.

It should be noted that, for the apparatus provided in the above embodiments, only the division into the above functional modules is taken an example for illustration. In practice, the above functions can be allocated to different functional modules according to actual needs, that is, the internal structure of the device is divided into different functional modules to complete all or some of the functions described above.

Regarding the apparatus in embodiments, the manner in which each module performs operations has been described in detail in the related method embodiments and thus will not be elaborated again herein.

In some embodiments, the transmitting module 1720 and the receiving module 1730 are optional. The transmitting module 1720 and the receiving module 1730 can each be an independent module. In some embodiments, the transmitting module 1720 and the receiving module 1730 can be combined into an independent module, such as a transceiver module. In some embodiments, the configuration module 1710 and the transmitting module 1720 can be combined into an independent module, such as a configuration and transmitting module. In some embodiments, the configuration module 1710 and the receiving module 1730 can be combined into an independent module, such as a configuration and receiving module. In some embodiments, the configuration module 1710, the transmitting module 1720, and the receiving module 1730 can be combined into an independent module, such as a configuration and transceiver module. Embodiments of the disclosure are not limited in this regard.

FIG. 18 illustrates a schematic structural diagram of a communication device (terminal device or network device) provided in an exemplary embodiment of the disclosure. The communication device includes a processor 1801, a receiver 1802, a transmitter 1803, a memory 1804, and a bus 1805.

The processor 1801 includes one or more processing cores, and the processor 1801 executes various function applications and information processing by running software programs and modules.

The receiver 1802 and the transmitter 1803 can be implemented as a communication assembly, and the communication assembly can be a communication chip.

The memory 1804 is connected to the processor 1801 via the bus 1805.

The memory 1804 can be configured to store at least one instruction. The processor 1801 is configured to execute the at least one instruction to implement various steps in the above method embodiments.

In addition, the memory 1804 can be implemented by any type of volatile storage device or non-volatile storage device or a combination thereof. The volatile storage device or non-volatile storage device includes, but is not limited to, a magnetic disk or an optical disk, an electrically-erasable programmable read only memory (EEPROM), an erasable programmable read only memory (EPROM), a static random access memory (SRAM), a read-only memory (ROM), a magnetic memory, a flash memory, and a programmable read-only memory (PROM).

In one possible implementation, when the communication device is implemented as a terminal device, the processor and the transceiver in the communication device involved in embodiments of the disclosure can execute the steps performed by the terminal device in any of the methods illustrated above, which will not be repeated herein.

In one possible implementation, when the communication device is implemented as a network device, the processor and the transceiver in the communication device involved in embodiments of the disclosure can execute the steps performed by the network device in any of the methods illustrated above, which will not be repeated herein.

In exemplary embodiments, a computer-readable storage medium is further provided. The computer-readable storage medium stores at least one program which is loaded and executed by a processor to implement the method for cell reselection, the method for cell selection, or the method for information indication provided in the above method embodiments.

In exemplary embodiments, a computer program product is further provided. The computer program product, when executed by a processor of a communication device, is operable with the communication device to implement the method for cell reselection, the method for cell selection, or the method for information indication.

In exemplary embodiments, a computer program is further provided. The computer program includes computer instructions configured to be executed by a processor of a communication device to cause the communication device to perform the method for cell reselection, the method for cell selection, or the method for information indication.

Those skilled in the art can appreciate that in one or more of the above examples, the functions described in the embodiments of the disclosure may be implemented by hardware, software, firmware, or any combination thereof. When implemented by software, the functions may be stored in a computer-readable medium or transmitted as one or more instructions or codes in the computer-readable medium. The computer-readable medium includes a computer storage medium and a communication medium, where the communication medium includes any medium that facilitates transfer of a computer program from one place to another, and the storage medium may be any available medium that can be accessed by a general-purpose computer or a special-purpose computer.

The above elaborations are merely optional embodiments of the disclosure, and are not intended for limiting the disclosure. Any modification, equivalent replacement, and improvement made within the concept and principle of the disclosure shall fall within the protection scope of the disclosure.

**Claims**

1. A method for cell reselection, performed by a terminal device and comprising:

    performing cell reselection among at least two cells;
    wherein the at least two cells comprise a first-type cell, the first-type cell is configured to transmit a first common signal, and a transmission energy consumption of the first common signal is less than a transmission energy consumption of a second common signal transmitted by a second-type cell.

2. The method of claim 1, wherein the at least two cells further comprise the second-type cell;

cell ranking in the cell reselection is performed based on a first radio signal quality of the first-type cell and a second radio signal quality of the second-type cell;
wherein the first radio signal quality is determined based on the first common signal, and the second radio signal quality is determined based on the second common signal.

3. The method of claim 2, wherein
the cell ranking in the cell reselection is performed through joint ranking based on the first radio signal quality of the first-type cell and the second radio signal quality of the second-type cell.

4. The method of claim 3, wherein

the cell ranking in the cell reselection is based on a first calibrated radio signal quality of the first-type cell and the second radio signal quality of the second-type cells; or
the cell ranking in the cell reselection is based on the first radio signal quality of the first-type cell and a second calibrated radio signal quality of the second-type cell;
wherein the first calibrated radio signal quality is determined based on the first radio signal quality and a first offset, and the second calibrated radio signal quality is determined based on the second radio signal quality and a second offset.

5. The method of claim 4, wherein the first offset is a default value, or the first offset is obtained based on system information of the first-type cell.

6. The method of any of claims 2 to 5, wherein performing the cell reselection among the at least two cells comprises:

selecting a strongest cell as a target cell for the cell reselection after the cell ranking on the first-type cell and the second-type cell; or
prioritizing the first-type cell or the second-type cell in filtered candidate cells as the target cell for the cell reselection, after the cell ranking on the first-type cell and the second-type cell;
wherein the filtered candidate cells are cells for which a difference between a radio signal quality thereof and a radio signal quality of the strongest cell is within a preset range, and the strongest cell is a candidate cell ranked first in radio signal quality.

7. The method of claim 6, wherein
the cell ranking in the cell reselection is performed by ranking based on the first radio signal quality of the first-type cell and the second radio signal quality of the second-type cell respectively.

8. The method of claim 7, wherein performing the cell reselection among the at least two cells comprises:

performing the cell ranking on at least one first-type cell according to the first radio signal quality to obtain a first candidate cell sequence, and performing the cell ranking on at least one second-type cell according to the second radio signal quality to obtain a second candidate cell sequence; and
giving a priority to selecting the target cell for the cell reselection from the first candidate cell sequence, or giving a priority to selecting the target cell for the cell reselection from the second candidate cell sequence.

9. The method of any of claims 2 to 8, further comprising:
when a first frequency priority of the first-type cell is lower than a second frequency priority of the second-type cell, increasing a frequency priority of the first-type cell to the second frequency priority or a third frequency priority during cell reselection evaluation, wherein the third frequency priority is higher than the second frequency priority.

10. The method of any of claims 2 to 8, wherein

when a current serving cell is the first-type cell, neighboring-cell measurement initiation evaluation for the cell reselection is performed based on the first radio signal quality of the current serving cell;

wherein the first radio signal quality is determined based on the first common signal.

11. The method of claim 10, wherein

the neighboring-cell measurement initiation evaluation for the cell reselection is performed based on a first calibrated radio signal quality of the current serving cell;
wherein the first calibrated radio signal quality is determined based on the first radio signal quality and a first offset.

12. The method of any of claims 2 to 8, wherein

when a current serving cell is the first-type cell, neighboring-cell measurement initiation evaluation for the cell reselection is performed based on a first neighboring-cell measurement initiation condition; or
when the current serving cell is the second-type cell, the neighboring-cell measurement initiation evaluation for the cell reselection is performed based on a second neighboring-cell measurement initiation condition;
wherein the first neighboring-cell measurement initiation condition is different from the second neighboring-cell measurement initiation condition.

13. The method of claim 12, wherein
a triggering difficulty of the first neighboring-cell measurement initiation condition is lower than a triggering difficulty of the second neighboring-cell measurement initiation condition.

14. The method of claim 13, wherein
the first neighboring-cell measurement initiation condition is determined based on the second neighboring-cell measurement initiation condition and a third offset.

15. The method of any of claims 2 to 8, further comprising:

when a first frequency priority of the first-type cell is lower than a second frequency priority of the second-type cell, increasing a frequency priority of the first-type cell to the second frequency priority or a third frequency priority during neighboring-cell measurement initiation evaluation, wherein the third frequency priority is higher than the second frequency priority;
wherein the first frequency priority, the second frequency priority, and the third frequency priority correspond to different neighboring-cell measurement initiation conditions.

16. The method of any of claims 2 to 8, further comprising:
obtaining cell reselection information, wherein the cell reselection information comprises at least one of:

a frequency of the first-type cell;
a frequency of the second-type cell;
a first frequency priority of the first-type cell;
a second frequency priority of the second-type cell;
a transmission manner of a common signal of the first-type cell;
a transmission manner of a common signal of the second-type cell;
an S criterion parameter and an R criterion parameter corresponding to the first-type cell;
and
an S criterion parameter and an R criterion parameter corresponding to the second-type cell.

17. The method of claim 16, wherein the transmission manner of the common signal of the first-type cell comprises:

only transmitting the first common signal; or
transmitting the first common signal and part of system information.

18. The method of claim 16, wherein the transmission manner of the common signal is indicated at cell granularity or frequency granularity.

19. The method of claim 16, wherein

the cell reselection information is obtained from a current serving cell; or

the cell reselection information is obtained from the first-type cell; or
the cell reselection information is obtained from the second-type cell; or
the cell reselection information is obtained from terminal-stored information.

20. The method of claim 19, further comprising:
transmitting an uplink (UL) wake-up signal, wherein the UL wake-up signal is used to request the first-type cell to transmit the cell reselection information.

21. A method for cell selection, performed by a terminal device and comprising:

performing cell selection on a first cell based on a first radio signal quality of the first cell;
wherein the first cell is a cell among first-type cells, the first radio signal quality is determined based on a first common signal transmitted by the first-type cell, and a transmission energy consumption of the first common signal is less than a transmission energy consumption of a second common signal transmitted by a second-type cell.

22. The method of claim 21, wherein performing the cell selection on the first cell based on the first radio signal quality of the first cell comprises:

performing the cell selection on the first cell based on a first calibrated radio signal quality of the first cell;
wherein the first calibrated radio signal quality is determined based on the first radio signal quality and a first offset.

23. The method of claim 21 or 22, wherein an evaluation parameter for the cell selection is a default value, is obtained from system information of the first cell, or is obtained from UE cached information.

24. The method of claim 23, wherein
the system information of the first cell is obtained from the first cell or another cell, wherein the another cell is a cell other than the first cell.

25. The method of claim 24, further comprising:
transmitting an uplink (UL) wake-up signal, wherein the UL wake-up signal is used to request the first cell or the another cell to transmit the system information of the first cell.

26. The method of any of claims 21 to 25, further comprising:

searching for a strongest cell at each of at least one frequency based on a measurement result of the first common signal and a measurement result of the second common signal; or
searching for the strongest cell at each of the at least one frequency without the measurement result of the first common signal;
wherein the strongest cell is a cell with a best measurement result at each frequency.

27. The method of claim 26, further comprising:
when the strongest cell at a first frequency among the at least one frequency is the first cell, searching for a second-strongest cell.

28. A method for information indication, comprising:

configuring a first offset, wherein the first offset is used to determine a first calibrated radio signal quality of a first-type cell, the first calibrated radio signal quality is used for cell selection or cell reselection, and the first-type cell is a cell transmitting a first common signal;
wherein a transmission energy consumption of the first common signal is less than a transmission energy consumption of a second common signal transmitted by a second-type cell.

29. An apparatus for cell reselection, comprising:

a cell reselection module configured to perform cell reselection among at least two cells;
wherein the at least two cells comprise a first-type cell, the first-type cell is configured to transmit a first common signal, and a transmission energy consumption of the first common signal is less than a transmission energy consumption of a second common signal transmitted by a second-type cell.

30. An apparatus for cell selection, comprising:

a cell selection module configured to perform cell selection on a first cell based on a first radio signal quality of the first cell;

wherein the first cell is a cell among first-type cells, the first radio signal quality is determined based on a first common signal transmitted by the first-type cell, and a transmission energy consumption of the first common signal is less than a transmission energy consumption of a second common signal transmitted by a second-type cell.

31. An apparatus for information indication, comprising:

a configuration module configured to configure a first offset, wherein the first offset is used to determine a first calibrated radio signal quality of a first-type cell, the first calibrated radio signal quality is used for cell selection or cell reselection, and the first-type cell is a cell transmitting a first common signal;

wherein a transmission energy consumption of the first common signal is less than a transmission energy consumption of a second common signal transmitted by a second-type cell.

32. A terminal device, comprising:

a processor;
a transceiver connected to the processor;
a memory configured to store executable instructions for the processor;
wherein the processor is configured to load and execute the executable instructions to perform the method for cell reselection of any of claims 1 to 20 or the method for cell selection of any of claims 21 to 27.

33. A network device, comprising:

a processor;
a transceiver connected to the processor; and
a memory configured to store executable instructions for the processor;
wherein the processor is configured to load and execute the executable instructions to perform the method for information indication of claim 28.

34. A computer-readable storage medium storing executable instructions which are configured to be loaded and executed by a processor to perform the method for cell reselection of any of claims 1 to 20, the method for cell selection of any of claims 21 to 27, or the method for information indication of claim 28.

35. A computer program product comprising computer instructions stored in a computer-readable storage medium, wherein the computer instructions are configured to be read from the computer-readable storage medium and executed by a processor of a communication device to cause the communication device to perform the method for cell reselection of any of claims 1 to 20, the method for cell selection of any of claims 21 to 27, or the method for information indication of claim 28.

36. A computer program comprising computer instructions, wherein the computer instructions are configured to be executed by a processor of a communication device to cause the communication device to perform the method for cell reselection of any of claims 1 to 20, the method for cell selection of any of claims 21 to 27, or the method for information indication of claim 28.

CELL 1

CELL 2

20

CELL 5

CELL 3

CELL 4

......

NETWORK
DEVICE 10

FIG. 1

PERFORM CELL RESELECTION AMONG AT LEAST TWO CELLS — 100

FIG. 2

TRANSMIT A UL WAKE-UP SIGNAL — 210

FIG. 3

OBTAIN CELL RESELECTION INFORMATION — 220

FIG. 4

WHEN THE FIRST FREQUENCY PRIORITY OF THE FIRST-TYPE CELL IS LOWER THAN THE SECOND FREQUENCY PRIORITY OF THE SECOND-TYPE CELL, INCREASE A FREQUENCY PRIORITY OF THE FIRST-TYPE CELL TO THE SECOND FREQUENCY PRIORITY OR A THIRD FREQUENCY PRIORITY DURING THE NEIGHBORING-CELL MEASUREMENT INITIATION EVALUATION

300

FIG. 5

WHEN THE FIRST FREQUENCY PRIORITY OF THE FIRST-TYPE CELL IS LOWER THAN THE SECOND FREQUENCY PRIORITY OF THE SECOND-TYPE CELL, INCREASE A FREQUENCY PRIORITY OF THE FIRST-TYPE CELL TO THE SECOND FREQUENCY PRIORITY OR A THIRD FREQUENCY PRIORITY DURING CELL RESELECTION EVALUATION

400

FIG. 6

SELECT A STRONGEST CELL AS A TARGET CELL FOR THE CELL RESELECTION AFTER THE CELL RANKING ON THE FIRST-TYPE CELL AND THE SECOND-TYPE CELL — 101

FIG. 7

PRIORITIZE THE FIRST-TYPE CELL OR THE SECOND-TYPE CELL IN FILTERED CANDIDATE CELLS AS THE TARGET CELL FOR THE CELL RESELECTION, AFTER THE CELL RANKING ON THE FIRST-TYPE CELL AND THE SECOND-TYPE CELL — 102

FIG. 8

PERFORM THE CELL RANKING ON AT LEAST ONE FIRST-TYPE CELL ACCORDING TO THE FIRST RADIO SIGNAL QUALITY TO OBTAIN A FIRST CANDIDATE CELL SEQUENCE, AND PERFORM THE CELL RANKING ON AT LEAST ONE SECOND-TYPE CELL ACCORDING TO THE SECOND RADIO SIGNAL QUALITY TO OBTAIN A SECOND CANDIDATE CELL SEQUENCE — 103

GIVE A PRIORITY TO SELECTING THE TARGET CELL FOR THE CELL RESELECTION FROM THE FIRST CANDIDATE CELL SEQUENCE, OR GIVE A PRIORITY TO SELECTING THE TARGET CELL FOR THE CELL RESELECTION FROM THE SECOND CANDIDATE CELL SEQUENCE — 104

FIG. 9

PERFORM CELL SELECTION ON A FIRST CELL BASED ON A
FIRST RADIO SIGNAL QUALITY OF THE FIRST CELL          500

FIG. 10

SEARCH FOR A STRONGEST CELL AT EACH OF AT LEAST ONE
FREQUENCY BASED ON A MEASUREMENT RESULT OF THE
FIRST COMMON SIGNAL AND A MEASUREMENT RESULT OF THE       600
SECOND COMMON SIGNAL, OR SEARCH FOR THE STRONGEST
CELL AT EACH OF THE AT LEAST ONE FREQUENCY WITHOUT
THE MEASUREMENT RESULT OF THE FIRST COMMON SIGNAL

FIG. 11

WHEN THE STRONGEST CELL AT A FIRST FREQUENCY
AMONG THE AT LEAST ONE FREQUENCY IS THE FIRST CELL,       700
SEARCH FOR A SECOND-STRONGEST CELL

FIG. 12

PERFORM THE CELL SELECTION ON THE FIRST CELL
BASED ON A FIRST CALIBRATED RADIO SIGNAL QUALITY
OF THE FIRST CELL
501

FIG. 13

CONFIGURE A FIRST OFFSET
800

FIG. 14

CELL RESELECTION MODULE — 1510

TRANSMITTING MODULE — 1520

RECEIVING MODULE — 1530

ADJUSTMENT MODULE — 1540

FIG. 15

CELL SELECTION MODULE — 1610

TRANSMITTING MODULE — 1620

RECEIVING MODULE — 1630

SEARCHING MODULE — 1640

FIG. 16

CONFIGURATION
MODULE — 1710

TRANSMITTING
MODULE — 1720

RECEIVING MODULE — 1730

FIG. 17

PROCESSOR — 1801

TRANSMITTER — 1803

BUS — 1805

RECEIVER — 1802

MEMORY — 1804

FIG. 18

## INTERNATIONAL SEARCH REPORT

| International application No. |
| --- |
| **PCT/CN2023/111826** |

| A. | CLASSIFICATION OF SUBJECT MATTER |
| --- | --- |

H04W 36/00(2009.01)i

According to International Patent Classification (IPC) or to both national classification and IPC

| B. | FIELDS SEARCHED |
| --- | --- |

Minimum documentation searched (classification system followed by classification symbols)

IPC: H04W, H04Q

Documentation searched other than minimum documentation to the extent that such documents are included in the fields searched

Electronic data base consulted during the international search (name of data base and, where practicable, search terms used)

3GPP, CNABS, CNTXT, DWPI, ENTXT, ENTXTC, OETXT, VEN, WPABS, WPABSC: 功耗, 功率, 公共信号, 耗能, 节电, 节能, 仅, 类型, 没有, 能量, 排序, 偏移, 省电, 顺序, 未发送, 小区, 信号质量, 选择, 只有, 重选, common signal+, DRS, LESS, NES, order, rank, RSRP, RSRQ, sequence, SSB, SSBLESS, SSB-LESS, select+, DRS-only, reselect+, offset, power, energy, cell

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 116209031 A (HUAWEI TECHNOLOGIES CO., LTD.) 02 June 2023 (2023-06-02) description, paragraphs [0063]-[0067] and [0129]-[0133] | 1-36 |
| Y | QUALCOMM INC. "NES Proposed Common Signalling Techniques Assessment" *3GPP TSG-RAN WG3 Meeting #119-bis electronic, R2-2210370,* 19 October 2022 (2022-10-19), sections 1-3 | 1-36 |
| Y | CN 113016213 A (QUALCOMM INC.) 22 June 2021 (2021-06-22) description, paragraphs [0060]-[0076], and figure 5 | 1-20, 29, 32-36 |
| A | CN 115399062 A (GUANGDONG OPPO MOBILE TELECOMMUNICATIONS CORP., LTD.) 25 November 2022 (2022-11-25) entire document | 1-36 |
| A | WO 2022079124 A1 (TELEFONAKTIEBOLAGET LM ERICSSON (PUBL)) 21 April 2022 (2022-04-21) entire document | 1-36 |

☑ Further documents are listed in the continuation of Box C. ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **07 April 2024** | **10 April 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/111826** |

### C.　DOCUMENTS CONSIDERED TO BE RELEVANT

| Category* | Citation of document, with indication, where appropriate, of the relevant passages | Relevant to claim No. |
| --- | --- | --- |
| A | WO 2023106982 A1 (TELEFONAKTIEBOLAGET LM ERICSSON (PUBL)) 15 June 2023 (2023-06-15)<br>　　entire document | 1-36 |
| A | OPPO. "Discussion on Cell Selection/Reselection"<br>*3GPP TSG-RAN WG2 #121, R2-2300457,* 28 February 2023 (2023-02-28),<br>　　entire document | 1-36 |
| A | HUAWEI et al. "Discussion on SSB-Less SCell Operation"<br>*3GPP TSG-RAN WG2 Meeting #121, R2-2300228,* 03 March 2023 (2023-03-03),<br>　　entire document | 1-36 |

Form PCT/ISA/210 (second sheet) (July 2022)

International application No.

**PCT/CN2023/111826**

| Patent document cited in search report | | | Publication date (day/month/year) | Patent family member(s) | | | Publication date (day/month/year) |
|---|---|---|---|---|---|---|---|
| CN | 116209031 | A | 02 June 2023 | WO | 2023098616 | A | 08 June 2023 |
| CN | 113016213 | A | 22 June 2021 | US | 2020162981 | A1 | 21 May 2020 |
| | | | | EP | 3884712 | A1 | 29 September 2021 |
| | | | | WO | 2020106826 | A1 | 28 May 2020 |
| CN | 115399062 | A | 25 November 2022 | WO | 2021232245 | A1 | 25 November 2021 |
| | | | | US | 2023080009 | A1 | 16 March 2023 |
| | | | | EP | 4156850 | A1 | 29 March 2023 |
| WO | 2022079124 | A1 | 21 April 2022 | CN | 116602009 | A | 15 August 2023 |
| | | | | EP | 4229920 | A1 | 23 August 2023 |
| | | | | US | 2023370918 | A1 | 16 November 2023 |
| WO | 2023106982 | A1 | 15 June 2023 | | None | | |